(19) Europäisches Patentamt
European Patent Office
Office européen des brevets

(11) **EP 4 757 315 A1**

(12) **EUROPEAN PATENT APPLICATION**

(43) Date of publication:
**10.06.2026 Bulletin 2026/24**

(21) Application number: **24315552.0**

(22) Date of filing: **05.12.2024**

(51) International Patent Classification (IPC):
***H04N 19/597*** ***(2014.01)*** ***H04N 19/70*** ***(2014.01)***
***H04N 19/85*** ***(2014.01)*** ***H04N 19/98*** ***(2014.01)***

(52) Cooperative Patent Classification (CPC):
**H04N 19/597; H04N 19/70; H04N 19/85; H04N 19/98**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Beijing Xiaomi Mobile Software Co., Ltd.**
**Beijing Beijing 100085 (CN)**

(72) Inventors:
- **Alexiou, Evangelos**
  **Beijing, 100085 (CN)**
- **Thomas, Emmanuel**
  **Beijing, 100085 (CN)**
- **Potetsianakis, Emmanouil**
  **Beijing, 100085 (CN)**

(74) Representative: **König, Andreas Rudolf et al**
**Schoppe, Zimmermann, Stöckeler**
**Zinkler, Schenk & Partner mbB**
**Patentanwälte**
**Radlkoferstraße 2**
**81373 München (DE)**

(54) **DEPTH CODING USING SPATIAL DECOMPOSITION**

(57) A method for transforming a source depth image into a target depth image, the method comprising: obtaining the source depth image comprising a multitude of source depth image samples each comprising a source depth image sample value being within a source depth image sample bit depth; determining at least two spatial sub-regions of the source depth image such that each spatial sub-region comprises a subset of the source depth image samples to separate the source depth image into the at least two spatial sub-regions; and transforming the source depth image samples of the spatial sub-regions into target depth image samples of a target depth image, the target depth image samples comprising values within a target depth image sample bit depth.

1400
obtaining the source depth image comprising a multitude of source depth image samples each comprising a source depth image sample value being within a source depth image sample bit depth
1410
determining at least two spatial sub-regions of the source depth image such that each spatial sub-region comprises a subset of the source depth image samples
1420
transforming the source depth image samples of the spatial sub-regions into target image samples of a target depth image, the target image samples comprising values within a target depth image sample bit depth
1430

Fig. 14

EP 4 757 315 A1

## Description

### TECHNICAL FIELD

The present application relates to depth coding using spatial decomposition. The present invention further relates to transforming the source depth image samples of the spatial sub-regions into target depth image samples of a target depth image.

### BACKGROUND

Depth information is becoming increasingly relevant in modern imaging systems, facilitating the analysis of 3D scenes in extended Reality (XR) applications, computer vision tasks, and robotic systems.

Depth data consist of a collection of depth values, each indicating the distance of a point in the scene from a reference point or plane (e.g., camera centre, or camera plane defined by the camera's position). Depth data are commonly represented by image representations, namely, depth images, although entirely different formats could be used, such as series/arrays of XYZ coordinates. Colour information is often carried alongside depth data. In this case, the term RGBD is common, with RGB indicating colour components (Red Green Blue) and D depth data.

There is a wide variety of technologies to obtain depth data, including depth sensing and depth estimation methods implemented by physical cameras, virtual cameras or Artificial Intelligence (AI) models, in real or simulated environments. The most mature methods for commercial, physical devices nowadays are stereo vision, motion stereo, structured light, time-of-flight, and Light Detection And Ranging (LiDAR). Each method has its working principle, with some retrieving directly depth data (e.g., time-of-flight and LiDAR), while others estimating them based on texture images (e.g., stereo vision, motion stereo and structured light). Data-driven solutions using AI models have become a notable alternative for depth estimation in recent years, gaining momentum. These models are designed to perform tasks related to the inference, completion or generation of depth data, often relying on some input texture or depth information.

Compression is required to decrease data size requirements for storage and transmission. Existing encoding methods for depth data exploit their specific characteristics, such as the presence of smooth areas (e.g., foreground objects) and sharp discontinuities (e.g., occlusions), which are determined by some type of scene decomposition (e.g., object boundaries detection) followed by encoding of corresponding regions. There are other methods employing generic compression principles, thus, without making any assumptions about the nature/distribution of the depth data. Alternative methods propose colour space transformations to exploit existing image/video infrastructure, while others introduce new modules to extend existing image/video coding architectures.

#### Depth representations

##### General

In this section, definitions of terms that are used in the context of this invention are provided.

##### Depth data

Depth data comprise depth values, with each depth value denoting a distance of a given point in 3D space relative to an origin, as measured along a certain direction.

The direction is often defined either as a line between a point and a plane, or as a line between two points. Depending on the direction, different distances are computed. Among other ways, the direction could be determined by the selection of the origin, which could be set either as the camera plane or the camera centre. In the former case, the depth data represent perpendicular distances, wherein the perpendicular distance between two objects is the distance from one to the other, measured along a line that is perpendicular to one or both" [1], while in the latter case, the depth data represent Euclidean distances.

Depth data convey the topological information of a scene as captured from a specific viewpoint, enabling to infer obstructions and occlusions of the scene. Depth values can be obtained only for points of the scene that can be connected with the camera centre through unobstructed lines (i.e., scene points that are in the line-of-sight of the camera and are not occluded).

The term "camera" is used, considering that depth data could be obtained through sensing using a "depth camera", or through estimation using a "colour camera".

Depth image

A depth image is defined as an image representation of depth data. A depth image comprises a 2D array of samples, with each sample corresponding to a discrete point in the 3D space, and the sample value representing the depth value of that point.

Depth data are commonly represented by floating point numbers and are often quantized to limit storage requirements and to adapt to binary format constraints. Depth images are most commonly encoded as grayscale (mono-component or monochrome) images at a specific bit depth. In this case, different intensities of grey are used to indicate different (quantized) depth values (e.g., white colour could indicate that a point is nearby and black that is far away). Depth images could also be encoded as colour (three-component) images at a specific bit depth. In this case, different colours could be used to indicate different (quantized) depth values. Alternatively, different colours could be used to indicate semantically different objects and different brightness levels could be used to indicate different (quantized) depth values.

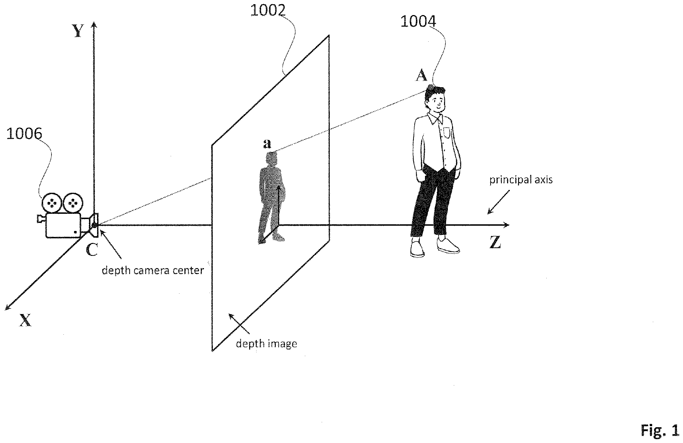

Fig. 1 presents an example of capturing a depth image of a physical environment using a depth camera, assuming an ideal pinhole camera model. In this example, given a point A on the observed real-world geometry and a corresponding sample a in the depth image, the value at a is set equal to their perpendicular distance. This is obtained as the length of CA projected onto the principal axis Z, or equivalently the z-coordinate of A relative to the depth camera centre C. There are other distances that can be used to set the value of a, such as the Euclidean distance of CA. However, the perpendicular distance is more commonly used.

A depth image typically corresponds to depth data obtained at a specific time instance. If consecutive depth images are obtained over time, they are typically arranged in the form of a depth video. The spatial resolution (i.e., the number of samples) and the bit depth (i.e., the number of bits per sample value) of a depth image depend on the camera's specifications, in corresponding trade-offs between data size and data precision. For spatial resolution, the dimensions range between 160x120 and 640x480 in ARCore [3], 424x240 and 1280x720 in Intel RealSense D400 series [4], and 640x576 and 1024x1024 in Microsoft Azure Kinect [5]. For bit depth, the 16-bit unsigned integer representation is among the most popular choices (e.g., ARCore [3], Intel RealSense D400 series [4], and Microsoft Azure Kinect [5]).

In the following sections, the terms "depth map" and "depthmap" are used interchangeably to refer to a "depth image", as defined in the current section.

In the following sections the term "depth image" is used, but the terms "range image", "disparity image" or "disparity map" may be equivalently used in literature.

In the following sections, the term "source depth image" refers to a depth image that contains raw depth values as captured or estimated by the source (e.g., floating point numbers), without introducing any processing that would alter the spatial resolution (e.g., downsampling, downscaling) or bit depth granularity (e.g., quantization). It is considered that even if the raw depth data are originally represented in a different format (e.g., series/arrays of XYZ coordinates), a "source depth image" can be obtained by mapping all raw depth values in a suitable 2D array of samples, with each sample value representing the corresponding raw depth value at the original bit depth.

**RGBD image**

An RGBD image is defined as an image representation of spatio-temporally aligned colour and depth data. An RGBD image comprises a 2D array of samples, with each sample corresponding to a discrete point in the 3D space, and the sample value representing the colour (RGB) and the depth (D) value of that point.

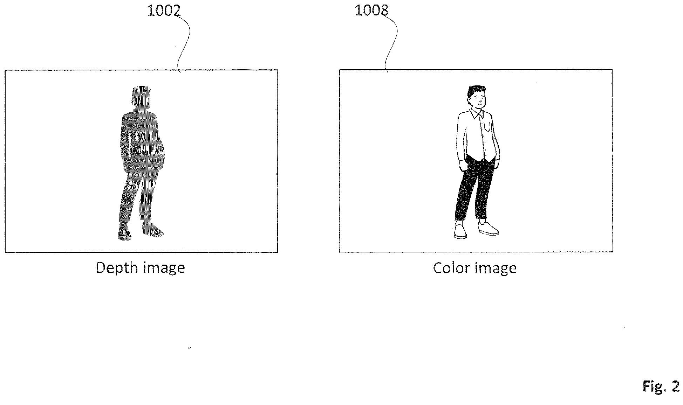

An RGBD image is typically expressed as a combination of a depth image and a colour image captured at the same time and depict the same model, as illustrated in Fig. 2.

By definition, a depth image of a scene can be obtained and used regardless of whether a corresponding colour image of the same scene is obtained or not. In other terms, depth and colour images are in principle decoupled, excluding depth estimation methods that rely on colour images, e.g., stereo vision methods. Depth and colour images can be of different spatial resolution (image resolution), bit depth (number of bits per sample), temporal sampling (frame rate), spatial coherence (taken at different point in space), temporal coherence (taken at different point in time), or projection (lens system).

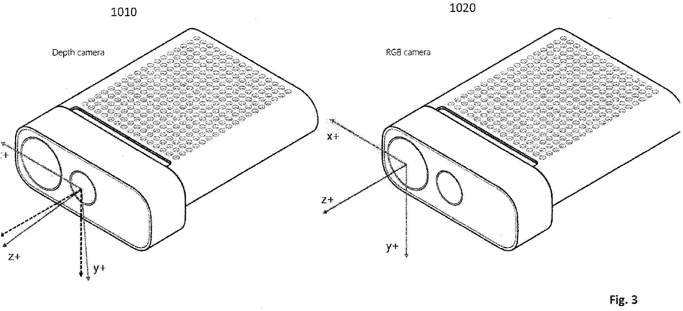

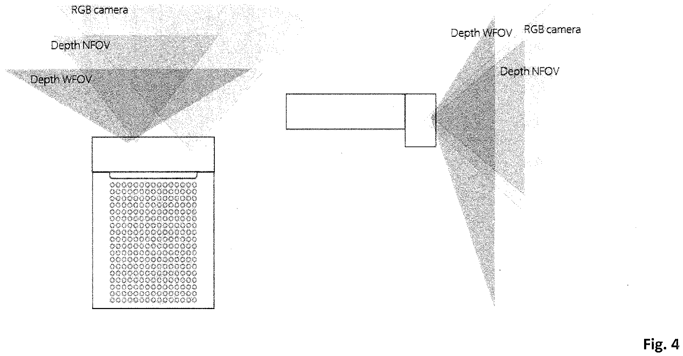

In practice, devices equipped with a depth camera are often also supplied with colour cameras. Moreover, colour cameras may be used to estimate depth data (e.g., AI models, stereo vision methods). Therefore, depth images usually accompany (or are accompanied by) colour images. An example is given by the Microsoft Azure Kinect. It is equipped with both a depth camera and a colour camera of different features (i.e., different lenses, different sensor resolution, different field-of-view, spatially distant), as seen on Fig. 3 and Fig. 4. Fig. 3 shows a schematic perspective illustration of an Azure Kinect depth and colour camera position and coordinate system as indicated in [6]. Fig. 4 shows an Azure Kinect depth and colour camera field-of-view as indicated in [7].

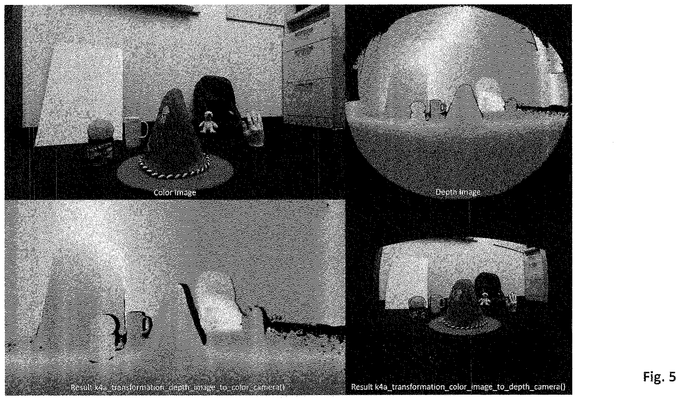

As a result, the images captured by the depth and the colour cameras do not represent exactly the same part of the scene. For common applications, however, it is desirable to be able to relate one sample of the depth image to one sample of the colour image. Therefore, there is need for a known spatio-temporal relationship between them. For example, the Azure Kinect SDK provides a transformation function [8]to convert either the colour or the depth image to the other's coordinate system. Fig. 5 represents the two available image transformations. On the left side, the depth image at the bottom has been aligned with the colour image at the top. Conversely, on the right side, the colour image has been aligned with the depth image. In other words, Fig. 5 shows Azure Kinect sensor SDK image transformations as known from [8].

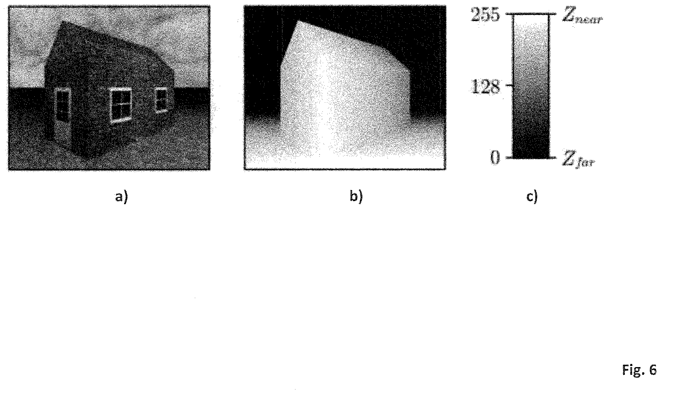

Fig. 6 presents the concept of an RGBD image, with the depth image encoded as an 8-bit grayscale image taking values between 0 and 255. Fig. 6 represents an example of the data representation format consisting of (a) regular 2D colour video; (b) associated 8-bit depth-images that are normalised to near clipping plane Znear and a far clipping plane Zfar. In Fig. 6, there is shown the RGBD image from a computer-generated image as indicated in [9].

The same concept can be extended to RGBD video sequences, wherein each image of the colour video sequence is associated with a corresponding depth image from a depth video sequence.

RGBD images are often called 2.5D images. Specifically, a colour image provides the appearance of a 3D scene, as perceived from the capturing viewpoint and as projected onto a 2D image plane. In this process there is necessarily loss of information about one dimension. A depth image captures this lost dimension by carrying the topology of the 3D scene, as perceived from the capturing viewpoint. Combined, they provide all necessary information to fully reproduce a 3D view of this scene from the capturing viewpoint. However, by changing the viewpoint, occluded objects will be perceived as missing regions, thus, not enabling a complete 3D viewing experience, which justifies the usage of the term 2.5D.

Depth image compression

There can be different ways to devise a taxonomy of depth image codecs. Below, for the shake of this disclosure, existing techniques are split to the following classes: (a) MPEG-based codecs; these are proposed and implemented by the MPEG standardization body, (b) video-based codecs; these are making use of existing image/video solutions, (c) extending video-based codecs; these rely upon existing image/video solutions, but extend them in certain aspects, (d) decomposition-based codecs; these are making use of depth image characteristics spitting them to smooth regions abrupted by sharp edges, and (e) generic-based codecs; these make use of data-agnostic compression methods.

MPEG-based codecs

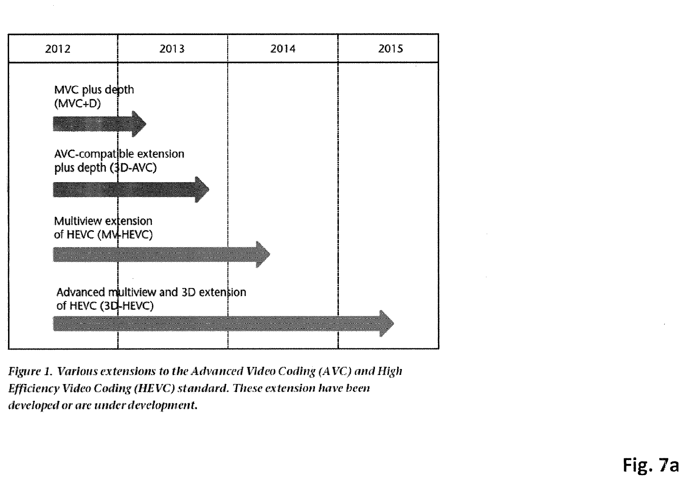

In this class are considered codecs developed by MPEG to handle depth data. Fig. 7a shows a schematic chart representing an extension of MPEG video codecs handling depth data as known from [10].

*MVC*

The multiview extension of AVC, which is referred to as MVC, has been developed for the coding of two or more views. A key feature of this standard is that it maintains AVC compatibility, meaning that one view of the compressed multiview bitstream can be decoded by a legacy AVC decoder. Relative to independent coding of all views, compression gain is achieved by allowing the other views to be predicted using pictures from different views at the same time instances. In this process, known as inter-view prediction, a block-based disparity shift between the reference view and the current views is determined and is used to perform a disparity-compensated prediction. This is similar to the motion-compensated prediction used in conventional video coding, but it is based on pictures with different viewpoints rather than pictures at different time instances.

The MVC approach is simply defined by two features: extending the high-level syntax so that the appropriate signalling of view identifiers and their references is supported and defining a process by which decoded pictures of other views can be used to predict a current picture in another view.

***MVC+D***

In the case of AVC, it was decided to specify an independent second stream for the representation of depth as well as high-level syntax signalling of the necessary information to express the interpretation of the depth data and its association with the video data. This approach does not involve macroblock-level changes to the AVC or MVC syntax, semantics, and decoding processes. The corresponding 3D video codec is referred to as MVC+D.

***MV-HEVC***

In the MV-HEVC framework, support for depth maps will be realized with auxiliary picture syntax. The auxiliary picture decoding process would the same for video or Multiview video, but it may not necessarily have normative decoding requirements as part of a profile. This would enable applications to optionally decode depth maps. If the industry desires an additional level of interoperability, a profile that requires the capability to decode depth would be added at a later stage. This approach differs from that taken in the MVC+D extension, which adds support for depth using specially designated network abstraction layer (NAL) units for depth and defines a dedicated profile for the decoding of multiview plus depth video.

### *3D-AVC and 3D-HEVC*

Depth views in 3D-AVC are coded similar to MVC+D, and no block-level changes for depth coding have been introduced. In 3D-AVC, the texture information of a single view is coded in a manner that is compatible with AVC.

In the HEVC family, the 3D-HEVC extension is in the process of being finalized. As with 3D-AVC, block-level coding tools for texture views have been introduced into the draft specification of 3D-HEVC. In addition, novel techniques for improved coding of depth have been accepted into the draft specifications.

### Video-based codecs

In this class are considered depth codecs that make use of existing image-based or video-based codecs. Often, these methods rely on colourizing depth data (i.e., transforming them from depth to colour space). On one hand, they exploit widely used infrastructure for image and video coding; however, since such methods are not optimized for depth information, their usage often leads to unnatural artifacts.

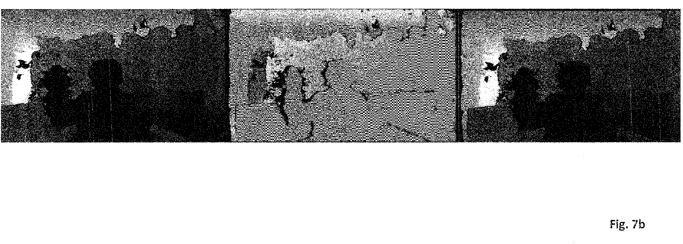

One example is the compression approach implemented by Intel RealSense depth cameras, by colourizing depth information [11]. Fig. 7b shows an original depth image of D435 (left), a colourised depth image with JPG compression (centre) and a recovered depth image from colourised and JPG compressed depth (right).

The Intel RealSense Depth Camera, D400 series can output high-resolution depth image up to 1280 x 720 with 16-bit depth resolution [1]. In order to efficiently store such high-resolution images in a limited disk space or to minimize the transmission bandwidth, an appropriate compression technique is required.

This paper proposes a simple colourization method for depth images. By appropriately colourizing the depth image, the depth image can subsequently be treated as a normal RGB image which can easily be compressed, stored, and transmitted using widely available HW and software tools.

The proposed colourization process imposes the limitation of needing to fit a 16-bit depth map into a 10.5-bit colour image. It is recommended to perform the colourization only after first limiting the depth range to a subset of the full depth 0 ~ 65535 range, and to re-normalize it. The depth range can, for example, be determined by windowing it to between a minimum depth value dmin and a maximum depth value dmax. The greater the depth range, the coarser the quantization of the depth value becomes. There are two methods for this colourization: uniform colourization which directly converts the depth value, and inverse colourization which converts the disparity value (which is the reciprocal of the depth value). Uniform colourization quantizes the entire depth range uniformly. In inverse colour colourization, quantization is finer at closer depths and coarser at longer depths. Inverse colourization is particularly well suited to depth cameras, like the D400 series, which derive depth from triangulation, which inherently has an inverse relationship between resolution and distance away.

In [12], another transformation from depth to colour domain is proposed.

There is presented an encoding scheme that efficiently converts the single-channel depth images to standard 8-bit three-channel images, which can then be streamed using standard codecs. The encoding scheme ensures that the compression affects the depth values as little as possible.

The indicated goal is to reconstruct the original depth values as accurately as possible after compression/decompression. Compression schemes for videos are highly tuned for colour video, taking into account human perception, e.g., by spending fewer bits on colour than luminance information, and so forth. Of course, these insights do not apply to depth compression. On the plus side, video codecs compress 24 bits of data per pixel (3x8 bits), whereas there are only 16 bits per pixel as input. As will be demonstrated in Section 4, naively multiplexing the 16-bit depth values into two 8-bit values and passing those into a video codec (leaving the third channel empty) creates severe artefacts; duplicating some of the bits in order to fill the available 3×8 bits does not improve quality much.

It is proposed a robust encoding of 16-bit depth values into 3x8 bits, such that the decoded depth maps suffer from very few compression artefacts, see Fig. 1 for an overview. The scheme is designed to be resilient to quantisation, and comparatively robust against downsampling (convolution) and altered intensities due to lossy compression.

The solution requires negligible computational overhead, and works well with several compression algorithms such as JPEG, VP8 and H.264.

### Extending video-based codecs

In this class are considered depth codecs that enhance image-/video-based codecs by applying some pre-/post-processing modules suitable for depth data. Their advantage is that these methods rely upon widely used infrastructure, while adapting the content for better efficiency; however, they cannot be straightforwardly used without integration of the proposed modules.

One example is given in [13], which proposes a pre-processing step that considers the noise characteristics of the depth sensor in use.

This paper proposes a lossy Kinect-like depth compression framework based on the existing codecs, aiming to enhance the coding efficiency while preserving the depth features for further applications. In the proposed framework, the Kinect-like depth is reformed first by divisive normalized bilateral filter (DNBL) to suppress the depth noises caused by disparity normalization, and then block-level depth padding is implemented for invalid depth region compensation in collaboration with mask coding to eliminate the sharp variation caused by depth measurement failures. Before the traditional video coding, the inter-frame correlation of reformed depth is explored by proposed 2D+T prediction, in which depth volume is developed to simulate 3D volume to generate pseudo 3D prediction reference for depth uniqueness detection. The unique depth region, called active region is fed into the video encoder for traditional intra and inter prediction with residual coding, while the inactive region is skipped during depth coding.

Another example is given in [14] that depends on a post-processing, boundary reconstruction filter that is implemented in-loop.

An in-loop reconstruction filter that improves the depth-coding performance as well as the rendering quality of virtual views based upon the coded depth is proposed.

The proposed depth reconstruction filter consists of the following two filters: 1) a frequent-close filter to recover object boundaries; 2) a bilateral filter to eliminate the remaining errors.

The depth reconstruction filter was implemented in the H.264/AVC reference software and was located after the deblocking filter.

**Decomposition-based codecs**

In this class are considered depth codecs that rely on some form of decomposition (e.g., object segmentation, edge detection, plane detection, tree decomposition, mesh generation) to distinguish between smooth surfaces and abrupt depth discontinuities. Different techniques can then be employed to encode the decomposition, as well as the decomposed regions (e.g., image-based codecs, modelling functions, geometric wavelets, mesh coding). This is the most popular class in the academic literature and is considered most suitable in terms of efficiency since it exploits specific characteristics of depth data; however, these methods are typically associated with higher computational costs and cannot be straightforwardly used by deployed video coding infrastructure.

An example that falls in this class of codecs is given in [15].

Firstly, region-of-interest (ROI) coding is considered, where those regions of the image are identified where accurate depth is most crucial. Secondly, the dynamic range of the depth map is reshaped.

By reshaping the dynamic range, the authors are able to reflect the different importance of different depths, enabling dynamic range allocation. For ROI coding, the JPEG2000 is used driven by an edge detector to avoid artifacts on the edges.

In [16], edge detection followed by image-based compression is proposed.

The proposed compression scheme rests on the common assumption that depth maps are usually made by a set of quite smooth surfaces separated by sharp edges between them.

The first task is the segmentation of the depth map using edge detection (rectangular box 1). Segmented data are then compressed "using a predictor-corrector scheme using samples" (box 2 and 3). In the second task both the original depth map and its segmented version are subsampled and the difference is compressed as a JPEG2000 lossless image (box 4,5 and 6). The next task of the algorithm is the construction of a prediction of the original depth map from its subsampled version and the segmented data exploiting 3D clues (box 7). Finally the residuals between the prediction and the actual depth map are computed and lossy compressed in JPEG2000 (box 8).

The results exhibit noticeable improvement over JPEG 2000 and demonstrate suitability of the proposed compression to image warping applications. The proposed method manages to preserve the depth discontinuities and outperforms state of the art codecs at all rates.

Depth images are typically piece-wise smooth, meaning that they are characterized by large smooth or smoothy changing areas associated to the object's surfaces, and sharp edges associated to the transitional areas between objects at different depth levels.

The proposed algorithm in [17] encodes smooth regions using piecewise-linear functions and the boundaries by line segments, considering characteristics of depth images. A top-down quad-tree decomposition of the image is performed to determine the regions.

This has brought us to the concept of modelling the signal using piecewise linear functions. The image is subdivided with a quadtree decomposition and an independent linear function model is used for each leaf of the tree.

Additionally, a mode that describes object contours, i.e. depth discontinuities, with a straight line separating two linear models is provided. This last mode enables to code depth discontinuities, without introducing many small leafs along edges.

This section describes a novel approach for depth coding using the above-mentioned platelet functions. With a single linear function, one planar surface of the scene, like the ground plane, walls, or small objects can be represented. Hence, a single function can cover areas of variable size in the image. To identify the location of these planar surfaces in the image, a quadtree decomposition which recursively divides the image into squares of different size is employed. In some cases, the depth image within one square can be approximated with a single linear approximation. If no suitable approximation can be determined for the square, it is subdivided into four smaller squares. Additionally to this standard quadtree subdivision, a special coding mode is applied if there are discontinuities in the depth image. To prevent that many small squares are required along a discontinuity, the square is separated along a straight edge into two regions. Each of these two regions is coded with a separate linear function. Consequently, the coding algorithm chooses between three possible modes for each node in the quadtree:

Mode 1: Approximate the square content with a single linear function: a square platelet;
Mode 2: Subdivide the square along a straight line into two regions and approximate each region with an independent linear function: a wedged platelet;
Mode 3: If the previous two modes fail, then subdivide the square into smaller ones and recursively process these squares.

The decision for each coding mode is based on a rate-distortion optimization.

**Generic-based codecs**

In this class are considered depth codecs that rely on algorithms for compression of generic type of data (e.g., variable length coding). They are fast and typically implemented with small scripts, while they do not directly exploit depth data properties.

For the purpose of real-time and low complexity compression, Microsoft developed the RVL codec [18]. The approach is to consider each depth map as generic data that can be compressed, ignoring the fact that the depth map is an image. RVL does not thus for instance consider partitioning blocks (i.e. macro block) to compress the depth image.

The proposed "RVL" compression scheme is a mixture of Run length encoding and Variable Length encoding schemes.

Consider a depth image as alternating runs of zero and non-zero values in raster scan order. Without loss of generality, assume that the image begins with a run of zeros (possibly of zero length). Each successive pair of zero and non-zero runs is encoded in order as:

- the number of zeros,
- the number of non-zeros,
- differences (deltas) of successive non-zero pixel values, where the difference for the first pixel in a run of non-zeros is based on the last pixel in the previous run of non-zeros

The number of zeros and non-zeros are positive integers written to the compressed bitstream with a base-8 variable length encoding scheme: starting with the least significant bits, the integer is broken into successive groups of three bits until all set bits are consumed. A fourth continuation bit is added to each group of three indicating whether it is the last group.

This method is extended to accommodate dynamic content in [19].

Temporal RVL (TRVL) first preprocesses the frames of depth streams, then uses RVL to compress the difference between the frame and the previous frame (i.e., delta encoding). In its preprocessing step, TRVL adds change and invalidity tolerance to depth streams based on observations from depth cameras with fixed positions.

Adding change and invalidity tolerance, the preprocessing step temporally stabilizes pixel values by changing a pixel value only when 1) the difference between the fixed value and a measurement is larger than a threshold or 2) when two consecutive measurements failed. The use of the difference between the fixed value and the measurement, instead of the difference between the previous measurement and the current measurement, limits the error from the preprocessing step to the given threshold. Since RVL is designed to efficiently compress running zeros, the temporal redundancy added by the preprocessing step boosts the efficiency of this delta encoding.

## Prior Art

There are several encoding methods for depth images, as mentioned in section "Depth image compression". As prior art, the method proposed in [20] is selected, which enables the representation of a higher bit-depth source image by two lower bit-depth target images that can be encoded by a lower bit-depth codec. Thus, it is the closest to the inventive solution in terms of (a) using existing image/video coding infrastructure to compress monochrome images. This method is proposed for coding of monochrome Infra-Red (IR) images, thus, it can be straightforwardly applied to depth images represented as monochrome images. Further, in terms of (b) not interfering with the coding process. Concretely, the selected method's coding approach is as follows:

This paper presents a simple approach which enables 16 bit depth infrared images compression utilizing codecs designed for 8 bit depth formats. Inspired by JPEG-XT framework, first we apply a separation algorithm which splits an input 16 bit depth image in two 8 bit depth images. The first image contains only the most significant bytes (MSB image) and the second one contains only the least significant bytes (LSB image). Then each image is compressed by an existing image or video codec with 8 bits per pixel input format.

Each pixel $x_i$ of an input image $x = \{x_1, x_2,...,x_N\}$ is assumed to be an non negative integer value represented in 16-bit format (two bytes per pixel), i.e., $0 \leq x_i \leq 2^{16} - 1$. First we extract the most significant byte (MSB) of each pixel $x_i$ and generate the MSB image $y = \{y_1, y_2, ...,y_N\}$ as

$$y_i = \left\lfloor \frac{x_i}{256} \right\rfloor. \quad (1)$$

The least significant byte (LSB) of each pixel $x_i$ is then extracted and LSB image $z = \{z_1, z_2, ..., z_N\}$ is generated as

$$z_i = (x_i \bmod 256). \quad (2)$$

One can see that $0 \leq y_i, z_i \leq 2^8 - 1$, i.e., both the MSB and LSB images can be represented by 8 bits per pixel known as YUV 4:0:0 color space format which is supported by the vast majority of existing video processing units.

### Disadvantages of Prior art

The prior art converts a 16 bit-depth source depth image into two 8 bit-depth target depth images that can be encoded by an 8 bit-depth codec. This approach leads to the following issues:

- The technique leads to increased computational complexity, since there is a need for two encoder instances and two decoder instances to encode and decode the information of a single source image, respectively.
- The technique is limited to source images of 16 bits. There is no provision to handle source images of bit depth larger than 8 and smaller than 16 (e.g., 10 bits, or 12 bits). Generalizing, the technique is limited to source images of bit depth that is multiple of 8 (e.g., a 24 bit-depth source depth image can be decomposed to three 8 bit-depth target images), without a provision to handle other intermediate bit depths.
- There is no ability to apply the technique to a region of interest in the source image. In a typical case when only an object is relevant for the application, it is common to only preserve high quality for that region, but the prior art fails to provide spatialization of the technique and the entire source image needs to be transformed to two target images of the same resolution.

## SUMMARY

Embodiments relate to encoding and decoding image depth data overcoming disadvantages of the prior art.

An embodiment provides a method for transforming a source depth image into a target depth image, the method comprising:

obtaining the source depth image comprising a multitude of source depth image samples each comprising a source depth image sample value being within a source depth image sample bit depth;

determining at least two spatial sub-regions according to the source depth image, wherein each spatial sub-region comprises a subset of the source depth image samples;

transforming the source depth image samples of the spatial sub-regions into target depth image samples of a target depth image, the target depth image samples comprising target depth image sample values, the target depth image samples comprising values within a target depth image sample bit depth.

Optionally, the method is executed such that the source depth image sample bit depth is higher than or equal to the target depth image sample bit depth.
An embodiment provides the method, further comprising:
associating each of the source depth image samples with one of the spatial sub-regions.
An embodiment provides the method, further comprising:
generating metadata comprising (a) a source depth sub-range per spatial sub-region, (b) the transformation used per spatial sub-region, and (c) the association information between source depth image samples and spatial sub-regions.
An embodiment provides the method, wherein the metadata is generated to further indicate at least one of: a number of spatial sub-regions, an importance label per spatial sub-region, a semantic label per spatial sub-region, and a spatial sub-regions integer mask, the spatial sub-regions integer mask carrying at least a part of the association information between source depth image samples and spatial sub-regions.
An embodiment provides the method, wherein the metadata is included to a video stream, e.g., as a part of a Supplemental Enhancement Information, SEI, message, a part of an auxiliary picture, or a part of chromatic components; or wherein the metadata is included into a file format, e.g., as a part of a metadata track or a part of an auxiliary video track.
An embodiment provides the method, further comprising:

encoding the target depth image under the target depth image sample bit depth and/or

encapsulating an encoded target depth image and generated metadata to obtain encapsulated data.

An embodiment provides a non-transitory computer-readable storage medium comprising instructions which, when executed by a computer, cause the computer to carry out the method described herein.
An embodiment provides a device comprising a processing unit, wherein the device is configured for executing the method described herein.
An embodiment provides a data container encapsulating depth data of a scene, the data container comprising metadata for signalling information about a spatial sub-region integer mask relating to spatial sub-regions of a source depth image; information specifying a source depth sub-range per spatial sub-region, and information specifying a transformation per spatial sub-region.
An embodiment provides a data stream having encoded thereinto depth data of a scene, the data stream comprising:
metadata for signalling information about a spatial sub-region integer mask relating to spatial sub-regions of a source depth image; information specifying a source depth sub-range per spatial sub-region, and information specifying a transformation per spatial sub-region.
An embodiment provides a method for decoding a depth image, the method comprising:

obtaining an encapsulated depth image comprising depth image samples having values within a target depth range, and obtaining metadata;

decoding the depth image;

parsing the metadata; and

reconstructing a source depth image from the decoded depth image and the parsed metadata, such that the reconstructed source depth image samples comprise values within a source depth range.

An embodiment provides the method for decoding, wherein the metadata comprises one or more of: (a) a source depth sub-range per spatial sub-region, (b) the transformation per spatial sub-region, and (c) the association information between source depth image samples and spatial sub-regions.
An embodiment provides the method for decoding, wherein the metadata is included to a video stream, e.g., as a part of a Supplemental Enhancement Information, SEI, message, a part of an auxiliary picture, and a part of chromatic components; or wherein the metadata is included into a file format, e.g., as a part of a metadata track or a part of an auxiliary video track.
An embodiment provides a non-transitory computer-readable storage medium comprising instructions which, when executed by a computer, cause the computer to carry out a method such as the method for decoding described herein.

An embodiment provides a device comprising a processing unit, wherein the device is configured for executing the method for decoding.

## BRIEF DESCRIPTION OF THE DRAWINGS

The drawings are explanatory and serve to explain the present disclosure, and are not to be construed to limit the present disclosure to the illustrated embodiments.

Fig. 1 shows depth values in a depth image in a modified from [2];

Fig. 2 shows a depth image, with each depth value represented as a different shade of grey (left) and a colour image (right) showing the same model;

Fig. 3 shows Azure Kinect depth and colour cameras position and coordinate system as known from [6];

Fig. 4 shows Azure Kinect depth and colour cameras field-of-view as known from [7] ;

Fig. 5 shows Azure Kinect Sensor SDK image transformations as known from [8] ;

Fig. 6 shows an RGBD image from a computer generated image as known from [9] ;

Fig. 7a shows an extension of MPEG video codecs handling depth data as known from [10];

Fig. 7b shows on its left side an original depth image of D435, in its center a colorized depth image with JPG compression, and on its right side a recovered depth image from colorized and JPG compressed depth;

Fig. 8 shows a system diagram of a representative application scenario for real-time transmission of a depth video from a local to a remote user, which involves capturing, encoding, storing, transmitting, receiving, and decoding steps;

Fig. 9 shows an updated system diagram per the invention, introducing two new steps, pre-encoding and post-decoding;

Fig. 10 shows an illustration of a key idea of the invention;

Fig. 11a-c show a 12-bits source depth image (Fig. 11a), an 1-bit spatial sub-regions integer mask (Fig. 11b), and a 10-bit target depth image (Fig. 11c), wherein the latter two can be used to reconstruct the former;

Fig. 12a-b show a bounding box defined in the source depth image (Fig. 12a), and the distribution of enclosed source depth image sample values zoomed in the depth range [1024, 4096] (Fig. 12b) (i.e., the counts for smaller depth values are zero, excluding a large count at depth value equal to 0 from the generation process), overlayed with the lower and upper thresholds used for depth-based foreground/background segmentation, at depth values 1400 and 2100, respectively;

Fig. 13a-c show the 12-bits source depth image (Fig. 13a), the 12-bits reconstructed source depth image (Fig. 13b), and an error map obtained as the absolute value of their difference (Fig. 13c) ;

Fig. 14 shows a schematic flow chart of a method according to an embodiment;

Fig. 15 shows clarifications of terms source depth range, source depth sub-range, source depth image sample bit depth, target depth range, target depth sub-range, and target depth image sample bit depth;

Fig. 16a-c show a source depth image (Fig. 16a), and different ways to determine the association information between source depth image samples and spatial sub-regions, namely, using bounding boxes (Fig. 16b) and a spatial sub-regions integer mask (Fig. 16c);

Fig. 17a-b show a source depth image (Fig. 17a) and a target depth image (Fig. 17b), both overlayed with bounding boxes that indicate the spatial sub-regions;

Fig. 18 shows schematic representation of widely-used chroma subsampling formats as known from [34];

Fig. 19 shows an embodiment of YUV 4:4:4 chroma format, with U component carrying the spatial sub-regions integer mask sample values (i.e., M(x,y)), wherein the V component carries constant, non-meaningful values in this example;

Fig. 20 shows an embodiment of YUV 4:2:2 chroma format, with U and V components carrying the spatial sub-regions integer mask sample values (i.e., M(x,y)) of even and odd columns, respectively;

Fig. 21 shows an embodiment of YUV 4:2:0 chroma format, with U and V components carrying symbols that correspond to groups of 2 (vertical) x 1 (horizontal) spatial sub-regions integer mask sample values (i.e., M(x,y)) of even and odd columns, respectively;

Fig. 22 shows an embodiment of YUV 4:4:4 chroma format, with U component carrying the spatial sub-regions integer mask sample values (i.e., M(x,y)), after mapping to destination values. The V component carries constant, non-meaningful values in this example;

Fig. 23 shows an ISOBMFF file with a timed metadata track carrying the spatial sub-regions information;

Fig. 24 shows an ISOBMFF file with an auxiliary video track carrying the spatial sub-regions information;

Fig. 25 shows an ISOBMFF file with an auxiliary video track carrying the spatial sub-regions information, including a new box in the trak box;

Fig. 26 shows an ISOBMFF file with an auxiliary video track and a metadata track carrying the spatial sub-regions information; and

Fig. 27 is a block diagram illustrating an electronic device 900 according to embodiments of the present disclosure.

## DETAILED DESCRIPTION OF THE INVENTION

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

### Application scenario

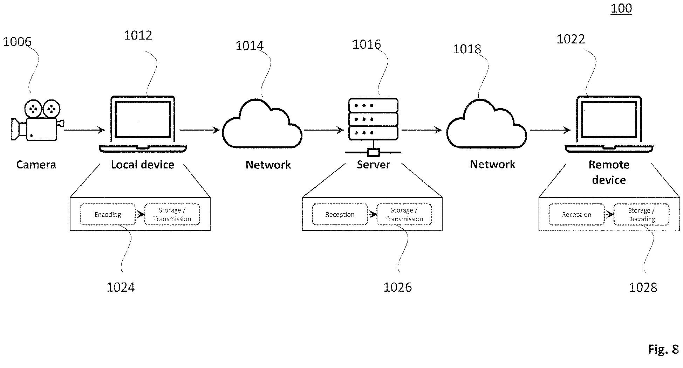

Fig. 8 shows a schematic block diagram of a system of a representative application scenario for real-time transmission of a depth video from a local device 1012 to a remote user 1022, which involves capturing 1006, encoding 1024, storing 1026, transmission via networks 1014/1018, receiving respectively and decoding steps 1028. The server 1016 may provide the received encoded data back to the local device 1012 or to the remote device 1022 or a different device.

A representative application scenario for the invention is live streaming of depth video. In this example, presented in Fig. 8, a depth camera is attached to the local device to capture a live depth video. The depth video is encoded in real-time to save bitrate, potentially stored locally, and transmitted over network to a server. The server potentially stores the encoded depth video for future access on demand and transmits it over network to a remote device, where the depth video is received, potentially stored, and decoded before passed over to an application. Other variants of this example may include:

- Conventional RGB videos could be additionally captured, stored, and streamed together with the depth video.
- The depth and/or RGB videos could be processed and/or transcoded at the server.
- The depth and/or RGB videos could be already captured (i.e., video on demand instead of live streaming).

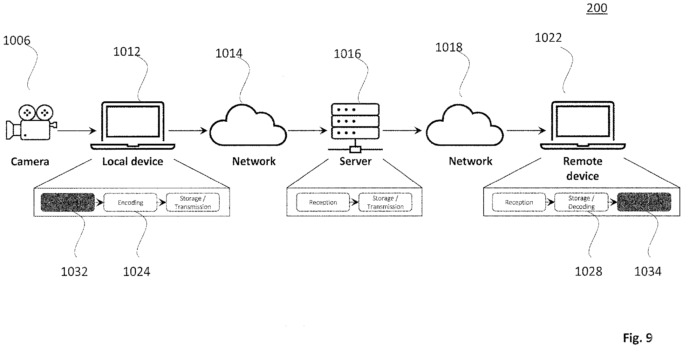

Fig. 9 shows an updated system diagram according to the present invention, introducing two additional steps pre-encoding 1032 and post-decoding 1034.

The invention proposes a solution that can be implemented by introducing a pre-encoding and a post-decoding step in the existing pipeline of Fig. 8, highlighted with red colour in Fig. 9. At the local device, the pre-encoding step is introduced to: (a) determine spatial sub-regions in a higher bit-depth source depth image with values belonging to a source depth range, (b) associate the source depth image samples with the spatial sub-regions, (c) transform the source depth image sample values per spatial sub-region into lower bit-depth target depth image sample values that belong to a target depth range, and (d) generate associated metadata that consist of (i) the source depth sub-range per spatial sub-region, (ii) the transformation per spatial sub-region, and (ii) the association information between source depth image samples and spatial sub-regions. The lower bit-depth target depth image is encoded and together with the associated metadata are encapsulated and transmitted. At the remote device, the encapsulated data are received, the lower bit-depth target depth image is decoded, and the associated metadata are parsed. The post-decoding step is introduced to reconstruct a version of the higher bit-depth source depth image from the decoded target depth image and the parsed associated metadata, with values belonging to the source depth range. Note that the pre-encoding step doesn't interfere with the encoding process, and the post-decoding step doesn't interfere with the decoding process.

**Use cases and applications**

This section is not mean to be exhaustive and simply shows examples of use cases and applications where depth data are stored and transmitted. Specifically, as part of these applications, depth data may be locally or remotely stored, may be delivered to the edge or a server for processing purposes, or may be streamed to a remote user.

Depth data may be used by an object detection method to detect object. Object detection is a computer technology for the automatic identification of objects that belong to a certain class (e.g., humans, animals, cars, buildings). Object detection is important in a number of applications, such as pedestrian detection, facial detection, and object localization.

Depth data may be used by an object tracking method to track objects. Object tracking is a computer technology for the automatic detection and tracking of objects typically in space (i.e., positions within video frames) and time (i.e., movements across video frames). Object tracking is important in a number of applications, such as autonomous driving, surveillance, retail applications, and XR applications, among others.

Depth data may be used to perform human pose estimation. Pose estimation is a computer technology for detecting the position and orientation of a person or an object in texture or depth images. Pose estimation is important in a number of applications, such as surveillance, interactive gaming, and fitness.

Depth data may also be used in scene (or 3D) reconstruction. Scene reconstruction is important in a number of applications, such as XR experiences, robotic mapping, and spatial computing. Depth images may be used for scene reconstruction.

Depth data may also be used for automatic navigation. Depth data provide the topology of the surrounding scene, enabling enhanced detection capabilities and more comprehensive understanding. Depth data can be used for obstacle detection, collision prevention, and accurate environment mapping, to allow improved navigation and safety.

Depth data may also be used to enable visual effects and interactivity with colour images or videos. Having access to the topology of a captured scene, visual effects such as slicing, refocusing, varying depth of field, lighting adjustment, and weather manipulation can be easily performed with high realism. Moreover, interactivity functionalities that enhance the engagement of the user with the content, such as object placement, distance measurement, and collision detection can be implemented in a straightforward manner [21].

Depth data may also be used for immersive visualization. In these scenarios, volumetric content can be employed and consumed in various ways. There are different manners to represent volumetric content or creating the effect of perceiving volumetric content (i.e., sense of depth), which depends on the type of screen. One way to represent volumetric content is by RGBD images. An example of a display in this category is the Looking Glass Portrait [22] for which the RGBD format is one of the recommended options as described in the documentation [23]. One way to perceive volumetric content is to display a stereo view i.e., a pair of separate views, one for the left eye and one for the right eye. In this category falls 3D TV video, which enables the perception of volumetric content (i.e., sense of depth) from one perspective. In 3D TV video, input data correspond to a single viewpoint and often comprise a depth image and a colour image that are used to synthesize a stereo view [9]. In the same category falls the free viewpoint video, where the user is able to choose the perspective to view the scene. In free viewpoint video, the number of perspectives is virtually infinite (i.e., the user can choose any viewpoint within a continuous range) and, hence, input data often correspond to more than one viewpoint. Nevertheless, the synthesis of a new viewpoint from available ones often relies to depth images and colour images, similarly to the 3D TV [24].

Depth data may also be used for remote rendering. Rendering complex 3D objects can be computationally intensive. One approach to display such content on lightweight devices is to connect them to a rendering node over network that contains a heavy workstation and performs the actual rendering in real-time. In such a scenario, the result of the rendering for the current perspective of a user may be streamed back in an RGBD format. From an RGBD video, it is possible to create a stereo view. Note that some services may decide to stream back to the user the left and right views explicitly. However, in this case, the inter-view distance would be baked in and targeted to this user and device. Providing an RGBD video allows flexibility, and a device-agnostic solution, since the stereo view would be generated on the user side based on the device characteristics and user profile (e.g., interpupillary distance).

**Technical problem solved by the solution**

This invention pertains to the domain of depth image representation and coding. Depth images are used in a number of applications, as presented in section "Use cases and applications". In these applications, among others, there is need for compression to reduce bitrate for storage or transmission. Deployed image/video coding hardware infrastructure typically supports up to 10 or 12 bits, which is lower than the 16 bits that are most often used by depth images (e.g., ARCore [3], Intel RealSense D400 series [4], and Microsoft Azure Kinect[5]). Therefore, there is a need for solutions that assist in coding higher bit-depth depth images using lower bit-depth hardware infrastructure.

The key idea of the invention is to transform a higher bit-depth source depth image into a lower bit-depth target depth image based on spatial sub-regions, which combined with generated metadata enable the reconstruction of a version of the higher bit-depth source depth image. The spatial sub-regions can be determined and their quality can be adjusted in the target depth image by applying suitable transformation functions in a pre-encoding step, while the lower bit depth of the target depth image enables the usage of conventional codecs. Current techniques represent the higher bit-depth source depth image by two lower bit-depth target depth images, after splitting the binary representation of the source depth image sample values. However, such approaches have disadvantages such as complexity and resource overhead, as presented in the section "Disadvantages of Prior art". The technical effects of the invention are presented in the section "Beneficial effects of the solution".

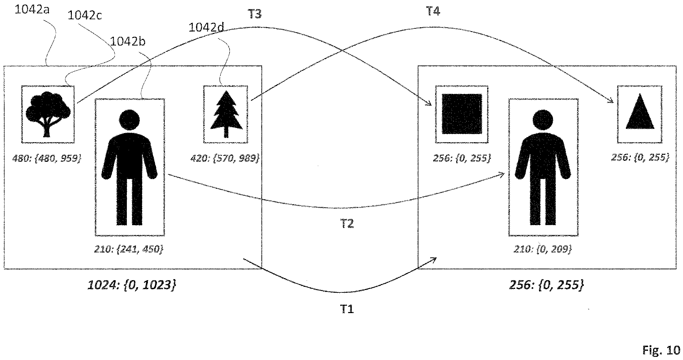

A graphic illustration of the key idea is presented in Fig. 10.

Fig. 10 shows a schematic illustration of using sub-regions 1042a, 1042b, 1042c and 1042d, wherein any other number of at least sub-regions may be used.

A higher bit-depth (i.e., 10 bits) source depth image is decomposed into spatial sub-regions, indicated by bounding boxes (i.e., black, red, blue, and green), each having a source depth sub-range indicated underneath (i.e., length: {start, end}). A different transformation function (i.e., T1-T4) is applied to source depth image samples per spatial sub-region, leading to corresponding lower bit-depth (i.e., 8 bits) target depth image samples of different quality. Specifically, T2 is a lossless transformation, shifting the source depth image sample values from the source depth sub-range {241, 450} to a sub-range of the target depth range {0, 209}; T1, T3, and T4 are lossy transformations, mapping corresponding source depth image sample values to the entire target depth range. Note that the rectangle and the triangle indicate lossy versions of the two trees after applying the T3 and T4, respectively.

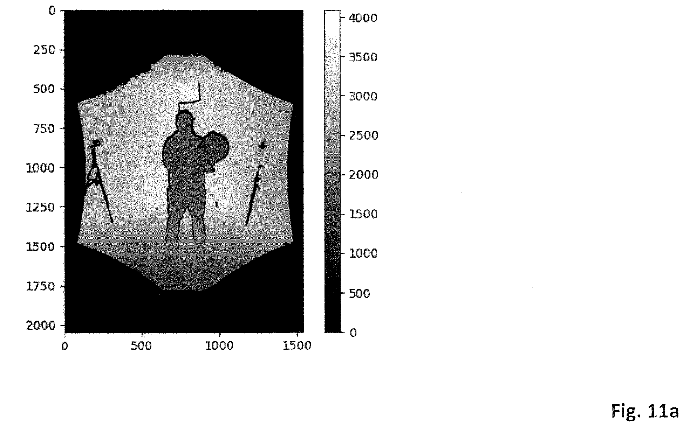

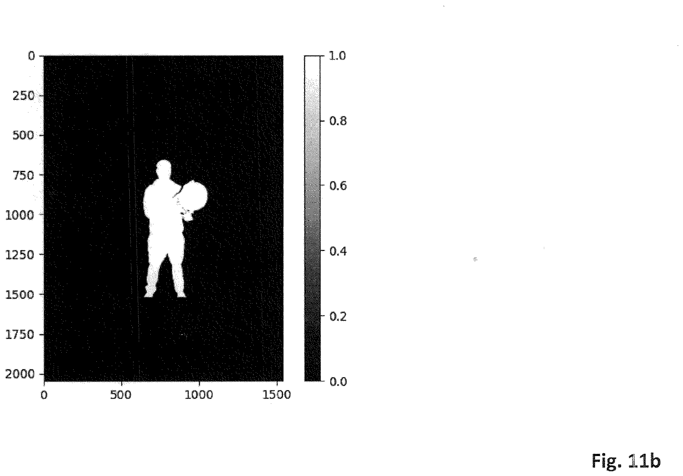

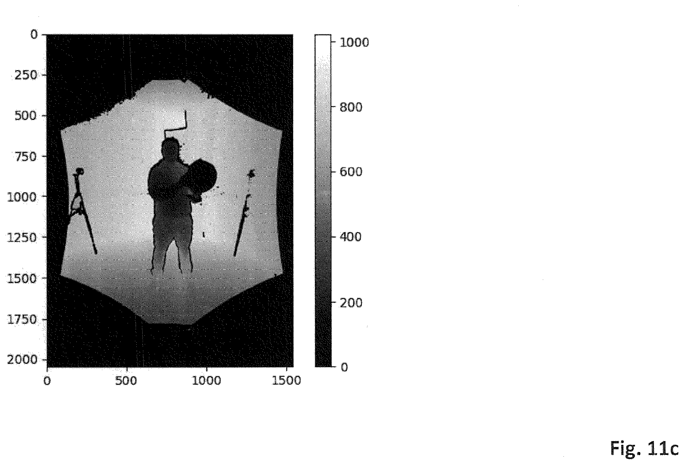

Fig. 11a shows a 12-bits source depth image, Fig. 11b an 1-bit spatial sub-regions integer mask and Fig. 11c a 10-bits target depth image, wherein the latter, i.e., the 10-bittarget depth image can be used to reconstruct the former, i.e., the 12-bits source depth image.

Fig. 11a-c depicts a real-life application example of the invention. In this example, the source depth image has a precision of 12 bits (i.e., [0, 4095]). The association information between source depth image samples and spatial sub-regions is expressed by means of a spatial sub-regions integer mask that has a precision of 1 bit to represent 2 spatial sub-regions (i.e., in this example, the human figure is selected as the first spatial sub-region and the remaining scene as the second spatial sub-region). It is noted that a precision of 1 bit may be understood as being essentially a binary mask. However, to cover the general case where more than two spatial sub-regions are determined, here and hereafter, the association information between source depth image samples and spatial sub-regions is assumed to be represented by an integer mask, namely, spatial sub-regions integer mask.

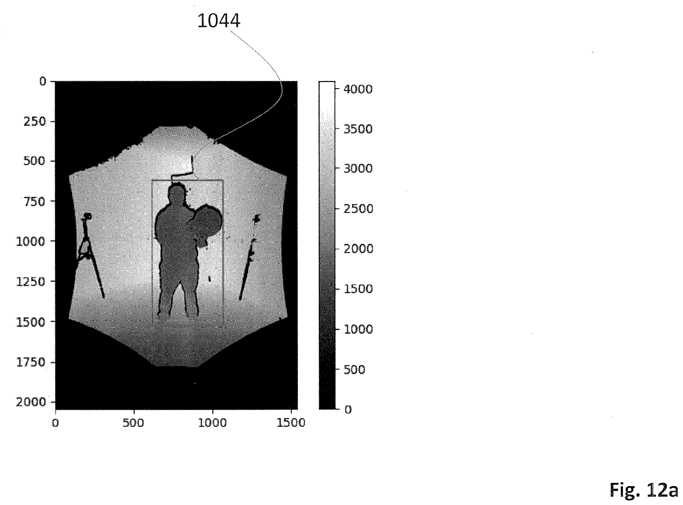

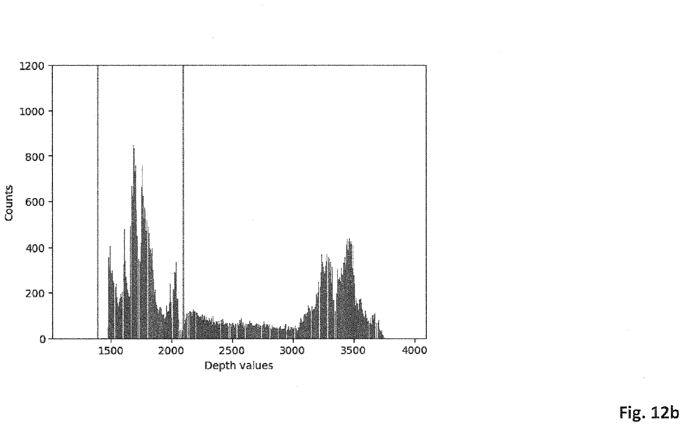

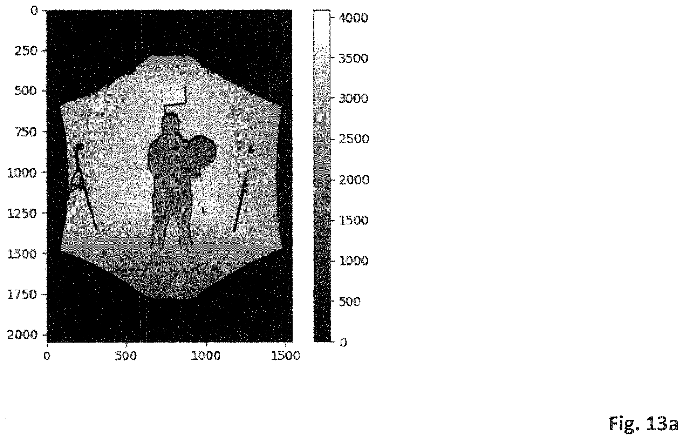

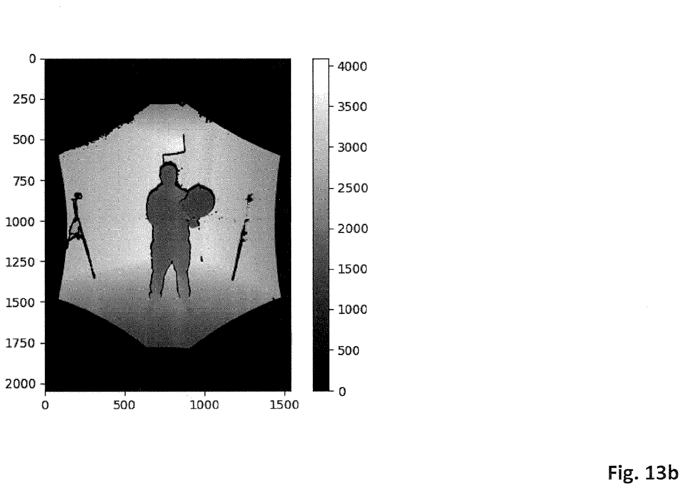

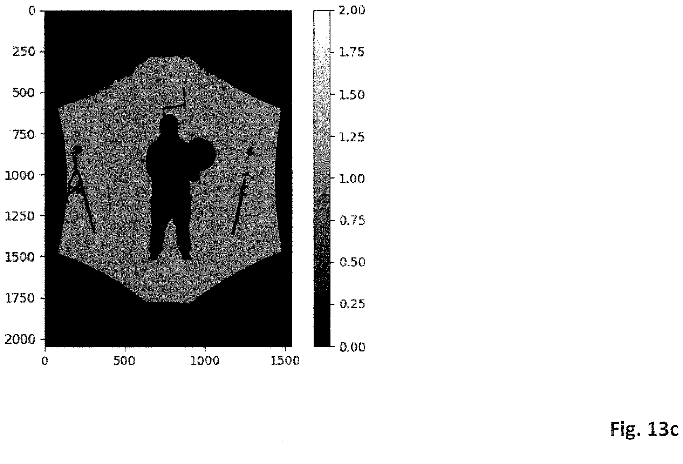

The first spatial sub-region is obtained after defining a bounding box on the source depth image and applying a depth-based foreground/background segmentation, as shown in Fig. 12; the second spatial sub-region is obtained as the remaining source depth image. The target depth image has a precision of 10 bits; a lossless transformation (i.e., shifting of source depth image sample values to [0, 699]) is applied to source depth image samples that belong to the spatial sub-region indicated with "1", and a lossy transformation (i.e., quantization of source depth image sample values with quantization step equal to 4) is applied to the source depth image samples that belong to the spatial sub-region indicated with "0" in the spatial sub-regions integer mask. The reconstructed source depth image has a precision of 12 bits; due to the lossy transformation applied to spatial sub-region "0", the corresponding reconstructed source depth image samples have lower precision than the source depth image samples. The source depth image, the reconstructed source depth image and their sample errors are shown in Fig. 13a, Fig. 13b and Fig. 13c, respectively. In this example, no encoding is performed. It can be seen, that a lower number of bits is required for the proposed representation (10-bit target depth image + 1-bit spatial sub-regions integer mask) compared to the source depth image (i.e., 12-bit source depth image), at the cost of precision loss in spatial sub-region "0".

Fig. 12a shows a bounding box 1044 defined in the source depth image of Fig. 11a. Fig. 12b shows a distribution of enclosed source depth image sample values zoomed in the depth range [1024, 4096], i.e., the counts for smaller depth values are 0, excluding a large count at depth value equal to 0 from the generation process, overlaid with the lower and upper thresholds used for depth-based foreground/background segmentation at depth values 1400 and 2100 respectively.

**Technical description of the solution**

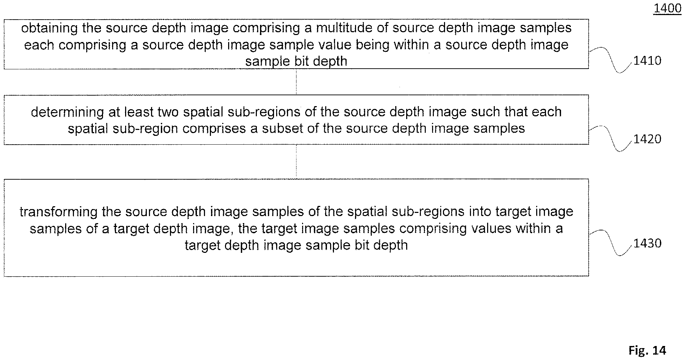

Fig. 14 shows a schematic flow chart of a method 1400 according to an embodiment. Method 1400 may be used for transforming a source depth image into a target depth image.

A step 1410 comprises obtaining the source depth image comprising a multitude of source depth image samples each comprising a source depth image sample value being within a source depth image sample bit depth;

A step 1420 comprises determining at least two spatial sub-regions of the source depth image such that each spatial sub-region comprises a subset of the source depth image samples;

A step 1430 comprises transforming the source depth image samples of the spatial sub-regions into target image samples of a target depth image, the target image samples comprising values within a target depth image sample bit depth;

The methods is optionally executed such that the source depth image sample bit depth is higher than or equal to the target depth image sample bit depth.

Preferred embodiment:

**A preferred embodiment comprises the following steps**

A capturing device:

1. Obtaining a source depth image with sample values that belong to a source depth range and are represented by a source depth image sample bit depth. For example, the source depth range may be determined by the minimum, min, and maximum, max, of source depth image sample values. Alternatively or in addition, the source depth image sample bit depth may be determined by the min and max of source depth image sample values.
2. Determining two non-overlapping spatial sub-regions whose concatenation covers the entire source depth image.
3. Associating the source depth image samples with either the first or the second spatial sub-region.
4. Transforming the source depth image into a target depth image, as follows:

    a. For the first spatial sub-region:

        i. Determine a first source depth sub-range from corresponding source depth image sample values. For example, a source depth sub-range may be determined by the min and max of the source depth image sample values that belong in the first spatial sub-region. The source depth sub-range may be a part of the source depth range and is equal or less than the source death range;
        ii. Determine a first transformation for this first source depth sub-range; and
        iii. Apply this first transformation to each source depth image sample value that belongs to this first source depth sub-range to transform them into target depth image sample values that belong to a first target depth sub-range of a target depth range, and are represented by a target depth image sample bit depth.

    b. For the second spatial sub-region:

i. Determine a second source depth sub-range from corresponding source depth image sample values;
ii. Determine a second transformation for this second source depth sub-range; and
iii. Apply this second transformation to the each source depth image sample value that belongs to this second source depth sub-range to transform them into target depth image sample values that belong to a second target depth sub-range of the target depth range, and are represented by the target depth image sample bit depth.

5. Generating metadata comprising (a) the source depth sub-range per spatial sub-region, (b) the transformation per spatial sub-region, and (c) the association information between source depth image samples and spatial sub-regions.
6. Encoding the target depth image under the target depth image sample bit depth.
7. Encapsulating the encoded target depth image and the generated metadata.

Those steps 1-7 are further explained below.

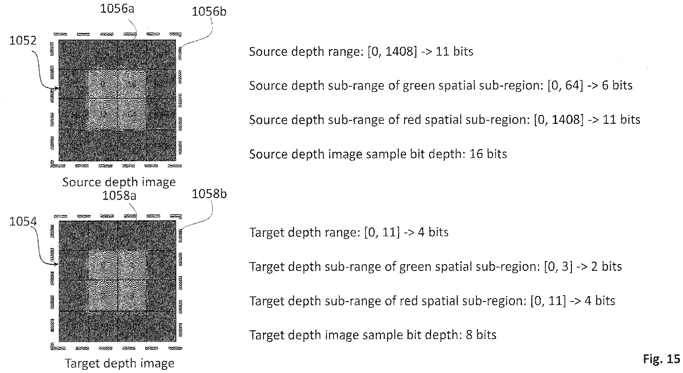

Fig. 15 shows a schematic representation of a source depth image 1052 and a target depth image 1054 according to an embodiment. A source depth range of source depth image may be 11 bits based on the values being between 0 and 1408. A source depth sub-range of sub-region 1056a may be between 0 and 64 which may be represented by a use of 6 bits. A source depth sub-range of spatial sub-region 1056b (excluding spatial sub-region 1056a) may still be represented as [0, 1408] which may represented by use of 11 bits. A source depth image sample bit depth may be 16 bits.

In the target depth image 1054, a target depth range may be [0, 11] which may be represented by use of 4 bits. A target depth sub-range of a spatial sub-region 1058a may be column [0, 3] which may be represented by use of 2 bits. A target depth sub-range of a spatial sub-region 1058b (excluding spatial sub-region 1058a) may be column [0, 11] which may be represented by use of 4 bits. A target depth image sample bit depth may be 8 bits. It is noted that it is possible but not necessary that spatial sub-region 1058a corresponds to spatial sub-region 1056a and/or that spatial sub-region 1058b corresponds to spatial sub-region 1056b.

In other words, Fig. 15 shows clarification of terms source depth range, source depth sub-range, source depth image sample bit depth, target depth range, target depth sub-range, and target depth image sample bit depth. It is reasonable to assume that the target depth range is smaller than or equal to the source depth range, and the target depth image sample bit depth is smaller than or equal to the source depth image sample bit depth. The target depth image sample bit depth represents the bit depth used by the encoder.

Different ways may be used to obtain source depth image. In step 1, the basic embodiment assumes that a source depth image is obtained from physical sensors, virtual depth cameras or AI models, in real or simulated environments. In other embodiments, a source depth image could be obtained from different depth representations (e.g., raw depth data measurements). In such embodiments, conversion from the original depth representation format to the source depth image may be needed. Such embodiments may use further technical step(s). The source depth image obtained after such embodiments should be used in subsequent technical steps.

Different types of transformations on source depth image sample values. In step 1, the basic embodiment assumes that a source depth image contains raw depth sample values at the original precision, as captured or estimated by the source. In other embodiments, a source depth image could be obtained after uniform/non-uniform quantization of the raw depth sample values, or after applying a reciprocal function to the raw depth sample values (e.g., 1/depth_value to maintain higher precision for near depth values and lower precision for far depth values), or after applying some other processing/function. In such embodiments, the source depth image sample values may be subject to precision loss with respect to the raw depth data. Such embodiments may use further technical step(s). The source depth image obtained after such embodiments should be used in subsequent technical steps.

Different types of processing on source depth image may be used. In step 1, the basic embodiment assumes that no processing is applied to the source depth image. In other embodiments, further processing could be applied. For example, image processing operations such as downscaling or cropping could be used to reduce bitrate. In such embodiments, additional metadata may be provided to signal how the downscaling is conducted, or which rows/columns are cropped. Such embodiments may use further technical step(s). The source depth image obtained after such embodiments should be used in subsequent technical steps.

Different ways may be executed to determine spatial sub-regions. In step 2, the basic embodiment assumes that the spatial sub-regions are determined, without indicating how. There are various ways to determine the spatial sub-regions. For example, by using pre-defined spatial sub-regions, or after applying some type of processing in the source depth image (e.g., image segmentation, depth-based segmentation, object or face or human detection, semantical analysis, etc.). Other alternatives could be devised. Such embodiments may use further technical step(s).

Possibly, more than two spatial sub-regions may be used. In step 2, the basic embodiment assumes two spatial sub-regions. In other embodiments, one or more than two spatial sub-regions could be determined. Such embodiments require straightforward adjustments of the technical steps to cater for the exact number of determined spatial sub-regions.

Spatial sub-regions may possibly not cover the source depth image. In step 2, the basic embodiment assumes that the concatenation of spatial sub-regions covers the entire source depth image. In other embodiments, the concatenation of spatial sub-regions may not cover the entire source depth image. In such embodiments, either (a) an extra spatial sub-region is implied as the remaining of the source depth image excluding the concatenation of the determined spatial sub-regions and a default/pre-determined transformation is employed for the implied spatial sub-region, or (b) the remaining of the source depth image excluding the concatenation of the determined spatial sub-regions is cropped. Such embodiments may use further technical step(s). The source depth image obtained after such embodiments following the (b) option should be used in subsequent technical steps.

In some embodiments, spatial sub-regions may overlap. In step 2, the basic embodiment assumes that the spatial sub-regions are non-overlapping. In other embodiments, overlapping spatial sub-regions could be determined. In such embodiments, additional logic could be included to decide in which spatial sub-region a source depth image sample should be assigned to, when its position falls into more than one spatial sub-regions. Such embodiments may use further technical step(s).

A notion or label of importance may be assigned to spatial sub-regions may be used in some embodiments. In step 2, the basic embodiment assumes that the spatial sub-regions are determined without indicating their importance or priority. In other embodiments, the importance for each spatial sub-region could be additionally determined, and indicated through importance labels. These labels could then be used in subsequent step 5 to (assist in) determining a transformation per spatial sub-region. In such embodiments, additional metadata may be provided to signal the importance label of each spatial sub-region, and preferably reflect the quality of corresponding target depth image sample values. Such embodiments may use further technical step(s).

A semantic annotation may be assigned to spatial sub-regions in some embodiments. In step 2, the basic embodiment assumes that the spatial sub-regions are determined without indicating their semantics. In other embodiments, the semantic for each spatial sub-region could be additionally determined as a result of a semantical analysis, or an object or face or human detection algorithm, or some other type of processing that could be used to determine spatial sub-regions in the source depth image, and indicated through semantic labels. In such embodiments, additional metadata may be provided to signal the semantic label of each spatial sub-region. Such embodiments may use further technical step(s).

Spatial sub-regions may be static or dynamic across depth video. In step 2, the basic embodiment assumes that the spatial sub-regions are determined per source depth image. In other embodiments, spatial sub-regions that are static or dynamic over time across a depth video could be determined. For example, the spatial sub-regions could be defined for a single depth frame, an entire depth sequence, or anything in-between. In such embodiments, common metadata could be signalled at a higher metadata level (e.g., segment, group-of-pictures, or video header level). Such embodiments may use further technical step(s).

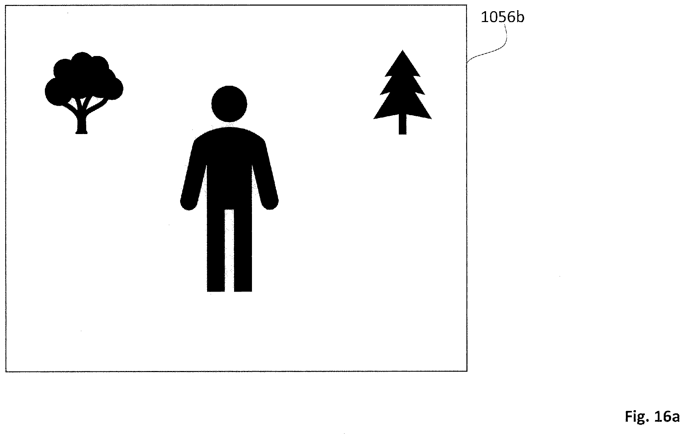

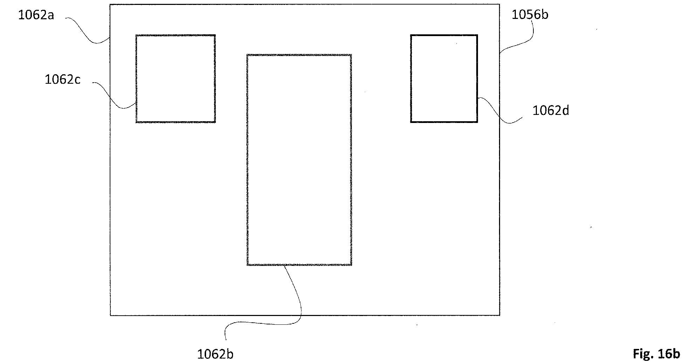

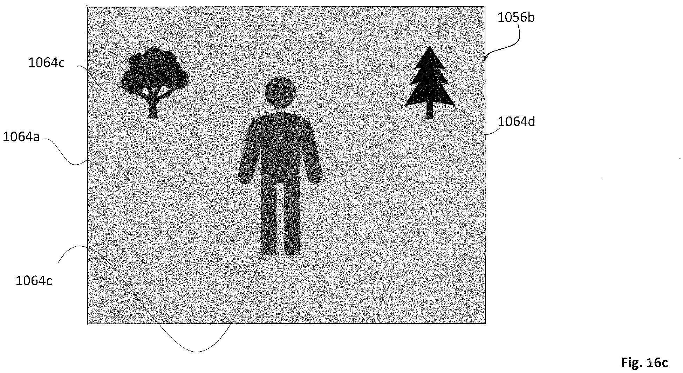

Fig. 16a shows a source depth image and Figs. 16b and 16c show different ways to determine the association information between the source depth image samples and spatial sub-regions, namely, using bounding boxes 1062a-d and a spatial sub-region integer mask in Fig. 16c, where different integers are represented by items 1064a-d.

Different ways may be used to determine association information. In step 3, the basic embodiment assumes that the association information between source depth image samples and spatial sub-regions is signalled using a spatial sub-regions integer mask, where a spatial sub-regions integer mask sample indicates the spatial sub-region of the co-located source depth image sample. In other embodiments, the association information between source depth image samples and spatial sub-regions could be determined differently. For example, by using shape masks to indicate spatial sub-regions via shape, centre, and other characteristics. Or, by using bounding boxes to indicate as spatial sub-regions the enclosed source depth image samples. Or, in case the target depth image is represented by a grayscale image, employing unused colour components to carry the corresponding spatial sub-regions information. Other alternatives could be devised. Such embodiments may use further technical step(s).

Different spatial association may be realized between source depth image and the spatial sub-regions integer mask. In step 3, the basic embodiment assumes that the spatial sub-regions integer mask has the same resolution and 1-1 spatial association with the source depth image. In other embodiments, a different spatial association could be determined. For example, the source depth image could split into N regions and each source depth image region could be associated with a spatial sub-regions integer mask sample (i.e., in this case, the spatial sub-regions integer mask contains N samples). Other alternatives could be devised. In such embodiments, additional metadata may be provided to signal the spatial association of the spatial sub-regions integer mask with the source depth image and potentially with the target depth image. Such embodiments may use further technical step(s).

Different types of post-processing may be applied to association information. In step 3, the basic embodiment assumes that no processing is applied to the spatial sub-regions integer mask. In other embodiments, further processing could be applied. For example, image processing operations such as downscaling or cropping could be used to reduce bitrate. In such embodiments, additional metadata may be provided to signal how the downscaling is conducted, or which rows/columns are cropped; moreover, additional metadata may be provided to signal the spatial association of the processed spatial sub-regions integer mask with the target depth image. Such embodiments may use further technical step(s).

A static or dynamic association information may be used or generated across a depth video. In step 3, the basic embodiment assumes that a spatial sub-regions integer mask is determined per source depth image. In other embodiments, a spatial sub-regions integer mask that can be used for more than one source depth images could be determined. For example, the same spatial sub-regions integer mask could be used for a single depth frame, an entire depth sequence, or anything in-between. In such embodiments, additional metadata may be provided to signal the receiving device to store a spatial sub-regions integer mask for more than one depth frame. Such embodiments may use further technical step(s).

In step 4, the basic embodiment assumes that a source depth sub-range is determined per spatial sub-region from the minimum and maximum source depth image sample values of the corresponding spatial sub-region.

Different ways may be used to signal the transformation per spatial sub-region. In step 4, the basic embodiment assumes that the transformation per spatial sub-region is signalled using pre-defined tables, potentially including additional transformation-specific parameters. Other alternatives could be devised.

Same transformations may lead to same quality for different spatial sub-regions. In step 4, the basic embodiment assumes that the first transformation determined in the first spatial sub-region is different than the second transformation determined in the second spatial sub-region. In other embodiments, the same transformation could be used for the two different spatial sub-regions. Similarly, for more than two spatial sub-regions.

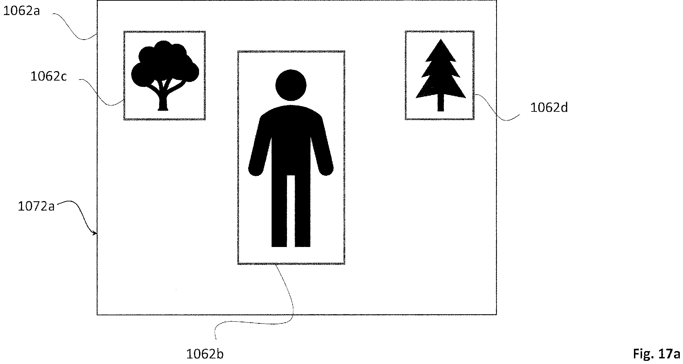

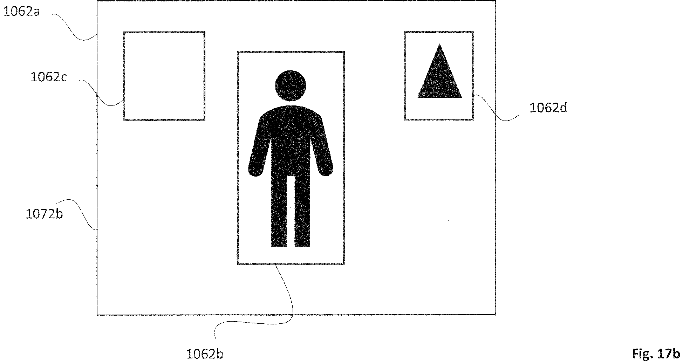

In Fig. 17a, there is shown a source depth image 1072a and in Fig. 17b there is shown a target depth image 1072b, both overlaid with bounding boxes 1062a-d that indicate the spatial sub-regions. Source depth image samples that fall in the red, green and blue spatial sub-regions are transformed by shifting, quantization and padding, respectively, leading to a target depth image that consists of spatial sub-regions of different quality. Note that the triangle and the empty samples indicate lossy versions of the two trees in the green and blue bounding boxes after quantization and padding, respectively.

Different transformations may be used. In step 4, the basic embodiment assumes that a simple linear transformation is determined per spatial sub-region. In other embodiments, other transformations could be determined. For example, shifting, wherein the source depth image sample values are losslessly shifted from a source depth sub-range of a spatial sub-region to a target depth sub-range of the target depth range. Or bit shifting, wherein the binary representations of the source depth image sample values are shifted by a specified number of bits from a source depth sub-range of a spatial sub-region to a target depth sub-range of the target depth range. Or scaling (potentially with rounding), wherein the source depth image sample values are mapped from a source depth sub-range of a spatial sub-region to a target depth sub-range of the target depth range. Or, quantization, wherein the source depth image sample values are quantized from a source depth sub-range of a spatial sub-region to a target depth sub-range of the target depth range, with the specified quantization step defining the extent of precision loss. Or blurring, wherein the source depth image sample values are mapped from a source depth sub-range of a spatial sub-region to a target depth sub-range of the target depth range, after applying a specified averaging kernel (e.g., Gaussian kernel) to decrease the entropy and increase compression efficiency. Or, semantical mapping, wherein the source depth image sample values are mapped from a source depth sub-range of a spatial sub-region to a target depth sub-range of the target depth range, with target depth image sample values representing semantical information (e.g., identifiers of object or face or person; identifiers of depth values that are closer, further, or in-between source depth sub-ranges of spatial sub-regions, etc.). Or, padding, wherein the source depth image sample values are mapped from a source depth sub-range of a spatial sub-region to a target depth sub-range of the target depth range, with target depth image sample values being set to a constant value, or to values of neighboring target depth image samples to enable better compression efficiency (e.g., via higher redundancy). Or, cropping, wherein the source depth image sample values are discarded in the target depth image. Other alternative transformations could also be used. In some embodiments, a different transformation could be determined per spatial sub-region, potentially, based on its importance label, as mentioned earlier. For example, for a high-importance spatial sub-region, shifting could be selected (e.g., $f(x) = x - \min(R)$, with $x$ a source depth image sample value, and min (R) the lower bound of the source depth sub-range of the spatial sub-region it belongs to). For a lower-importance spatial sub-region, quantization could be selected (e.g., $f(x) = \Delta\left(\left\lfloor\frac{x - \min(R)}{\Delta}\right\rfloor + \frac{1}{2}\right)$, with x a source depth image sample value, min ($R$) the lower bound of the source depth sub-range of the spatial sub-region it belongs to, and $\Delta$ the quantization step). For lowest-importance spatial sub-region, padding could be selected (e.g., $f(x) = 0$).

In an exemplary embodiment, the target depth range and the source depth range may be same or equal. In step 4, the basic embodiment assumes that the target depth range is different than the source depth range. In other embodiments, the target depth range could be the same as the source depth range.

In some embodiments, different spatial association between source depth image and target depth image may be realised. In step 4, the basic embodiment assumes that the target depth image has the same resolution and 1-1 spatial association with the source depth image, where a target depth image sample indicates the transformed value of the co-located source depth image sample. In other embodiments, a different spatial association could be determined. For example, the source depth image could split into N regions and each source depth image region could be associated with a target depth image sample (i.e., in this case, the target depth image contains N samples). Other alternatives could be devised. In such embodiments, additional metadata may be provided to signal the spatial association of the target depth image with the source depth image and potentially with the spatial sub-regions integer mask. Such embodiments may use further technical step(s).

Different types of post-processing may be applied to target depth image. In step 4, the basic embodiment assumes that no processing is applied to the target depth image. In other embodiments, further processing could be applied. For example, image processing operations such as downscaling or cropping could be used to reduce bitrate. In such embodiments, additional metadata may be provided to signal how the downscaling is conducted, or which rows/columns are cropped, and potentially the spatial association of the processed target depth image with the spatial sub-regions integer mask. Such embodiments may use further technical step(s).

The number of spatial sub-regions may be included. In step 5, the basic embodiment assumes that the number of spatial sub-regions is fixed and pre-determined, therefore, it is not included in the generated metadata. In other embodiments, the number of spatial sub-regions is signalled in the metadata.

The target depth sub-ranges and/or target depth range may be included. In step 6, the basic embodiment assumes that the target depth sub-range per spatial sub-region and the target depth range are not always included in the generated metadata, since they can be obtained from the minimum and maximum values of corresponding spatial sub-regions of the target depth image. In other embodiments, the target depth sub-range per spatial sub-region and/or the target depth range are always signalled in the metadata.

Different encoding may be used per spatial sub-region. In step 6, the basic embodiment assumes that the entire target depth image is encoded with the same encoding configurations. In other embodiments, different encoding configurations could be used for different spatial sub-regions, potentially, by using appropriately selected encoding tools (e.g., tiles). Such embodiments may use further technical step(s).

Different ways may be used to transmit encapsulated data. After step 7, the encapsulated data could be transmitted over the network either as a stream (after establishing a session) or as a file (potentially in parts), or may be stored in the device as a file.

In the basic embodiment represented by steps 1-7, the source depth image, the target depth image, and the spatial sub-regions integer mask have the same resolution, while there is 1-1 spatial association between source depth image and target depth image, as well as between source depth image and spatial sub-regions integer mask. This leads to spatial alignment (i.e., same resolution and 1-1 spatial association) between target depth image and spatial sub-regions integer mask. Therefore, there is no need for explicit description of the spatial association between them in the metadata, which is typically needed to reconstruct the source depth image at the receiving device. In other embodiments, there might be no spatial alignment between source depth image and target depth image, or source depth image and spatial sub-regions integer mask, which leads to no spatial alignment between target depth image and spatial sub-regions integer mask. In such embodiments, there are at least two alternatives to obtain spatial alignment between these two: (a) metadata that describe the spatial association of the target depth image with the source depth image, the spatial association of the spatial sub-regions integer mask with the source depth image, and potential processing steps for the target depth image and the spatial sub-regions integer mask allowing to recover corresponding versions of the target depth image and the spatial sub-regions integer mask that have spatial alignment with the source depth image, and in turn between them; (b) dedicated metadata that describe the spatial association between the target depth image and the spatial sub-regions integer mask. Some of the paragraphs above cover at least partially both alternatives. Such embodiments may use further technical step(s).

Exemplary code:

```
# Step 1: Obtain source depth image
mat_in = np.asarray(source_depth_image)


# Step 2: Determine spatial sub-regions
spatial_subregion_ymin = int(mat_in.shape[0]/2-400)
spatial_subregion_ymax = int(mat_in.shape[0]/2+500)
spatial_subregion_xmin = int(mat_in.shape[1]/2+75-225)
spatial_subregion_xmax = int(mat_in.shape[1]/2+75+225)

s0 = np.copy(mat_in).astype('float')
s0[spatial_subregion_ymin:spatial_subregion_ymax,
spatial_subregion_xmin:spatial_subregion_xmax] =
np.where((mat_in[spatial_subregion_ymin:spatial_subregion_ymax,
spatial_subregion_xmin:spatial_subregion_xmax] >= 1400) &
(mat_in[spatial_subregion_ymin:spatial_subregion_ymax,
spatial_subregion_xmin:spatial_subregion_xmax] <= 2100), np.nan,
s0[spatial_subregion_ymin:spatial_subregion_ymax,
spatial_subregion_xmin:spatial_subregion_xmax])

s1 = np.where((mat_in[spatial_subregion_ymin:spatial_subregion_ymax,
spatial_subregion_xmin:spatial_subregion_xmax] >= 1400) &
(mat_in[spatial_subregion_ymin:spatial_subregion_ymax,
spatial_subregion_xmin:spatial_subregion_xmax] <= 2100),
mat_in[spatial_subregion_ymin:spatial_subregion_ymax,
spatial_subregion_xmin:spatial_subregion_xmax], np.nan).astype('float')


# Step 3: Determine association information
mask_out = np.zeros((mat_in.shape))
mask_out = np.where(np.isnan(s0), 1, 0)


# Step 4: Transform source depth image to a target depth image
source_depth_subrange_min = [np.nanmin(s0.flatten()), np.nanmin(s1.flatten())]
source_depth_subrange_max = [np.nanmax(s0.flatten()), np.nanmax(s1.flatten())]
delta = 4
```

```
mat_out = np.where((mask_out == 0), np.floor(np.divide(mat_in -
source_depth_subrange_min[0], delta) + 0.5), mat_in) # Lossy transformation (i.e.,
quantization)
mat_out = np.where((mask_out == 1), mat_in - source_depth_subrange_min[1], mat_out) #
Lossless transformation
```

According to an embodiment, a receiving device is provided. The receiving device may comprise a processor to perform the following:

1. Obtaining the encapsulated depth image and metadata, e.g., using an interface.
2. Decoding the depth image.
3. Parsing the metadata comprising (a) the source depth sub-range per spatial sub-region, (b) the transformation per spatial sub-region, and (c) the association information between source depth image samples and spatial sub-regions.
4. Reconstructing the source depth image from the decoded depth image and the parsed metadata, with the reconstructed source depth image samples taking values from the source depth range.

Exemplary code:

```
# Step 4: Reconstruct source depth image from target depth image and metadata
mat_in_rec = np.where((mask_out == 0), np.multiply(mat_out, delta) +
source_depth_subrange_min[0], mat_out)
mat_in_rec = np.where((mask_out == 1), mat_out + source_depth_subrange_min[1], mat_in_rec)
```

The steps for both capturing and receiving devices were crafted considering a single depth image that corresponds to a specific time instance. The same steps can be applied on depth videos instead of depth images, by treating each frame of the video as an image.

Embodiments

The disclosure provisions several signalling methods that are embodiments of the present invention:

1. As metadata in video bitstream which can be up to frame granularity;
2. As dynamic metadata in a file format which can change up to frame granularity but not inside the video bitstream.

For video bitstream signalling, using new Supplemental Enhancement Information (SEI) messages, using auxiliary pictures, and embedding metadata in unused chromatic components of an image plane will be illustrated. For file format, using new structures in the ISO Base Media File Format (ISOBMFF) [25] will be illustrated. These are examples of in-video bitstream and file format signalling that rely on referenced standards; however, other standards could be used as basis for implementing this invention.

The following assumptions are made:

- The embodiments consider a single depth video (i.e., without an accompanied RGB video).
- The embodiments assume that the target depth image is encoded as a conventional video frame. Therefore, only the associated metadata to reconstruct the source depth image, are considered.
- The embodiments assume that the association information between source depth image samples and spatial sub-regions is represented by an integer mask (i.e., spatial sub-regions integer mask.
- The embodiments assume 1-1 spatial association between the spatial sub-regions integer mask and the source depth image.
- The embodiments assume the same resolution for the target depth image and the source depth image.

- The embodiments assume 1-1 spatial association between the target depth image and the source depth image.

**Signalling in video stream**

For the purpose of the invention, according to some embodiments, the source depth sub-range per spatial sub-region, the transformation per spatial sub-region, and the association information between source depth image samples and spatial sub-regions (i.e., the spatial sub-regions integer mask) may need to be transmitted along with the video signal from the encoding step (e.g. in a studio, on a server) up to the receiver (e.g. the TV receiver, a smartphone, a tablet, a HMD glasses, etc...). Therefore, they may be signalled as part of the video bitstream's metadata.

For illustrating the transport of the information, the following is an example based on the NAL-based video coding standards which are currently H.264/AVC [26], H.265/HEVC [27], MPEG-5 EVC [28] and H.266/VVC [29]. But similar signalling could be achieved for other coding standards such as AV1 [30] or the upcoming AV2 standard.

A Network Abstraction Layer (NAL) unit is the encapsulation method for a video bitstream. A NAL unit is composed of a header and a payload. The concept of NAL unit is identical for those 4 standards although the definition of the NAL header may vary slightly between H.264/AVC [26], H.265/HEVC [27], MPEG-5 EVC [28] and H.266/VVC [29].

For the remaining of this section, the signalling will take the H.266/VVC [29] standard as a basis for illustration purposes. Similar embodiments can be drafted for H.264/AVC [26], H.265/HEVC [27], or MPEG-5 EVC [28].

Table 1 is the general syntax of a NAL unit as defined in H.266/VVC [29]. The formatting of those tables follows the conventions defined in H.266/VVC [29]. Please refer to section 7.1 (Method of specifying syntax in tabular form) and section 7.2 (Specification of syntax functions and descriptors) in H.266/VVC [29].

Table 1 - General NAL unit syntax as defined in H.266/VVC [29],

| *nal_unit( NumBytesInNalUnit ) {* | ***Descriptor*** |
|---|---|
| *nal_unit_header( )* | |
| *NumBytesInRbsp* = 0 | |
| *for( i = 2; i < NumBytesInNalUnit; i+ + )* | |
| *if( i + 2 < NumBytesInNalUnit* && *next_bits( 24* ) = = *0x000003* ) { | |
| ***rbsp_byte****[ NumBytesInRbsp++ ]* | *b(8)* |
| ***rbsp_byte****[ NumBytesInRbsp++ ]* | *b(8)* |
| *i + = 2* | |
| ***emulation_prevention_three_byte*** */* equal to 0x03 */* | *f(8)* |
| *} else* | |
| ***rbsp_byte****[ NumBytesInRbsp++ ]* | *b(8)* |
| *}* | |

The signalling consists in defining a new type of Supplemental Enhancement Information (SEI) message. SEI are metadata carried in a video bitstream of H.264/AVC [26], H.265/HEVC [27] or H.266/VVC [29] that can support the decoding of the video (e.g., buffering period SEI) or that can be useful for some processing after decoding (e.g., colour remapping SEI). Each SEI type defines the syntax of the payload as well as the semantic of the data so that the implementor can make use of the signalled SEI if they want to support it. A SEI message is carried in the video bitstream as a NAL unit and the type of SEI is expressed by a payload type. In H.266/VVC [29], the payload types are defined in section D.2.1 thereof (General SEI payload syntax). For signalling the source depth sub-range per spatial sub-region, the transformation per spatial sub-region, and the spatial sub-regions integer mask, one may thus define a new payload type, e.g. payload type '134' as part of the current reserved range of values as in Table 2.

Table 2 - Modification of general SEI payload syntax in H.266/VVC [29].

| *sei_payload( payloadType, payloadSize* ) { | *Descriptor* |
|---|---|
| *if( nal_unit_type = = PKEFIX_SEI_NUT )* | |
| *if( payloadType = =* 0 ) | |
| *buffering_period( payloadSize* ) | |

(continued)

| | |
|---|---|
| *else if( payloadType = = 1* ) | |
| *pic_timing( payloadSize* ) | |
| ... | |
| *else if( payloadType = == 133* ) | |
| *scalable_nesting( payloadSize* ) | |
| else *if(* payloadType = = 134 ) | |
| spatial_subregions_info( *payloadSize* ) | |
| *else /* Specified in Rec. ITU- T H.274 \| ISO/IEC 23002-7 */* | |
| *reserved_message( payloadSize* ) | |
| ... | |
| *}* | |

***Carriage of spatial sub-regions integer mask using a SEI message***

One method to carry the spatial sub-regions integer mask is to use SEI messages. This constitutes a single-layer bitstream method.

In this method, new SEI messages that specify metadata and associated parameters are defined.

In the present case a first SEI message is defined to carry the spatial sub-regions integer mask. Additional metadata are needed to interpret the spatial sub-regions integer mask sample values (e.g., the source depth sub-range per spatial sub-region, the transformation per spatial sub-region), among other parameters (e.g., number of spatial sub-regions, importance labels, semantic labels, etc.). These metadata can be signalled in the first SEI message, or in a new SEI message that is proposed by embodiments described herein.

The following embodiments present examples of such SEI messages. Other embodiments could be crafted following the same logic.

Embodiment 1

In this case, a SEI message carries information about the number of spatial sub-regions, the source depth sub-range per spatial sub-region, the transformation per spatial sub-region, and the spatial sub-regions integer mask. The resolutions of the spatial sub-regions integer mask and the source depth image are the same; hence, the Sequence Parameter Set (SPS) signalling is used to retrieve the width and height parameters (i.e., no need to specify them in the spatial_subregions_info SEI message).

**Syntax**

A new payload type may be defined as in Table 3.

Table 3 - Signalling of the number of spatial sub-regions, the source depth sub-range per spatial sub-region, the transformation per spatial sub-region, and the spatial sub-regions integer mask in a SEI message.

| spatial_subregions_info( *payloadSize* ) { | **Descriptor** |
|---|---|
| **ssi cancel_flag** | u(1) |
| if( ! ssi_cancel_flag) { | |
| **ssi_num_spatial_subregions** | u(8) |
| for(k=0; k < ssi_num_spatial_subregions; k++) { | |
| **ssi_source_depth_subrange_min[** k ] | u(16) |
| **ssi_source_depth_subrange_max[** k ] | u(16) |
| **ssi_transformation_type[** k ] | u(4) |
| if(ssi_transformation_type) k ] == 0) | |

(continued)

| | |
|---|---|
| **ssi_offset[** k ] | u(16) |
| if(ssi_transformation_type[ k ] == 1) | |
| **ssi_bit_shift[** k ] | u(v) |
| if(ssi_transformation_type[ k ] == 2) { | |
| **ssi_target_depth_subrange_min[** k ] | u(16) |
| **ssi_target_depth_subrange_max[** k ] | u(16) |
| } | |
| if(ssi_transformation_type[ k ] == 3) { | |
| **ssi_quantization_step_value[** k ] | u(v) |
| **ssi_quantizer_type[** k ] | u(2) |
| } | |
| if(ssi_transformation_type[ k ] == 4) | |
| **ssi_constant_value[** k ] | u(16) |
| } | |
| for(i=0; i < **pps_pic_height_in_luma_samples;** i++) | |
| for(j=0; j < **pps_pic_width_in_luma_samples;** j++) | |
| **ssi_mask_value[** i ][ j ] | u(v) |
| } | |
| } | |

**Semantics**

The spatial_subregions_info SEI message provides information that describes the number of spatial sub-regions, the source depth sub-range per spatial sub-region, the transformation per spatial sub-region, and the spatial sub-regions integer mask in the video. The spatial_subregions_info SEI message is defined up to a frame.

**ssi_cancel_flag** equal to 1 indicates that the SEI message cancels the persistence of any previous spatial_subregions_info SEI message. When equal to 0, the information that should be considered follows.

**ssi_num_spatial_subregions** specifies the number of the spatial sub-regions.

**ssi_source_depth_subrange_min[** k ] specifies the minimum value of the source depth sub-range of the k-th spatial sub-region.

**ssi_source_depth_subrange_max[** k ] specifies the maximum value of the source depth sub-range of the k-th spatial sub-region.

**ssi_transformation_type[** k ] specifies the transformation applied to the k-th spatial sub-region, as specified in Table 4.

Table 4 - Definition of ssi_transformation_type.

| **ssi_transformation_type** | **Definition** |
|---|---|
| 0 | [Shifting] Each decoded target depth image sample value of the k-th spatial sub-region is shifted, as follows: |

(continued)

| ssi_transformation_type | Definition |
|---|---|
| | y = x - ssi_offset[ k ] + ssi_source_depth_subrange_min[ k ] (It may be reasonable to assume that ssi_source_depth_subrange_max[ k ] - ssi_source_depth_subrange_min[ k ] + ssi_offset[ k ] is smaller than or equal to the maximum value of the target depth sub-range of the k-th spatial sub-region.)<br>where x is the decoded target depth image sample value, and y is the reconstructed source depth image sample value.<br>If y is greater than ssi_source_depth_subrange_max[ k ], it is clipped. |
| 1 | [Bit shifting] The binary representation of each target depth image sample value of the k-th spatial sub-region is left-shifted, as follows:<br>y = x << ssi_bit_shift[ k ]<br>where x is the binary representation of the decoded target depth image sample value, and y is the reconstructed source depth image sample value.<br>If y is greater than ssi_source_depth_subrange_max[ k ], it is clipped. |
| 2 | [Scaling] Each decoded target depth image sample value of the k-th spatial sub-region is scaled, as follows:<br>y = ssi_source_depth_subrange_min[ k ] + ((x - ssi_target_depth_subrange_min[ k ]) * (ssi_source_depth_subrange_max[ k ] - ssi_source_depth_subrange_min[ k ])) / (ssi_target_depth_subrange_max[ k ] - ssi_target_depth_subrange_min[ k ])<br>where x is the decoded target depth image sample value, and y is the reconstructed source depth image sample value.<br>If y is greater than ssi_source_depth_subrange_max[ k ], it is clipped. |
| 3 | [Quantization] Each decoded target depth image sample value of the k-th spatial sub-region is inverse quantized, as follows:<br>y = x * ssi_quantization_step_value[ k ], if ssi_quantizer_type[ k ] = 0<br>y = (x + 0.5) * ssi_quantization_step_value[ k ], if ssi_quantizer_type[ k ] = 1<br>where x is the decoded target depth image sample value, and y is the reconstructed source depth image sample value.<br>If y is greater than ssi_source_depth_subrange_max[ k ], it is clipped. |
| 4 | [Padding] Each decoded target depth image sample value of the k-th spatial sub-region is set equal to a constant value, as follows:<br>y = ssi_constant_value[ k ]. |
| Other values | Reserved for future use |

With regard to the quantization, reference is made to [31]: "Any quantizer can be decomposed into two distinct stages, which can be referred to as the classification stage (or forward quantization stage) and the reconstruction stage (or inverse quantization stage), where the classification stage maps the input value to an integer quantization index k and the reconstruction stage maps the index k to the reconstruction value that is the output approximation of the input value".

ssi_offset[ k ] specifies the offset to shift decoded target depth image sample values of the k-th spatial sub-region to obtain reconstructed source depth image sample values, when ssi_transformation_type[ k ] is equal to 0. When not specified, the ssi_offset[ k ] is set equal to 0.

**ssi_bit shift[** k ] specifies the number of bits to left-shift the binary representations of the target depth image sample values of the k-th spatial sub-region to obtain reconstructed source depth image sample values, when ssi_transformation_type[ k ] is equal to 1. When not specified, the ssi_bit_shift[ k ] is set equal to 1.

**ssi_target_depth_subrange_min[** k ] specifies the minimum value of the target depth sub-range of the k-th spatial sub-region, when ssi_transformation_type[ k ] is equal to 2. When not specified, the ssi_target_depth_subrange_min [ k ] is set equal to the minimum of the target depth image sample values that correspond to the k-th spatial sub-region (i.e., ssi_mask_value[ i ][ j ] = k).

**ssi_target_depth_subrange_max[** k ] specifies the maximum value of the target depth sub-range of the k-th spatial sub-region, when ssi_transformation_type[ k ] is equal to 2. When not specified, the ssi_target_depth_subrange_max [ k ] is set equal to the maximum of the target depth image sample values that correspond to the k-th spatial sub-region (i.e., ssi_mask_value[ i ][ j ] = k).

**ssi_quantization_step_value[** k ] specifies the quantization step to inverse quantize decoded target depth image sample values of the k-th spatial sub-region to obtain reconstructed source depth image sample values, when ssi_transformation_type[ k ] is equal to 3. When ssi_transformation_type[ k ] is equal to 3, the ssi_quantization_step_value[ k ] should be specified.

**ssi_quantizer_type[** k ] specifies the type of quantizer used for quantization, when ssi_transformation_type[ k ] is equal to 3. When equal to 0, the ssi_quantizer_type[ k ] is a mid-treat uniform quantizer. When equal to 1, the ssi_quantizer_type[ k ] is a mid-riser uniform quantizer. When not specified, ssi_quantizer_type[ k ] is set equal to 0. Other values are reserved for future use of other types of quantizers.

**ssi_constant_value[** k ] specifies the value in which the decoded target depth image samples are mapped to, when ssi_transformation_type[ k ] is equal to 4. When not specified, the ssi_constant_value[ k ] is set equal to 0.

**ssi_mask_value[** i ][ j ] specifies the spatial sub-region index of the collocated source depth image sample. When ssi_mask_value [ i ][ j ] is equal to k, the minimum and the maximum value of the source depth sub-range of the spatial sub-region are specified by ssi_source_depth_subrange_min [ k ] and ssi_source_depth_subrange_max [ k ], respectively.

**Embodiment 2**

In this case, a first SEI message carries information about the number of spatial sub-regions, the source depth sub-range per spatial sub-region, the transformation per spatial sub-region, the importance label per spatial sub-region, and the semantic label per spatial sub-region. A second SEI message carries information about the spatial sub-regions integer mask. The resolutions of the spatial sub-regions integer mask and the source depth image are different; hence, the width and height parameters should be specified. A rescaling operation is then needed, and possibly corresponding signalling to indicate how this rescaling operation is performed, such that the rescaled source depth sub-ranges integer mask resolution matches the one of the source depth image.

**Syntax**

New payload type may be defined as in Table 5 and Table 6.

Table 5 - Signalling of the number of spatial sub-regions, the source depth sub-range per spatial sub-region, the transformation per spatial sub-region, the importance label per spatial sub-region, and the semantic label per spatial sub-region in a SEI message.

| spatial_subregions_info( payloadSize ) { | **Descriptor** |
|---|---|
| **ssi_cancel_flag** | u(1) |
| if( ! ssi_cancel_flag) { | |
| **ssi_num_spatial_subregions** | u(8) |
| for(k=0; k < ssi_num_spatial_subregions; k++) { | |
| **ssi_source_depth_subrange_min[** k ] | u(16) |
| **ssi_source_depth_subrange_max[** k ] | u(16) |
| **ssi_target_depth_subrange_min[** k ] | u(16) |
| **ssi_target_depth_suhrange_max[** k ] | u(16) |
| **ssi_transformation_type[** k ] | u(4) |
| if(ssi_transformation_type[ k ] == 0) | |
| **ssi_offset[** k ] | u(16) |

(continued)

| | |
|---|---|
| if(ssi_transformation_type[ k ] == 1) | |
| **ssi_bit_shift[** k ] | u(v) |
| if(ssi_transformation_type[ k ] == 3) { | |
| **ssi_quantization_step_value[** k ] | u(v) |
| **ssi_quantizer_type[** k ] | u(2) |
| } | |
| if(ssi_transformation_type[ k ] == 4) | |
| **ssi_constant_value[** k ] | u(16) |
| **ssi_importance_label[** k ] | u(2) |
| **ssi_semantic_label[** k ] | u(8) |
| } | |
| } | |
| } | |

Table 6 - Signalling of the spatial sub-regions integer mask in a SEI message.

| mask_info( payloadSize ) { | **Descriptor** |
|---|---|
| **mi_mask_height** | u(16) |
| **mi_mask_width** | u(16) |
| for(i=0; i < mi_mask_height; i++) | |
| for(j=0; j < mi_mask_width; j++) | |
| **mi_mask_value**[ i ][ j ] | u(v) |
| } | |

**Semantics**

The spatial_subregions_info SEI message provides information that describes the number of spatial sub-regions, the source depth sub-range per spatial sub-region, the transformation per spatial sub-region, the importance label per spatial sub-region, and the semantic label per spatial sub-region. The mask_info SEI message provides information that describes the spatial sub-regions integer mask. Both the spatial_subregions_info and the masks_info SEI messages are defined up to a frame.

**ssi_cancel_flag** equal to 1 indicates that the SEI message cancels the persistence of any previous spatial_subregions_info SEI message. When equal to 0, the information that should be considered follows.

**ssi_num_spatial_subregions** specifies the number of the spatial sub-regions.

**ssi_source_depth_subrange_min[** k ] specifies the minimum value of the source depth sub-range of the k-th spatial sub-region.

**ssi_source_depth_subrange_max[** k ] specifies the maximum value of the source depth sub-range of the k-th spatial sub-region.

**ssi_target_depth_subrange_min[** k ] specifies the minimum value of the target depth sub-range of the k-th spatial sub-region. When not specified, the ssi_target_depth_subrange_min[ k ] is set equal to the minimum of the target depth image sample values that correspond to the k-th spatial sub-region (i.e., ssi_mask_value[ i ][ j ] = k).

**ssi_target_depth_subrange_max[** k ] specifies the maximum value of the target depth sub-range of the k-th spatial sub-region. When not specified, the ssi_target_depth_subrange_max[ k ] is set equal to the maximum of the target depth image sample values that correspond to the k-th spatial sub-region (i.e., ssi_mask_value[ i ][ j ] = k).

**ssi_transformation_type[** k ] specifies the transformation applied to the k-th spatial sub-region, as specified in Table 4.

**ssi_offset[** k ] specifies the offset to shift decoded target depth image sample values of the k-th spatial sub-region to obtain reconstructed source depth image sample values, when ssi_transformation_type[ k ] is equal to 0. When not specified, the ssi_offset[ k ] is set equal to 0.

**ssi_bit shift[** k ] specifies the number of bits to left-shift the binary representations of the target depth image sample values of the k-th spatial sub-region to obtain reconstructed source depth image sample values, when ssi_transformation_type[ k ] is equal to 1. When not specified, the ssi_bit_shift[ k ] is set equal to 1.

**ssi_quantization_step_value[** k ] specifies the quantization step to inverse quantize decoded target depth image sample values of the k-th spatial sub-region to obtain reconstructed source depth image sample values, when ssi_transformation_type[ k ] is equal to 3. When ssi_transformation_type[ k ] is equal to 3, the ssi_quantization_step_value[ k ] should be specified.

**ssi_quantizer_type[** k ] specifies the type of quantizer used for quantization, when ssi_transformation_type[ k ] is equal to 3. When equal to 0, the ssi_quantizer_type[ k ] is a mid-treat uniform quantizer. When equal to 1, the ssi_quantizer_type[ k ] is a mid-riser uniform quantizer. When not specified, ssi_quantizer_type[ k ] is set equal to 0. Other values are reserved for future use of other types of quantizers.

**ssi_constant_value[** k ] specifies the value in which the decoded target depth image samples are mapped to, when ssi_transformation_type[ k ] is equal to 4. When not specified, the ssi_constant_value[ k ] is set equal to 0.

**ssi_importance_label[** k ] specifies the importance of the k-th spatial sub-region. When ssi_importance_label[ k ] is equal to 0, the k-th spatial sub-region is of low importance. When ssi_importance_label[ k ] is equal to 1, the k-th spatial sub-region is of medium importance. When ssi_importance_label[ k ] is equal to 2, the k-th spatial sub-region is of high importance. NOTE Different or more importance labels could be used.

**ssi_semantic_label[** k ] specifies the semantic interpretation of the k-th spatial sub-region. NOTE Different look-up tables can be specified to map values to semantic labels.

**mi_mask_height** specifies the height of the spatial sub-regions integer mask (i.e., the integer mask used to associate the source depth image samples with the spatial sub-regions).

**mi_mask_width** specifies the width of the spatial sub-regions integer mask (i.e., the integer mask used to associate the source depth image samples with the spatial sub-regions).

**mi_mask_value[** i ][ j ] specifies the spatial sub-region index of the collocated source depth image sample. When mi_mask_value [ i ][ j ] is equal to k, the minimum and the maximum value of the source depth sub-range of the spatial sub-region are specified by ssi_source_depth_subrange_min [ k ] and ssi_source_depth_subrange_max [ k ], respectively.

***Carriage of spatial sub-regions integer mask using an auxiliary picture***

Another method to carry the spatial sub-regions integer mask is to use auxiliary pictures. This constitutes a multi-layer bitstream method.

In this method, a sequence of data is encoded as a sequence of auxiliary pictures and constitutes an auxiliary layer next to the primary layer. This means that each auxiliary picture layer is associated with one primary picture layer and one primary picture layer may be associated with one or more auxiliary picture layers.

In the present case, the sequence of data corresponds to the sequence of spatial sub-regions integer masks, constituting the spatial sub-regions integer mask auxiliary layer, and the primary layer contains the target depth image sequence. Additional metadata are needed to interpret the spatial sub-regions integer mask auxiliary picture sample values (e.g., the source depth sub-range per spatial sub-region, the transformation per spatial sub-region), among other parameters (e.g., number of spatial sub-regions, importance labels, semantic labels, etc.). These metadata can be signalled in a new SEI message as described herein.

The following embodiment presents in the section "Scalability dimension information SEI message" the updated description of the scalability dimension information SEI defined in the Versatile Supplemental Enhancement Information (VSEI) [32] standard, section 8.19 (Scalability dimension information SEI message), and referenced by the H.266/VVC [29] standard; note that a similar extension in the scalable H.265/HEVC [27] can be achieved. Moreover, an example of a spatial sub-regions information SEI message is presented in the section "Spatial sub-regions information SEI message" to signal the additional metadata. Other embodiments could be crafted following the same logic.

In the following embodiment, the described spatial sub-regions information SEI message is following Embodiment 1 of section "Carriage of spatial sub-regions integer mask using a SEI message". Analogously, the spatial sub-regions information SEI message could be modified accordingly to describe signalling following Embodiment 2 of the same section. Other embodiments could also be crafted.

**Scalability dimension information SEI message**

Syntax

| *scalability_dimension_info(payloadSize) {* | ***Descriptor*** |
|---|---|
| ***sdi_max_layers_minus1*** | *u(6)* |
| ***sdi_multiview_info_flag*** | *u(1)* |
| ***sdi_auxiliary_info_flag*** | *u(1)* |
| *if(sdi_multiview_info_flag / / sdi_auxiliury_info_flag) {* | |
| *if( sdi_multiview_info_ffag )* | |
| ***sdi_view_id_len_minus1*** | *u(4)* |
| *for( i = 0; i <= sdi_max_layers_minus1; i++ ) {* | |
| ***sdi_layer_id****[ i ]* | *uf6)* |
| *if( sdi_multiview_info_flag )* | |
| ***sdi_view_id_val[*** *i ]* | *u(v)* |
| *if( sdi_auxiliary_info_flag )* | |
| ***sdi_aux_id[ i ]*** | *u(8)* |
| *if(sdi_aux_id[ i ] > 0) {* | |
| ***sdi_num_associated_primary_layers_minus1****[ i ]* | *u(δ)* |
| *for(j = 0; j <= sdi_num_associated_primary_layers_minus1[ i ];j++ )* | |
| ***sdi_associated_primary_layer_idx****[ i ][ j ]* | *u(6)* |
| } | |
| } | |
| } | |
| } | |
| } | |

Semantics

*The scalability_dimension_info SEI message provides the Scalability Dimension Information (SDI) for each layer in the current Coded Video Sequence (CVS), i.e., the CVS containing the SDI SEI message, such as 1) when there may be multiple views, the view ID of each layer; and 2) when there may be auxiliary information (such as depth or alpha) carried by one or more layers, the auxiliary ID of each layer.*

*When an SDI SEI message is present in any Access Unit (AU) of a CVS, an SDI SEI message shall be present for the first AU of the CVS. All SDI SEI messages in a CVS shall have the same content.*

***sdi_aux_id**[ i ] equal to 0 indicates that the i-th layer in the current CVS does not contain auxiliary pictures. sdi_aux_id[ i ] greater than 0 indicates the type of auxiliary pictures in the i-th layer in the current CVS as specified in Table 8 . When sdi_auxiliary_info_flag is equal to 0, the value of sdi_aux_id[ i ] is inferred to be equal to 0.*

***Table 8 - Mapping of sdi_aux_id[ i ] to the type of auxiliary pictures***

| ***sdi_aux_id[ i ]*** | ***Name*** | ***Type of auxiliary pictures*** |
|---|---|---|
| 1 | *AUX_ALPHA* | *Alpha plane* |
| 2 | *AUX_DEPTH* | *Depth picture* |
| 3 | AUX_SPATIAL_SUBREGIONS_INTEGER_MASK | Integer mask that describes the association information between source depth image samples and spatial sub-regions |
| 4..127 | | *Reserved* |
| *228..159* | | *Unspecified* |
| *160..255* | | *Reserved* |

*The interpretation of auxiliary pictures associated with sdi_aux_id[ i ] in the range of 128 to 159, inclusive, is specified through means other than the sdi_aux_id[ i ] value.*

*sdi_aux_id[ i ] shall be in the range* of 0 to 3 when compared to a former interval rangin from 0 to 2, *inclusive, or 128 to 159, inclusive, for bitstreams conforming to this version of this document. Although the value of sdi_aux_id[ i ] shall be in the range of 0* to 3, *inclusive, or 128 to 159, inclusive, in this version of this document, decoders shall also allow other values of sdi_aux_id[ i ] in the range of 0 to 255, inclusive.*

*If sdi_aux_id[ i ] is equal to 0, the i-th layer is referred to as a primary layer. Otherwise, the i-th layer is referred to as an auxiliary layer. When sdi_aux_id[ i ] is equal to 1, the i-th layer is also referred to as an alpha auxiliary layer. When sdi_aux_id[ i ] is equal to 2, the i-th layer is also referred to as a depth auxiliary layer.* When *sdi_aux_id[* i ] is equal to 3, the i-th layer is also referred to as a spatial sub-regions integer mask auxiliary layer.

**Spatial sub-regions information SEI message**

This SEI message carries information about the number of spatial sub-regions, the source depth sub-range per spatial sub-region, and the transformation per spatial sub-region, with the spatial sub-regions integer mask sample values encoded in auxiliary pictures of type AUX_SPATIAL_SUBREGIONS_INTEGER_MASK and the corresponding target depth images denoting the associated primary pictures. The resolutions of the spatial sub-regions integer mask and the source depth image are the same; hence, the Sequence Parameter Set (SPS) signalling is used to retrieve the width and height parameters (i.e., no need to specify them in the spatial_subregions_info SEI message).

**Syntax**

Table 9 - Signalling of the source depth sub-range per spatial sub-region, and the transformation per spatial sub-region in a SEI message.

| spatial_subregions_info( *payloadSize* ) { | **Descriptor** |
|---|---|
| **ssi_cancel_flag** | u(1) |
| if( ! ssi_cancel_flag) { | |
| **ssi_num_spatial_subregions** | u(8) |
| for(k=0; k < ssi_num__spatial_subregions; k++) { | |
| **ssi_source_depth_subrange_min[** k ] | u(16) |
| **ssi_source_depth_subrange_max[** k ] | u(16) |
| **ssi_transformation_type[** k ] | u(4) |
| if(ssi_transformation_type[ k ] == 0) | |

(continued)

| | |
|---|---|
| **ssi_offset[** k ] | u(16) |
| if(ssi_transformation_type[ k ] == 1) | |
| **ssi_bit_shift[** k ] | u(v) |
| if(ssi_transformation_type[ k ] == 2) { | |
| **ssi_target_depth_subrange_min[** k ] | u(16) |
| **ssi_target_depth_subrange_max[** k ] | u(16) |
| } | |
| if(ssi_transformation_type[ k ] == 3) { | |
| **ssi_quantization_step_value[** k ] | u(v) |
| **ssi_quantizer_type[** k ] | u(2) |
| } | |
| if(ssi_transformation_type[ k ] == 4) | |
| **ssi_constant_value[** k ] | u(16) |
| } | |
| } | |
| } | |

Semantics

The spatial_subregions_info SEI message provides information that describes the number of spatial sub-regions, the source depth sub-range per spatial sub-region, and the transformation per spatial sub-region. The spatial_subregions_info SEI message is defined up to a frame.

When a CVS does not contain an SDI SEI message with *sdi_aux_id[* i ] equal to 3 for at least one value of i, no picture in the CVS shall be associated with a spatial_subregions_info SEI message.

When an AU contains both an SDI SEI message with sdi_aux_id[ i ] equal to 3 for at least one value of i and a spatial_subregions_info SEI message, the SDI SEI message shall precede the spatial_subregions_info SEI message in decoding order.

When an access unit contains an auxiliary picture picA in a layer, with nuh_layer_id equal to nuhLayerIdA, that is indicated as a spatial sub-regions integer mask auxiliary layer by an SDI SEI message, the spatial sub-regions integer mask sample values of picA persist in output order until one or more of the following conditions are true:

- The next picture, in output order, with nuh_layer_id equal to nuhLayerIdA is output.
- A Coded Layer Video Sequence (CLVS) containing the auxiliary picture picA ends.
- The bitstream ends.
- A CLVS of any associated primary layer of the auxiliary picture layer with nuh_layer_id equal to nuhLayerIdA ends.

The following semantics apply separately to each nuh_layer_id targetLayerId among the nuh_layer id values to which the spatial_subregions_info SEI message applies.

ssi_cancel_flag equal to 1 indicates that the SEI message cancels the persistence of any previous spatial_subregions_info SEI message in output order that applies to the current layer. When equal to 0, the information that should be considered follows.

Let currPic be the picture that the spatial_subregions_info SEI message is associated with. The semantics of spatial_subregions_info SEI message persist for the current layer in output order until one or more of the following conditions are true:

- A new CLVS of the current layer begins.
- The bitstream ends.

- A picture in the current layer in an AU associated with a spatial_subregions_info SEI message is output that follows the current picture in output order.

**ssi_num_spatial_subregions** specifies the number of the spatial sub-regions.

**ssi_source_depth_subrange_min[** k ] specifies the minimum value of the source depth sub-range of the k-th spatial sub-region.

**ssi_source_depth_subrange_max[** k ] specifies the maximum value of the source depth sub-range of the k-th spatial sub-region.

**ssi_transformation_type[** k ] specifies the transformation applied to the k-th spatial sub-region, as specified in Table 4.

**ssi_offset[** k ] specifies the offset to shift decoded target depth image sample values of the k-th spatial sub-region to obtain reconstructed source depth image sample values, when ssi_transformation_type[ k ] is equal to 0. When not specified, the ssi_offset[ k ] is set equal to 0.

**ssi_bit_shift[** k ] specifies the number of bits to left-shift the binary representations of the target depth image sample values to obtain reconstructed source depth image sample values, when ssi_transformation_type[ k ] is equal to 1. When not specified, the ssi_bit_shift[ k ] is set equal to 1.

**ssi_target_depth_subrange_min[** k ] specifies the minimum value of the target depth sub-range of the k-th spatial sub-region, when ssi_transformation_type[ k ] is equal to 2. When not specified, the ssi_target_depth_subrange_min [ k ] is set equal to the minimum of the target depth image sample values that correspond to the k-th spatial sub-region.

**ssi_target_depth_subrange_max[** k ] specifies the maximum value of the target depth sub-range of the k-th spatial sub-region, when ssi_transformation_type[ k ] is equal to 2. When not specified, the ssi_target_depth_subrange_max [ k ] is set equal to the maximum of the target depth image sample values that correspond to the k-th spatial sub-region.

**ssi_quantization_step_value[** k ] specifies the quantization step to inverse quantize decoded target depth image sample values of the k-th spatial sub-region to obtain reconstructed source depth image sample values, when ssi_transformation_type[ k ] is equal to 3. When ssi_transformation_type[ k ] is equal to 3, the ssi_quantization_step_value[ k ] should be specified.

**ssi_quantizer_type[** k ] specifies the type of quantizer used for quantization, when ssi_transformation_type[ k ] is equal to 3. When equal to 0, the ssi_quantizer_type[ k ] is a mid-treat uniform quantizer. When equal to 1, the ssi_quantizer_type[ k ] is a mid-riser uniform quantizer. When not specified, ssi_quantizer_type[ k ] is set equal to 0. Other values are reserved for future use of other types of quantizers.

**ssi_constant_value[** k ] specifies the value in which the decoded target depth image samples are mapped to, when ssi_transformation_type[ k ] is equal to 4. When not specified, the ssi_constant_value[ k ] is set equal to 0.

***Carriage of the spatial sub-regions integer mask using chromatic components of the target depth image***

Another method to carry the spatial sub-regions integer mask is to use chromatic components of the target depth image. This constitutes a single-layer bitstream method.

In this method, metadata are embedded in unused chromatic components of a monochrome image, considering that adopting profiles supporting monochrome image encoding is not very popular.

In the present case, the target depth image is carried in the Y component and the spatial sub-regions integer mask sample values are embedded in U and/or V components. The obtained composite target depth image can then be encoded using a conventional codec profile for coloured video. Additional metadata are needed to interpret the U and/or V sample values (e.g., the source depth sub-range per spatial sub-region, the transformation per spatial sub-region), among other parameters (e.g., number of spatial sub-regions, importance labels, semantic labels, etc.). These metadata can be signalled in a new SEI message as described herein.

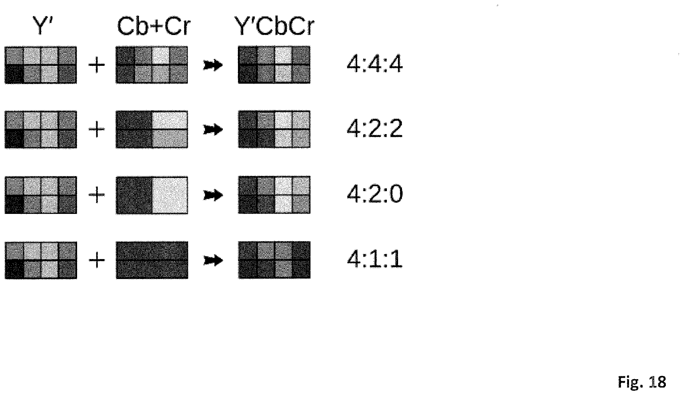

The following embodiments provide different examples for different chroma formats, whose schematic representation is given in Fig. 18. Other embodiments could be crafted following the same logic.

**YUV 4:4:4**

Considering a YUV 4:4:4 chroma format, for each Y sample, there is one U and one V samples, which are co-located (Fig. 18, first row).

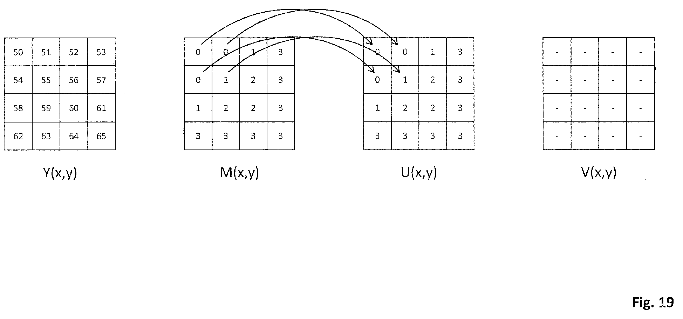

In a primary embodiment, the Y component carries the target depth image sample values, while the U component carries the spatial sub-regions integer mask sample values. The V component may carry constant, non-meaningful values that could potentially assist in bitrate reduction. In Fig. 19, such an embodiment is illustrated. The illustrations hereafter show a spatial sub-regions integer mask M only for interpretation purposes. The spatial sub-regions integer mask M is by default spatially aligned to the target depth image, carried by the Y component. The embodiments of this section do not rely on the creation or storage of a spatial sub-regions integer mask M. In alternative embodiments, the V component may carry the spatial sub-regions integer mask sample values and the U component may carry constant values. In alternative embodiments, the spatial sub-regions integer mask sample values could split into the U and V components. For example, assuming spatial sub-regions integer mask sample values that require N bits, the K most significant bits (i.e., first bits) could be assigned to the U component and the N-K least significant bits (i.e., last bits) could be assigned to the V component (or vice versa).

Metadata may be used to signal which of the U and/or V components carries the spatial sub-regions integer mask sample values, if a component carries no meaningful information, and the sample value used to represent no meaningful information. In alternative embodiments, metadata are also required to signal the type of splitting of spatial sub-regions integer mask sample values in the two components.

**YUV 4:2:2**

Considering a YUV 4:2:2 chroma format, for each pair of successive Y samples in horizontal order, there is one U and one V samples, while for each Y sample in vertical order, there is one U and one V samples (Fig. 18, second row).

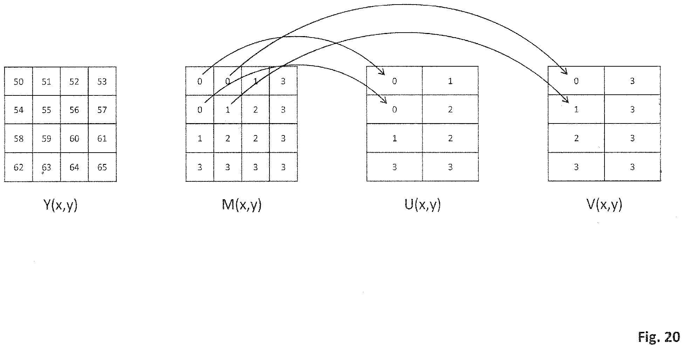

In a primary embodiment, the Y component carries the target depth image sample values, while the U and V components carry the spatial sub-regions integer mask sample values of even and odd columns, respectively. In Fig. 20 , such an embodiment is illustrated. In an alternative embodiment, the U and V components carry the spatial sub-regions integer mask sample values of odd and even columns, respectively. In alternative embodiments, the width of the spatial sub-regions integer mask is split in half, with the U and V components carrying spatial sub-regions integer mask sample values of the left and right part, respectively (or vice versa).

Metadata are required to signal which of the U and V components carry the spatial sub-regions integer mask sample values of even or add columns. In alternative embodiments, metadata are required to signal which of the U and V components carry the spatial sub-regions integer mask sample values of left or right part.

**YUV 4:2:0**

Considering a YUV 4:2:0 chroma format, for each pair of successive Y samples in horizontal order, there is one U and one V samples, while for each pair of successive Y samples in vertical order, there is one U and one V samples (Fig. 18, third row).

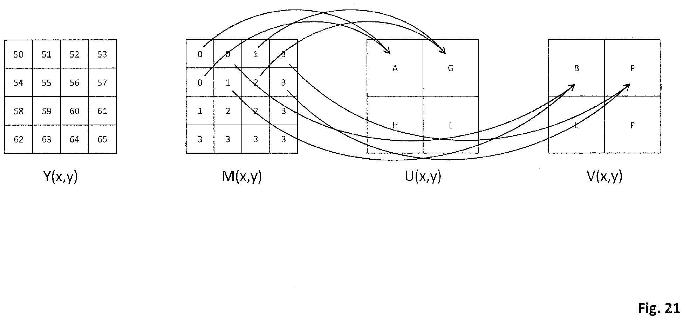

In a primary embodiment, the U and V components carry groups of 2 (vertical) x 1 (horizontal) successive spatial sub-regions integer mask sample values of even and odd columns, respectively. This can be implemented by obtaining all pair combinations of successive spatial sub-regions integer mask sample values, and mapping them to corresponding symbols, which are carried by the U and V components, respectively. For example, if there were 4 values, there would be a maximum of 16 pair combinations, which could be mapped to a maximum of 16 symbols. One solution to perform this mapping is to use lookup tables. A packing lookup table can be used for mapping pair combinations of successive spatial sub-regions integer mask sample values to symbols. An unpacking lookup table can be used for mapping symbols to pair combinations of successive spatial sub-regions integer mask sample values. In Fig. 21, such an embodiment is illustrated. In an alternative embodiment, the U and V components carry groups of 2 (vertical) x 1 (horizontal) successive spatial sub-regions integer mask sample values of odd and even columns, respectively. In alternative embodiments, the width of the spatial sub-regions integer mask is split in half, with the U and V components carrying groups of 2 (vertical) x 1 (horizontal) successive spatial sub-regions integer mask sample values of the left and right part, respectively (or vice versa), i.e., the spatial sub-regions integer mask may be split into 2 equal parts along the vertical axis which may also be applied to other configurations such as YUV 4:2:2.

Metadata are required to signal which of the U and V components carry the groups of 2 (vertical) x 1 (horizontal) successive spatial sub-regions integer mask sample values of even or add columns. In alternative embodiments, metadata are required to signal which of the U and V components carry the groups of 2 (vertical) x 1 (horizontal) successive spatial sub-regions integer mask sample values of left or right part. Metadata are also required to signal the unpacking lookup table to be used at the receiving device.

## All chroma formats

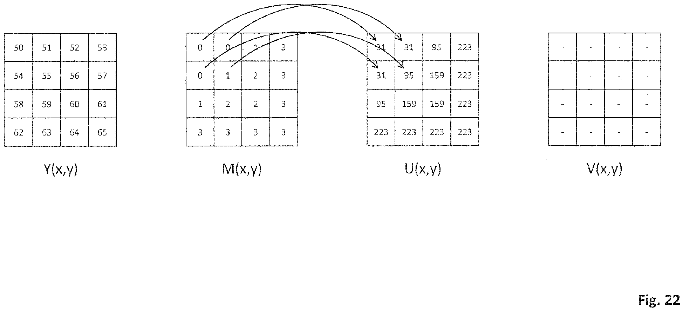

The spatial sub-regions integer mask sample values or corresponding symbols carried by U and/or V components could be mapped to larger destination values that cover the entire colour range (i.e., 0-255 for 8-bit encoding) for improved resistance against encoding artifacts (e.g., in lossy compression, decoding may lead to precision loss; however, given sufficiently distant encoded values and appropriate handling, this loss may not affect the reconstruction). For example, considering the primary embodiment of YUV 4:4:4, if there were 4 spatial sub-regions integer mask sample values, they could be mapped to 4 destination values (e.g., 31 + 0:64:255 using the convention offset + start:step:end) in the U component. One solution to perform this mapping is to use lookup tables. A forward lookup table can be used for mapping spatial sub-regions integer mask values or corresponding symbols to destination values. A backward lookup table can be used for mapping destination values to spatial sub-regions integer mask values or symbols. In Fig. 22, such an embodiment is illustrated. Other mappings could be devised.

Metadata may be used to signal the backward lookup table to be used at the receiving device. In case symbols are mapped to destination values, the unpacking lookup table can be excluded from the metadata.

In other embodiments, different colour spaces than YUV may be used (e.g., RGB) without affecting the rationale of the aforementioned solutions.

## Composite target depth image using colour primaries

One method to specify such a composite target depth image that contains the target depth image in the Y component and the spatial sub-regions integer mask sample values in U and/or V components, is through the Video Usability Information (VUI) parameters, as specified in the VSEI [32] standard, section 7 (Video usability information parameters).

The following embodiment presents in the section "VUI colour primaries" the modifications of the VUI colour primaries defined in the VSEI [32] standard, clause 7.3 (VUI parameters semantics). Moreover, an example of a spatial sub-regions information SEI message is presented in the section "Spatial sub-regions information SEI message" to signal the additional metadata. Other embodiments could be crafted following the same logic.

In the following embodiment, the described spatial sub-regions information SEI message is following Embodiment 1 of section "Carriage of spatial sub-regions integer mask using a SEI message" and assumes a 4:4:4 chroma format. Analogously, the spatial sub-regions information SEI message could be modified accordingly to describe signalling following Embodiment 2 of the same section and/or different chroma formats. Other embodiments could also be crafted.

Composite target depth image using colour primaries: VUI colour primaries

VUI parameters apply to one or more CLVSs.

Use of the VUI parameters requires the definition of the following variables:

- *A chroma format indicator, denoted herein by ChromaFormatIdc, such that the value 0 indicates that the picture has only a luma component and other values indicate that the picture has three colour components that consist of a luma component and two associated chroma components, such that the width and height of each chroma component are the width and height of the luma component divided by SubWidthC and SubHeightC, respectively, where SubWidthC and SubHeightC are determined from ChromaFormatIdc as specified by Reference-Table 2.*

- *A bit depth for the samples of the luma component, denoted herein by* $BitDepth_Y$*, and when ChromaFormatIdc is not equal to 0, a bit depth for the samples of the two associated chroma components, denoted herein by BitDepthc.*

***Reference-Table 2 - SubWidthC and SubHeightC values derived from ChromaFormatIdc***

| *ChromaFormatIdc* | *Chroma format* | *SubWidthC* | *SubHeightC* |
|---|---|---|---|
| *0* | *Monochrome* | *1* | *1* |
| *1* | *4:2:0* | *2* | *2* |
| *2* | *4:2:2* | *2* | *1* |
| *3* | *4:4:4* | *1* | *1* |

***vui_colour_primaries*** *indicates* either, when the image is a texture image *the chromaticity coordinates of the source colour primaries,* or, when the image is not a texture image the type of the image. *Its semantics are as specified for the ColourPrimaries parameter in Rec. ITU-T H.273 / ISO/IEC 23091-2. When the vui_colour_primaries syntax element is not present, the value of vui_colour_primaries is inferred to be equal to 2 (the chromaticity is unknown or unspecified or determined by other means not specified in this document). Values of vui_colour_primaries that are identified as reserved for future use in Rec. ITU-T H.273 / ISO/IEC 23091-2 shall not be present in bitstreams conforming to this edition of this document. Decoders shall interpret reserved values of vui_colour_primaries as equivalent to the value 2.*

Accordingly, the following changes are proposed in Coding-independent code points (CICP) [33] standard, section 8.1 (Colour primaries):

**ColourPrimaries** indicates either, when the image is a texture image, the chromaticity coordinates of the source colour primaries as specified in Reference-Table 3 in terms of the CIE 1931 definition of × and y, which shall be interpreted as specified by ISO/CIE 11664 1, or, when the image is not a texture image the type of the image.

***Reference-Table 3 - Interpretation of colour primaries (ColourPrimaries) value***

| *Value* | *Primaries* | | | *Informative remark* |
|---|---|---|---|---|
| *0* | *Reserved* | | | *For future use by ITU-T/ ISO/IEC* |
| *1* | *primary* | *x* | *y* | *Rec. ITU-R BT.709-6* |
| | *green* | *0.300* | *0,600* | *Rec. ITU-R BT.1361-0 conventional colour gamut system and extended colour gamut system (historical)* |
| | *blue* | *0.150* | *0.060* | *IEC 61966-2-1 sRGB or sYCC* |
| | *red* | *0.640* | *0.330* | *IEC 61966-2-4* |
| | *white D65* | *0.312 7* | *0.329 0* | *SMPTE RP 177 (1993) Annex B* |
| ... | | | | |
| *22* | *primary* | *x* | *y* | *FBU Tech. 3213-E (1975)* |
| | *green* | *0.295* | *0.605* | |
| | *blue* | *0.155* | *0.077* | |
| | *red* | *0.630* | *0.340* | |
| | *white D65* | *0.312 7* | *0.329 0* | |
| 23..127 | Reserved | | | *For future use by ITU- T / ISO/IEC* |
| 128 | Depth and spatial sub-regions information | | | This signal is a composite picture containing depth and spatial sub-regions information |
| 129..255 | *Reserved* | | | *For future use by ITU-T / ISO/IEC* |

Composite target depth image using colour primaries: Spatial sub-regions information SEI message

This SEI message carries information about the number of spatial sub-regions, the source depth sub-range per spatial sub-region, the transformation per spatial sub-region, which of the U and/or V components carries the spatial sub-regions integer mask sample values, and the sample value used to represent no meaningful information in the unused U or V components, with the target depth images carried in the Y component and the spatial sub-regions integer mask sample values carried in the U component of the composite target depth image. The resolutions of the spatial sub-regions integer mask and the source depth image are the same; hence, the Sequence Parameter Set (SPS) signalling is used to retrieve the width and height parameters (i.e., no need to specify them in the spatial_subregions_info SEI message).

Spatial sub-regions information SEI message: Syntax

Table 10- Signalling of the number of spatial sub-regions, the source depth sub-range per spatial sub-region, the transformation per spatial sub-region, which of the U and/or V components carries the spatial sub-regions integer mask sample values, and the sample value used to represent no meaningful information in the unused U or V components in a SEI message.

| spatial_subregions_info( payloadSize ) { | **Descriptor** |
|---|---|

(continued)

| | |
|---|---|
| **ssi_cancel_flag** | u(1) |
| if( ! ssi_cancel_flag) { | |
| **ssi_mask_in_chroma_one** | u(1) |
| if(ssi_mask_in_chroma_one == 0) | |
| **ssi_chroma_one_constant_value** | u(8) |
| **ssi_mask_in_chroma_two** | u(1) |
| if(ssi_mask_in_chroma_two == 0) | |
| **ssi_chroma_two_constant_value** | u(8) |
| for(k=0; k < ssi_num_spatial_subregions; k++) { | |
| **ssi_source_depth_subrange_min**[ k ] | u(16) |
| **ssi_source_depth_subrange_max**[ k ] | u(16) |
| **ssi_transformation_type**[ k ] | u(4) |
| if(ssi_transformation_type[ k ] == 0) | |
| **ssi_offset**[ k ] | u(16) |
| if(ssi_transformation_type[ k ] == 1) | |
| **ssi_bit_shift**[ k ] | U(V) |
| if(ssi_transformation_type[ k ] == 2) { | |
| **ssi_target_depth_subrange_min**[ k ] | u(16) |
| **ssi_target_depth_subrange_max**[ k ] | u(16) |
| } | |
| if(ssi_transformation_type[ k ] == 3) { | |
| **ssi_quantization_step_value**[ k ] | U(V) |
| **ssi_quantizer_type**[ k ] | u(2) |
| } | |
| if(ssi_transformation_type[ k ] == 4) | |
| **ssi_constant_value**[ k ] | u(16) |
| } | |
| } | |
| } | |

Spatial sub-regions information SEI message Semantics

The spatial_subregions_info SEI message provides information that describes the number of spatial sub-regions, the source depth sub-range per spatial sub-region, the transformation per spatial sub-region, which of the U and/or V components carries the spatial sub-regions integer mask sample values, and the sample value used to represent no meaningful information in the unused U or V components. The spatial subregions_info SEI message is defined up to a frame.

**ssi_cancel_flag** equal to 1 indicates that the SEI message cancels the persistence of any previous spatial_subregions_info SEI message. When equal to 0, the information that should be considered follows.

**ssi_mask_in_chroma_one** specifies if the integer mask used to associate the source depth image samples with the spatial sub-regions is carried in the 1st chromatic component (i.e., U for YUV). For 4:4:4 chroma format, when ssi_mask_in_chroma_one is equal to 1, the ssi_mask_in_chroma_two should be equal to 0.

**ssi_mask_in_chroma_one_constant_value** specifies the value used to represent non-meaningful information carried in the 1st chromatic component, when ssi_mask_in_chroma_one is equal to 0.

**ssi_mask_in_chroma_two** specifies if the integer mask used to associate the source depth image samples with the spatial sub-regions is carried in the 2nd chromatic component (i.e., V for YUV). For 4:4:4 chroma format, when ssi_mask_in_chroma_two is equal to 1, the ssi_mask_in_chroma_one should be equal to 0.

**ssi_mask_in chroma_twi_constant_value** specifies the value used to represent non-meaningful information carried in the 2nd chromatic component, when ssi_mask_in chroma two is equal to 0.

**ssi_num_spatial_subregions** specifies the number of the spatial sub-regions.

**ssi_source_depth_subrange_min**[ k ] specifies the minimum value of the source depth sub-range of the k-th spatial sub-region.

**ssi_source_depth_subrange_max**[ k ] specifies the maximum value of the source depth sub-range of the k-th spatial sub-region.

**ssi_transformation_type**[ k ] specifies the transformation applied to the k-th spatial sub-region, as specified in Table 4.

**ssi_offset**[ k ] specifies the offset to shift decoded target depth image sample values of the k-th spatial sub-region to obtain reconstructed source depth image sample values, when ssi_transformation_type[ k ] is equal to 0. When not specified, the ssi_offset[ k ] is set equal to 0.

**ssi_bit_shift**[ k ] specifies the number of bits to left-shift the binary representations of the target depth image sample values to obtain reconstructed source depth image sample values, when ssi_transformation_type[ k ] is equal to 1. When not specified, the ssi_bit_shift[ k ] is set equal to 1.

**ssi_target_depth_subrange_min**[ k ] specifies the minimum value of the target depth sub-range of the k-th spatial sub-region, when ssi_transformation_type[ k ] is equal to 2. When not specified, the ssi_target_depth_subrange_min [ k ] is set equal to the minimum of the target depth image sample values that correspond to the k-th spatial sub-region.

**ssi_target_depth_subrange_max**[ k ] specifies the maximum value of the target depth sub-range of the k-th spatial sub-region, when ssi_transformation_type[ k ] is equal to 2. When not specified, the ssi_target_depth_subrange_max [ k ] is set equal to the maximum of the target depth image sample values that correspond to the k-th spatial sub-region.

**ssi_quantization_step_value**[ k ] specifies the quantization step to inverse quantize decoded target depth image sample values of the k-th spatial sub-region to obtain reconstructed source depth image sample values, when ssi_transformation_type[ k ] is equal to 3. When ssi_transformation_type[ k ] is equal to 3, the ssi_quantization_step_value[ k ] should be specified.

**ssi_quantizer_type**[ k ] specifies the type of quantizer used for quantization, when ssi_transformation_type[ k ] is equal to 3. When equal to 0, the ssi_quantizer_type[ k ] is a mid-treat uniform quantizer. When equal to 1, the ssi_quantizer_type[ k ] is a mid-riser uniform quantizer. When not specified, ssi_quantizer_type[ k ] is set equal to 0. Other values are reserved for future use of other types of quantizers.

**ssi_constant_value**[ k ] specifies the value in which the decoded target depth image samples are mapped to, when ssi_transformation_type[ k ] is equal to 4. When not specified, the ssi_constant_value[ k ] is set equal to 0.

**Signalling in media container (ISOBMFF)**

For the purpose of the invention, the source depth sub-range per spatial sub-region, the transformation per spatial sub-region, and the association information between source depth image samples and spatial sub-regions (i.e., the spatial sub-regions integer mask) may need to be signalled on a higher level, to be obtained before accessing the video bitstream. Therefore, they may be signalled in the file container's metadata.

The proposed signalling is based on ISOBMFF [25] standard, which defines a binary structure for storing media and metadata data. However, similar metadata may be also transmitted in any other file-based (e.g., WebM) or packet-based (e.g., RTP) containers.

To store the source depth sub-range per spatial sub-region, the transformation per spatial sub-region, and the spatial sub-regions integer mask in a file container, it is important to consider whether the information is static or dynamic, that is whether it varies over time. Below, signalling examples for dynamic metadata are provided, which is the most relevant case.

The schematic representations of the ISOBMFF files presented in the following sections contain simplifications of the actual box hierarchy.

***Dynamic metadata using the metadata track***

One method for carrying spatial sub-regions information (i.e., source depth sub-range per spatial sub-region, transformation per spatial sub-region, spatial sub-regions integer masks) is to use a timed metadata track. In this method, the metadata track contains a sequence of data, with each data point being a sample of the metadata track. Metadata tracks can contain only a few samples of the entire duration of the video, or one sample per video frame, or even several samples per video frame.

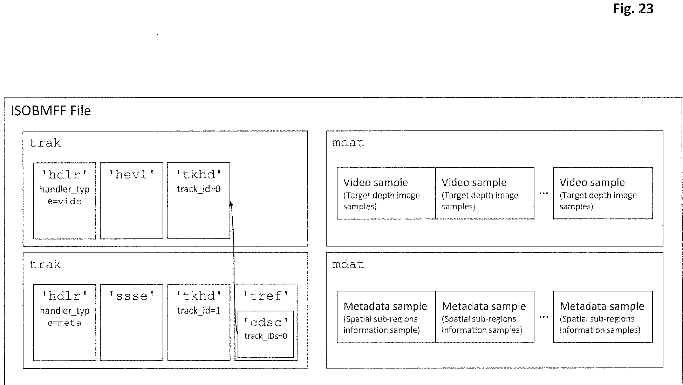

Forthis purpose, a timed metadata track is added to the file. The following example assumes two tracks, namely, a video track with id = 0, and a metadata track with id = 1, as shown in Fig. 23. The former is identified by the 'vide' handler type, while the latter by the 'meta' handler type in the HandlerBox of the MediaBox. In this example, the video track (id = 0) is encoded using the H.265/HEVC [27] codec, with the encoding and the track following the constraints defined by the 'hev1' sample entry, as specified in the ISO/IEC 14496-15 [35] standard. The metadata track (id = 1) contains a track reference box (with character code 'tref' ) including a reference of type 'cdsc' to the video track (id = 0), as defined in ISOBMFF [25], having the following meaning:

- '*cdsc' links a descriptive or metadata track to the content which it describes.*

According to ISOBMFF [25], section 12.3.1 (Media handler):

- *Timed metadata media uses the 'meta' handler type in the HandlerBox of the MediaBox, as defined in 8.4.3.*
- *NOTE 2 metadata tracks are linked to the track they describe using a track-reference of type 'cdsc'.*

Sample entries can be defined in a trak box to specify how to parse track samples carried in the corresponding mdat box. Since no spatial sub-regions information sample entry type exists yet, the sample entry 'ssse' (stands for Spatial Sub-regions information Sample Entry) is defined in the metadata track (id = 1) trak box for the purpose of this method.

The following embodiment provides an example of using the metadata track. Other embodiments could be crafted following the same logic.

The following embodiment considers that video and metadata track samples are contained in two mdat, as shown in Fig. 23. In other embodiments, the samples could be contained in one mdat, and in that case, the samples would be interleaved.

The following embodiment considers that video and metadata tracks are contained in the same file, as shown in Fig. 23. In other embodiments, the two tracks could be contained in two separate files.

In the following embodiment, the described signalling is following Embodiment 1 of section "Carriage of spatial sub-regions integer mask using a SEI message". Analogously, the sample entry and the sample could be modified accordingly to describe signalling following clauses Embodiment 2 of the same section. Other embodiments could also be crafted.

**Embodiment 1**

In this case, the metadata track (id = 1) trak box carries static information, e.g., indicating the transformation per spatial sub-region, while the metadata track (id = 1) mdat box carries dynamic information e.g., the source depth sub-range per spatial sub-region and the spatial sub-regions integer masks. The resolutions of the spatial sub-regions integer mask and the source depth image are the same; hence, the metadata in the video track (id = 0) trak box can be used to retrieve the width and height parameters (i.e., no need to specify them).

**Syntax**

As defined by ISOBMFF [25], the metadata sample entry is:
class MetaDataSampleEntry(codingname) extends SampleEntry (codingname) { }

For this method, this generic type is extended as follows:

```
class SpatialSubregionsSampleEntry() extends MetaDataSampleEntry
('ssse') {
 unsigned int(8) num_spatial_subregions;
 for (k=0; k < num_spatial_subregions; k++) {
    unsigned int(4) transformation_type[k];
    if (transformation_type[k] == 0)
       unsigned int(16) offset[k];
    if (transformation_type[k] == 1)
       unsigned int(16) bit_shift[k];
    if (transformation_type[k] == 2) {
        unsigned int(16) target_depth_subrange_min[k];
        unsigned int(16) target_depth_subrange_max[k];
     }
    if (transformation_type[k] == 3) {
        unsigned int(14) quantization_step_value[k];
        unsigned int(2) quantizer_type[k];
     }
    if (transformation_type[k] == 4) {
        unsigned int(15) constant_value[k];
     }
    unsigned int(4) reserved;
  }
  }
```

And the corresponding sample for such sample entry would be defined as follows:

```
class SpatialSubregionsSample() {
 for (k=0; k < num_spatial_subregions; k++) {
    unsigned int(16) source_depth_subrange_min[k];
    unsigned int(16) source_depth_subrange_max[k];
  }
 for (i=0; i < pps_pic_height_in_luma_samples; i++) {
     for (j=0; j < pps_pic_width_in_luma_samples; j++) {
        unsigned int(16) mask_value[i] [j];
      }
  }
  }
```

An alternative sample for such sample entry could be defined as follows:

```
class SpatialSubregionsSample() {
 for (k=0; k < num_spatial_subregions; k++) {
    unsigned int(16) source_depth_subrange_min[k];
    unsigned int(16) source_depth_subrange_max[k];
  }
  unsigned int(1) single_spatial_subregion_flag;
 if (single_spatial_subregion_flag == 1) {
     unsigned int(16) spatial_subregion_index;
  else {
    for (i=0; i < pps_pic_height_in_luma_samples; i++) {
        for (j=0; j < pps_pic_width_in_luma_samples; j++) {
           unsigned int(16) mask_value[i] [j];
         }
      }
 }
  unsigned int(7) reserved;
  }
```

**Semantics**

single_spatial_subregion_flag specifies if there is only one spatial sub-region in the current frame. When equal to 1, the mask is not signalled .

spatial _subregion_index specifies the index of the only spatial sub-region that is present in the current frame.

The rest of the semantics can be found in section "Semantics" of Embodiment 1 of "Carriage of spatial sub-regions integer mask using a SEI message".

***Dynamic metadata using the auxiliary video track***

Another method for carrying spatial sub-regions information (i.e., source depth sub-range per spatial sub-region, transformation per spatial sub-region, spatial sub-regions integer masks) is to use an auxiliary video track. In this method, the auxiliary video track contains a sequence of data that is encoded as a conventional video.

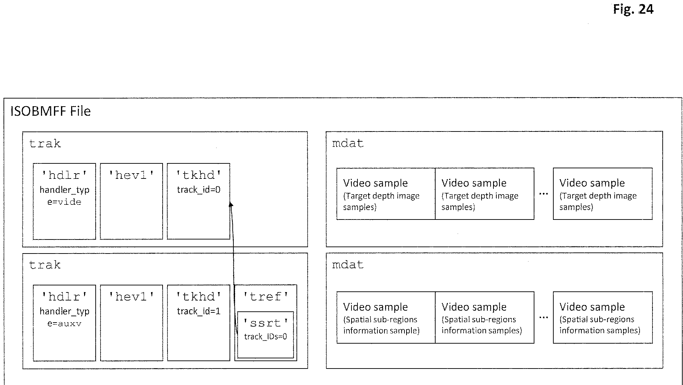

For this purpose, an auxiliary video track is added to the file. The following example assumes two tracks, namely, a video track with id = 0, and an auxiliary video track with id = 1, as shown in Fig. 24. The former is identified by the 'vide' handler type, while the latter by the 'auxv' handler type in the HandlerBox of the MediaBox. In this example, both tracks are encoded using the H.265/HEVC [27] codec, with the encoding and the tracks following the constraints defined by the 'hev1' sample entry, as specified in the ISO/IEC 14496-15 [35] standard. The auxiliary video track (id = 1) contains a track reference box (with character code 'tref' ) including a reference of a new type namely 'ssrt' (stands for Spatial Subregions information Reference Type) to the video track (id = 0), having the following meaning:

- 'ssrt' this track contains spatial sub-regions information for the referenced video track.

According to ISOBMFF [25], section 12.1.1 (Media handler):

- *Video media uses the 'vide' handler type in the HandlerBox of the MediaBox, as defined in 8.4.3.*
- *Auxiliary video media uses the 'auxv' handler type in the* HandlerBox *of the* MediaBox, *as defined in 8.4.3.*
- *An auxiliary video track is coded the same as a video track, but uses this different handler type, and is not intended to be visually displayed (e.g., it contains depth information, or other monochrome or colour two-dimensional information). Auxiliary video tracks are usually linked to a video track by an appropriate track reference.*

The following embodiments provide examples of using the auxiliary video track. Other embodiments could be crafted following the same logic.

**Embodiment 1**

In some cases, the source depth sub-range per spatial sub-region and the transformation per spatial sub-region do not change for the duration of the track. One method for carrying static information is to define a new box to contain this static information.

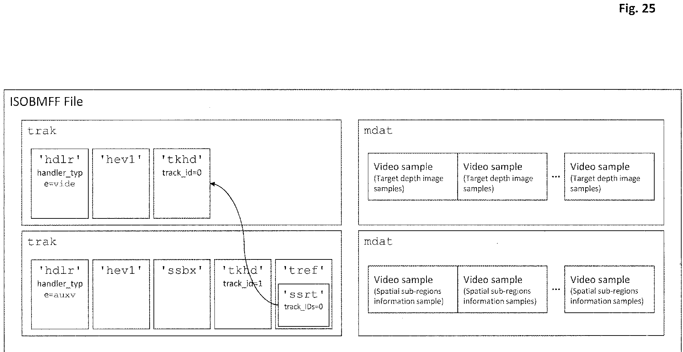

For this purpose, a new box called SpatialSubregionsInformationBox (with character code 'ssbx') can be defined as a child of the auxiliary video track (id = 1) trak box and used to contain general untimed metadata placed at the track level, as illustrated in Fig. 25.

The same effect can be reached by placing the metadata in another auxiliary video track box (e.g., MetaBox) or by combining metadata using entity grouping, or associating the metadata with samples of the track using sample groups.

In this case, the auxiliary video track (id = 1) trak box carries the source depth sub-range per spatial sub-region and the transformation per spatial sub-region, while the auxiliary video track (id = 1) mdat box carries the spatial sub-regions integer masks. The resolutions of the spatial sub-regions integer mask and the source depth image are the same; hence, the metadata in the video track (id = 0) trak box can be used to retrieve the width and height parameters (i.e., no need to specify them).

The following embodiment considers that video and auxiliary video tracks are contained in two mdat, as shown in Fig. 25. In other embodiments, the samples could be contained in one mdat, and in that case, the samples would be interleaved.

The following embodiment considers that video and auxiliary video tracks are contained in the same file, as shown in Fig. 25. In other embodiments, the two tracks could be contained in two separate files.

In the following embodiment, the described signalling is following Embodiment 1 of section "Carriage of spatial sub-regions integer mask using a SEI message". Analogously, the sample entry and the sample could be modified accordingly to describe signalling following Embodiment 2 of the same section. Other embodiments could also be crafted.

**Syntax**

```
aligned(8) class SpatialSubregionsInformationBox extends
FullBox('ssbx', 0, 0) {
 unsigned int(8) num_spatial_subregions;
 for (k-0; k < num_spatial_subregions; k++) {
     unsigned int(16) source_depth_subrange_min[k];
     unsigned int(16) source_depth_subrange_max[k];
     unsigned int(4) transformation_type[k];
     if (transformation_type[k] == 0)
          unsigned int(16) offset[k];
```

```
        if (transformation_type[k] == 1)
            unsigned int(16) bit_shift[k];
        if (transformation_type[k] == 2) {
            unsigned int(16) target_depth_subrange_min[k];
            unsigned int(16) target_depth_subrange_max[k];
         }
        if (transformation_type[k] == 3) {
            unsigned int(14) quantization_step_value[k];
            unsigned int(2) quantizer_type[k];
         }
         if (transformation_type[k] == 4) {
            unsigned int(15) constant_value[k];
         }
    unsigned int(4) reserved;
    }
    }
```

### Semantics

The semantics can be found in section "Semantics" of Embodiment 1 of "Carriage of spatial sub-regions integer mask using a SEI message".

### Embodiment 2

In other cases, the source depth sub-range per spatial sub-region changes per frame, while the transformation per spatial sub-region does not change for the duration of the track. One method for carrying dynamic information is to define a timed metadata track to contain this dynamic information.

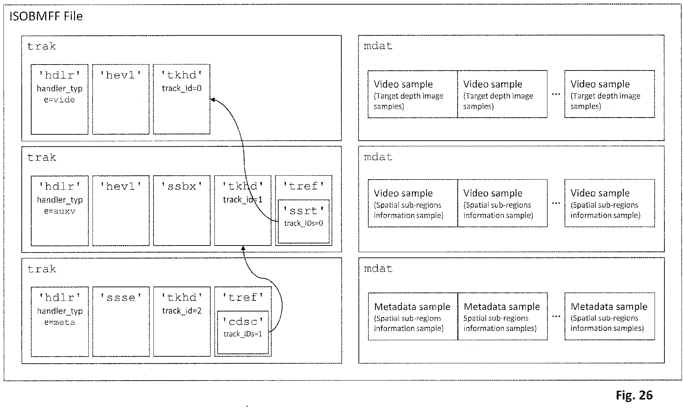

For this purpose, a timed metadata track is added to the file. Following the example presented in Fig. 25, a third track is assumed, namely, a metadata track with id = 2, as shown in Fig. 26, which is identified by the ‘meta’ handler type in the HandlerBox of the MediaBox. The metadata track (id = 2) contains a track reference (with character code ’tref’) to the auxiliary video track (id = 1), which is of type ’cdsc’ , as defined in ISOBMFF [25]. According to ISOBMFF [25], metadata tracks refer to the track they describe using the ’cdsc’ reference type, and the meaning is as follows:

- ’*cdsc’ links a descriptive or metadata track to the content which it describes*

A new sample entry ’ssse’ (stands for Spatial Sub-regions information Sample Entry) is defined in the metadata track (id = 2) trak box to specify how to parse track samples carried in the corresponding mdat box.

In this case, the auxiliary video track (id = 1) mdat box carries the spatial sub-regions integer masks; the metadata track (id = 2) trak box carries the transformation per spatial sub-region, while the metadata track (id = 2) mdat box carries the source depth sub-range per spatial sub-region. The resolutions of the spatial sub-regions integer mask and the source depth image are the same; hence, the metadata in the video track (id = 0) trak box can be used to retrieve the width and height parameters (i.e., no need to specify them).

The following embodiment considers that video, auxiliary video and metadata tracks are contained in three mdat, as shown in Fig. 26. In other embodiments, the samples could be contained in one mdat, and in that case, the samples would be interleaved.

The following embodiment considers that video, auxiliary video and metadata tracks are contained in the same file, as shown in Fig. 26. In other embodiments, the three tracks could be contained in three separate files, or in two separate files containing one and two tracks.

In the following embodiment, the described signalling is following Embodiment 1 of section "Carriage of spatial sub-regions integer mask using a SEI message". Analogously, the sample entry and the sample could be modified accordingly to describe signalling following Embodiment 2 of the same section. Other embodiments could also be crafted.

### Syntax

As defined by ISOBMFF [25], the metadata sample entry is:
class MetaDataSampleEntry(codingname) extends SampleEntry (codingname) { }
For this method, this generic type is extended as follows:

```
class SpatialSubregionsSampleEntry() extends MetaDataSampleEntry
(’ssse’){
 unsigned int(8) num_spatial_subregions;
  for (k=0; k < num_spatial_subregions; k++) {
      unsigned int(4) transformation type[k];
```

```
        if (transformation_type[k] == 0)
            unsigned int(16) offset[k];
        if (transformation_type[k] == 1)
            unsigned int(16) bit_shift[k];
        if (transformation_type[k] == 2) {
            unsigned int(16) target_depth_subrange_min[k];
            unsigned int(16) target_depth_subrange_max [k] ;
        }
        if (transformation_type[k] == 3) {
            unsigned int(14) quantization_step_value[k];
            unsigned int(2) quantizer_type[k];
        }
        if (transformation_type[k] == 4) {
            unsigned int(15) constant_value[k];
        }
      unsigned int(4) reserved;
    }
    }
```

And the corresponding sample for such sample entry would be defined as follows:

```
class SpatialSubregionsSample() {
  for (k=0; k < num_spatial_subregions; k++) {
      unsigned int (16) source_depth_subrange_min[k];
      unsigned int(16) source_depth_subrange_max[k];
    }
    }
```

**Semantics**

The semantics can be found in section "Semantics" of Embodiment 1 of "Carriage of spatial sub-regions integer mask using a SEI message".

**Beneficial effects of the solution**

1. Embodiments enable the usage of lower bit-depth codecs to encode higher bit-depth source depth image representations.
2. Embodiments enable a codec-agnostic depth coding solution.
3. Embodiments enable adjustable quality and bitrate savings in determined spatial sub-regions (e.g., important regions can be represented losslessly, while unimportant regions can be represented with low quality leading to bitrate savings).
4. Embodiments enable complexity reduction for the decoding of the target depth image/video by allowing to selectively discard unimportant spatial sub-regions and to only decode important spatial sub-regions, based on the transformation information, the importance label, or the semantic label per spatial sub-region. This is possible when suitable encoding tools (e.g., use of tiles) that allow partial image decoding are used to encode the target depth image/video.
5. Embodiments enable complexity reduction for the receiving device/application by allowing identification of the source depth range and the source depth sub-range per spatial sub-region of an encoded source depth image/video without the need to decode it, as they can be obtained from the metadata.

**Possible extensions of the solution**

- The same steps could be followed for different types of imaging (e.g., Infra-Red, colour, texture, etc.) with appropriate adjustments, if needed.
    - For RGB images, for instance, embodiments may advantageously use an integer mask with 3 components.
- The proposed solution could work without encoding/decoding the target depth image. Specifically, by excluding the encoding process of step 6 and the decoding process of step 2 in the technical steps of the capturing and receiving device, respectively, provided in clause 5.3.1. In this case, the solution would act as a type of depth image representation, where instead of using higher bit-depth for the binary representation of a source depth image, a lower bit-depth binary representation for the target depth image could be used in combination with the spatial sub-regions information (i.e., source depth sub-range per spatial sub-region, transformation per spatial sub-region, and spatial sub-regions integer mask).

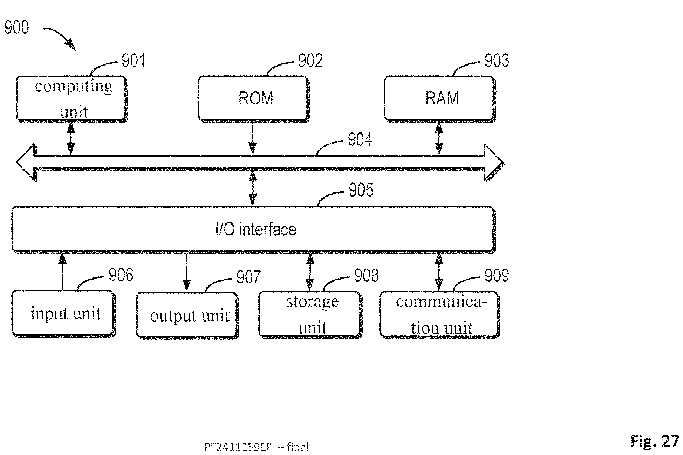

Fig. 27 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes accordingto computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method for transforming a source depth image into a target depth image, the method comprising:

determining at least two spatial sub-regions according to the source depth image, wherein each spatial sub-region comprises a subset of the source depth image samples;

transforming the source depth image samples of the spatial sub-regions into target depth image samples of a target depth image, the target depth image samples comprising target depth image sample values, the target depth image samples comprising values within a target depth image sample bit depth;

transforming the source depth image samples of the spatial sub-regions into target depth image samples of a target depth image, the target depth image samples comprising values within a target depth image sample bit depth.

A 2nd embodiment provides the method according to the 1st embodiment, wherein the source depth image sample bit depth is higher than or equal to the target depth image sample bit depth.

A 3rd embodiment provides the method according to the 1st or 2nd embodiment, wherein the at least two spatial sub-regions are overlapping or non-overlapping.

A 4th embodiment provides the method according to the 3rd embodiment, wherein the least two spatial sub-regions are overlapping and an additional logic is applied to decide in which spatial sub-region a source depth image sample assigned to in a case when its position falls into more than one spatial sub-region.

A 5th embodiment provides the method according to one of the 1st to 4th embodiments, wherein the method further comprises:
associating each of the source depth image samples with one of the spatial sub-regions.

A 6th embodiment provides the method according to the 5th embodiment, wherein an association information between the source depth image samples and spatial sub-regions, e.g., an integer mask, or spatial sub-regions integer mask, is signalled using a spatial sub-regions integer mask, wherein the spatial sub-regions integer mask sample indicates the spatial sub-region of the co-located source depth image sample; or
wherein the association information between the source depth image samples and spatial sub-regions is determined based on one or more of the following:

by using shape masks to indicate at least one spatial sub-region via a characteristic of the sub-region;

by using bounding boxes to indicate as spatial sub-regions the enclosed source depth image samples,

in case the target depth image is represented by a grayscale image, employing unused colour components to carry the corresponding spatial sub-regions information.

A 7$^{th}$ embodiment provides the method according to the 5$^{th}$ or 6$^{th}$ embodiment, wherein a spatial sub-regions integer mask indicating an association of a source depth image sample to a spatial sub-region has a same resolution and 1-1 spatial association with the source depth image; or
wherein a different spatial association is determined.

An 8$^{th}$ embodiment provides the method according to the 7$^{th}$ embodiment, wherein additional metadata is provided to signal the spatial association of the spatial sub-regions integer mask with the source depth image and potentially with the target depth image.

A 9$^{th}$ embodiment provides the method according to one of the 5$^{th}$ to 8$^{th}$ embodiments, wherein no processing is applied to an spatial sub-regions integer mask indicating an association of a source depth image sample to a spatial sub-region; or
wherein image processing operations are applied to the spatial sub-regions integer mask.

A 10$^{th}$ embodiment provides the method according to the 9$^{th}$ embodiment, wherein additional metadata is provided to signal the image processing operations.

An 11$^{th}$ embodiment provides the method according to one of the 5$^{th}$ to 10$^{th}$ embodiments, wherein a spatial sub-regions integer mask is determined per source depth image; or wherein the spatial sub-regions integer mask is determined and used for more than one source depth images.

A 12$^{th}$ embodiment provides the method according to the 11$^{th}$ embodiment, wherein additional metadata is provided to signal a device receiving image data related to the target depth image, to store a spatial sub-regions integer mask for more than one target depth images..

A 13$^{th}$ embodiment provides the method according to one of the 1$^{st}$ to 12$^{th}$ embodiments, wherein the method further comprises:
applying transformation functions in a pre-encoding step or as part of transforming the source depth image samples into the target depth image samples, for adjusting at least one of the at least two spatial sub-regions and/or their quality in the target depth image.

A 14$^{th}$ embodiment provides the method according to one of the 1$^{st}$ to 13$^{th}$ embodiments, wherein the source depth image sample bit depth is 16 bit and/or wherein the target depth image sample bit depth is one of 8 bit, 10 bit and 12 bit.

A 15$^{th}$ embodiment provides the method according to one of the 1$^{st}$ to 14$^{th}$ embodiments, wherein the method further comprises:
associating each of the source depth image samples with exactly one of the spatial sub-regions.

A 16$^{th}$ embodiment provides the method according to one of the 1$^{st}$ to 15$^{th}$ embodiments, wherein transforming the source depth image samples of the spatial sub-regions into the target depth image samples of a target depth image comprises for a first spatial sub-region:

i. determining a first source depth sub-range from corresponding source depth image sample values;
ii. determining a first transformation for this first source depth sub-range; and
iii. applying the first transformation to each source depth image sample value that is associated with the first source depth sub-range to transform the source depth image sample values into target depth image sample values that belong to a first target depth sub-range of a target depth range, and are represented by a target depth image sample bit depth.

A 17$^{th}$ embodiment provides the method according to one of the 1$^{st}$ to 16$^{th}$ embodiments, wherein transforming the source depth image samples of the spatial sub-regions into the target depth image samples of a target depth image comprises for a second spatial sub-region:

i. determining a second source depth sub-range from corresponding source depth image sample values;
ii. determining a second transformation for the second source depth sub-range; and
iii. applying the second transformation to the each source depth image sample value that is associated with the second source depth sub-range to transform the source depth image sample values into target depth image sample values that belong to a second target depth sub-range of the target depth range, and are represented by the target depth image sample bit depth.

A 18$^{th}$ embodiment provides the method according to one of the 1$^{st}$ to 17$^{th}$ embodiments, wherein the method further comprises:
generating metadata comprising (a) a source depth sub-range per spatial sub-region, (b) the transformation used per spatial sub-region, and (c) the association information between source depth image samples and spatial sub-regions.

A 19$^{th}$ embodiment provides the method according to the 18$^{th}$ embodiment, wherein the metadata is generated to further indicate at least one of: a number of spatial sub-regions, an importance label per spatial sub-region, a semantic label per spatial sub-region, and a spatial sub-regions integer mask, the spatial sub-regions integer mask carrying the association information between source depth image samples and spatial sub-regions.

A 20$^{th}$ embodiment provides the method according to the 18$^{th}$ or 19$^{th}$ embodiment, wherein the metadata is included to a video stream, e.g., as a part of a Supplemental Enhancement Information, SEI, message, a part of an auxiliary picture, or a part of chromatic components; or wherein the metadata is included into a file format, e.g., as a part of a metadata track or a part of an auxiliary video track.

A 21$^{st}$ embodiment provides the method according to one of the 18$^{th}$ to 20$^{th}$ embodiments, wherein the metadata related to an association information between source depth image samples and spatial sub-regions is losslessly preserved and carried in metadata-related fields of a file; or a video track and lossy encoding are used to convey the metadata.

A 22$^{nd}$ embodiment provides the method according to the 21$^{st}$ embodiment, wherein additional metadata is provided to signal the type of information carried by the video track.

A 23$^{th}$ embodiment provides the method according to one of the 18$^{th}$ to 22$^{nd}$ embodiments, wherein the method further comprises: generating a Supplemental Enhancement Information, SEI, message to carry in-video bitstream signalling of the metadata.

A 24$^{th}$ embodiment provides the method according to the 23th embodiment, wherein the SEI message is generated to carry information about a source depth sub-range per spatial sub-region, a transformation per spatial sub-region, and a spatial sub-regions integer mask.

A 25$^{th}$ embodiment provides the method according to the 24$^{th}$ embodiment, wherein the method further comprises: using a Sequence Parameter Set (SPS) signalling to retrieve width and height parameters of a spatial sub-regions integer mask.

A 26$^{th}$ embodiment provides the method according to one of the 23$^{rd}$ to 25$^{th}$ embodiments, wherein the SEI message is defined up to a frame of a video; or until a parameter of the SEI message changes.

A 27$^{th}$ embodiment provides the method according to one of the 23$^{rd}$ to 25$^{th}$ embodiments, wherein the SEI message is generated to comprise at least one of:

information specifying the number of the spatial sub-regions;

information specifying a minimum value of a source depth sub-range of the k-th spatial sub-region;

information specifying a maximum value of the source depth sub-range of the k-th spatial sub-region;

information specifying the transformation applied to the k-th spatial sub-region;

information specifying the offset to shift decoded target depth image sample values of the k-th spatial sub-region to obtain reconstructed source depth image sample values;

information specifying the number of bits to left-shift the binary representations of the target depth image sample values of the k-th spatial sub-region to obtain reconstructed source depth image sample values;

information specifying the minimum value of the target depth sub-range of the k-th spatial sub-region;

information specifying the maximum value of the target depth sub-range of the k-th spatial sub-region;

information specifying the quantization step to inverse quantize decoded target depth image sample values of the k-th spatial sub-region to obtain reconstructed source depth image sample values;

information specifying the type of quantizer used for quantization;

information specifying the value in which the decoded target depth image samples are mapped to; and

information specifying the spatial sub-region index of the collocated source depth image sample.

A 28$^{th}$ embodiment provides the method according to one of the 23$^{rd}$ to 27$^{th}$ embodiments, wherein the SEI message is generated to carry information about a number of spatial sub-regions, a source depth sub-range per spatial sub-region, a transformation per spatial sub-region, an importance label per spatial sub-region, a semantic label per spatial sub-region, and a spatial sub-regions integer mask.

A 29$^{th}$ embodiment provides the method according to the 28$^{th}$ embodiment, wherein a resolution of the spatial sub-regions integer mask and the source depth image are different and a width and a height parameters thereof are specified in the SEI message.

A 30$^{th}$ embodiment provides the method according the 28$^{th}$ or 29$^{th}$ embodiment, wherein the SEI message is defined up to a frame of a video; or until a parameter of the SEI message changes.

A 31$^{st}$ embodiment provides the method according to one of the 28$^{th}$ to 30$^{th}$ embodiments, wherein the SEI message is generated to comprise at least one of:

information specifying the number of the spatial sub-regions;

information specifying a minimum value of the source depth sub-range of the k-th spatial sub-region;

information specifying a maximum value of the source depth sub-range of the k-th spatial sub-region;

information specifying a minimum value of the target depth sub-range of the k-th spatial sub-region;

information specifying a maximum value of the target depth sub-range of the k-th spatial sub-region;

information specifying a transformation applied to the k-th spatial sub-region;

information specifying an offset to shift decoded target depth image sample values of the k-th spatial sub-region to obtain reconstructed source depth image sample values;

information specifying a number of bits to left-shift the binary representations of the target depth image sample values of the k-th spatial sub-region to obtain reconstructed source depth image sample values;

information specifying a quantization step to inverse quantize decoded target depth image sample values of the k-th spatial sub-region to obtain reconstructed source depth image sample values;

information specifying a type of quantizer used for quantization;

information specifying a value in which the decoded target depth image samples are mapped to;

information specifying an importance of the k-th spatial sub-region;

information specifying a semantic interpretation of the k-th spatial sub-region;

information specifying a height for the spatial sub-regions integer mask;

information specifying a width for the spatial sub-regions integer mask; and

information specifying the spatial sub-region index of the collocated source depth image sample.

A 32nd embodiment provides the method according to one of the 18th to 31st embodiments, wherein the method further comprises: signalling the metadata using at least one auxiliary picture.

A 33rd embodiment provides the method according to one of the 18th to 31st embodiments, wherein the method further comprises: signalling the metadata using used or unused colour sample values.

A 34th embodiment provides the method according to one of the 18th to 31st embodiments, wherein the method comprises: signalling the metadata by generating and providing a composite picture that contains a target depth image in a Y component and a spatial sub-regions integer mask sample values in U and/or V components.

A 35th embodiment provides the method according to one of the 18th to 31st embodiments, wherein the method comprises: signalling the metadata by generating and providing an SEI message related to a composite picture that contains a target depth image in a Y component and a spatial sub-regions integer mask sample values in U and/or V components.

A 36th embodiment provides the method according to the 35th embodiment, wherein the SEI message is generated to comprise at least one of:

information specifying if the spatial sub-regions integer mask is carried in the 1st chromatic component;

information specifying the value used to represent non-meaningful information carried in the 1st chromatic component;

information specifying if the spatial sub-regions integer mask is carried in the 2nd chromatic component;

information specifying the value used to represent non-meaningful information carried in the 2nd chromatic component;

information specifying the number of the spatial sub-regions;

information specifying the minimum value of the source depth sub-range of the k-th spatial sub-region;

information specifying the maximum value of the source depth sub-range of the k-th spatial sub-region;

information specifying the transformation applied to the k-th spatial sub-region;

information specifying the offset to shift decoded target depth image sample values of the k-th spatial sub-region to obtain reconstructed source depth image sample values;

information specifying the number of bits to left-shift the binary representations of the target depth image sample values to obtain reconstructed source depth image sample values;

information specifying the minimum value of the target depth sub-range of the k-th spatial sub-region;

information specifying the maximum value of the target depth sub-range of the k-th spatial sub-region;

information specifying the quantization step to inverse quantize decoded target depth image sample values of the k-th spatial sub-region to obtain reconstructed source depth image sample values;

information specifying a type of quantizer used for quantization; and

information specifying the value in which the decoded target depth image samples are mapped to.

A 37th embodiment provides the method according to one of the 33rd to 36th embodiments, wherein the metadata indicates which of the colour sample values carry the spatial sub-regions integer mask sample values.

A 38th embodiment provides the method according to the 18th embodiment, wherein the method further comprises: signalling the metadata using a media container of a media codec.

A 39th embodiment provides the method according to the 38th embodiment, wherein the metadata is signalled such that a timed metadata track, e.g., id = 1, trak box carries static information e.g., the transformation per spatial sub-region, and such that a timed metadata track, e.g., id = 1, mdat box carries dynamic information e.g., the source depth sub-range per spatial sub-region and the spatial sub-regions integer masks.

A 40th embodiment provides the method according to the 38th embodiment, wherein the metadata is signalled such that an auxiliary video track carries the spatial sub-regions integer masks that is encoded as a conventional video.

A 41st embodiment provides the method according to the 30th embodiment, wherein the step of using the auxiliary video track comprises a step of adding the auxiliary video track to a file generated based on the target depth image samples of a target depth image.

A 42nd embodiment provides the method according to the 40th or 41st embodiment, wherein in a case where the source depth sub-range per spatial sub-region or the transformation per spatial sub-region do not change for the duration of the track and thereby form static information, the method comprises:
generating a box in the trak box of the auxiliary video track to comprise this static information; placing the metadata in another auxiliary video track box such as MetaBox or by combining metadata using entity grouping, or associating the metadata with samples of the track using sample groups.

A 43rd embodiment provides the method according to the 40th or 41st embodiment, wherein in a case the source depth sub-range per spatial sub-region or the transformation per spatial sub-region changes per frame to thereby form dynamic information, the method comprises:
defining a timed metadata track to contain this dynamic information.

A 44th embodiment provides the method according to one of the 1st to 43th embodiments, wherein the method further comprises:
encoding the target depth image under the target depth image sample bit depth.

A 45th embodiment provides the method according to the 44th embodiment, wherein the entire target depth image is encoded with the same encoding configurations; or wherein different encoding configurations are used for different spatial sub-regions.

A 46th embodiment provides the method according to the 45th embodiment, wherein for using different encoding configurations, different encoding tools are selected and used.

A 47th embodiment provides the method according to one of the 44th to 46th embodiments, wherein a target depth sub-range per spatial sub-region and a target depth range are not always included in the generated metadata, or are always signalled in the metadata.

A 48th embodiment provides the method according to one of the 1st to 47th embodiments, wherein the method further comprises:
encapsulating an encoded target depth image and generated metadata to obtain encapsulated data.

A 49th embodiment provides the method according the 48th embodiment, wherein the metadata is included into a video bitstream, e.g., in a frame granularity.

A 50th embodiment provides the method according to the 49th embodiment, wherein for video bitstream signalling Supplemental Enhancement Information, SEI, messages are used to signal an association between a primary picture being the target depth image and an auxiliary picture being a spatial sub-regions integer mask; wherein further metadata for reconstructing the source depth image is signalled using a second SEI.

A 51st embodiment provides the method according to one of the 48th to 50th embodiments, wherein the method comprises generating image data such as a video stream and signalling one of a source depth sub-range per spatial sub-region, a used transformation per spatial sub-region, and a spatial sub-regions integer mask with a payload of a Supplemental Enhancement Information, SEI, message.

A 52nd embodiment provides the method according to the 48th embodiment, wherein the metadata is provided as dynamic metadata in a file format.

A 53rd embodiment provides the method according to the 52nd embodiment, wherein the dynamic metadata is not changed within a video bitstream.

A 54th embodiment provides the method according to one of the 4th to 53rd embodiments, wherein the encapsulated data is transmitted over a network as a stream or as a file, or is stored in a device that performs the method as a file.

A 55th embodiment provides the method according to one of the 1st to 54th embodiments, wherein the method comprises:

using physical sensors;
using virtual depth cameras; and/or
using artificial intelligence, AI, models, in a real or a simulated environment
for obtaining the source depth image.

A 56th embodiment provides the method according to one of the 1st to 55th embodiments, wherein the source depth image is obtained from different depth representations.

A 57th embodiment provides the method according to the 56th embodiment, wherein the method comprises: converting an original depth representation format to the source depth image.

A 58th embodiment provides the method according to one of the 1st to 57th embodiments, wherein the source depth image contains raw depth sample values at an original precision, e.g., as captured or estimated by a source.

A 59th embodiment provides the method according to one of the 1st to 58th embodiments, wherein the source depth image is obtained

after uniform/non-uniform quantization of raw depth sample values,

after applying a reciprocal function to the raw depth sample values;

after applying a processing/function.

A 60th embodiment provides the method according to one of the 1st to 59th embodiments, wherein obtaining the source depth image is executed without processing applied to the source depth image.

A 61st embodiment provides the method according to one of the 1st to 60th embodiments, wherein obtaining the source depth image comprises further processing applied to the source depth image.

A 62nd embodiment provides the method according to the 61st embodiment, wherein the method further comprises: providing additional metadata indicating properties of the processing.

A 63rd embodiment provides the method according to one of the 1st to 62nd embodiments, wherein determining the at least two spatial sub-regions is executed by using pre-defined spatial sub-regions, or after applying a processing in the source depth image, e.g., image segmentation, depth-based segmentation, object or face or human detection, semantical analysis.

A 64th embodiment provides the method according to one of the 1st to 63rd embodimentswherein determining the at least two spatial sub-regions comprises determining at least three spatial sub-regions.

A 65th embodiment provides the method according to one of the 1st to 64th embodiments, wherein the at least two spatial sub-regions are determined such that a concatenation of the spatial sub-regions covers the entire source depth image.

A 66th embodiment provides the method according to one of the 1st to 65th embodiments, wherein the at least two spatial sub-regions are determined such that a concatenation of the spatial sub-regions only incompletely covers the entire source depth image; wherein

(a) an extra spatial sub-region is implied as the remaining of the source depth image excluding the concatenation of the determined spatial sub-regions and a default/predetermined transformation is executed for the implied extra spatial sub-region, or
(b) the remaining of the source depth image excluding the concatenation of the determined spatial sub-regions is cropped.

A 67th embodiment provides the method according to the 66th embodiment, wherein the remaining of the source depth image excluding the concatenation of the determined spatial sub-regions is cropped; and the transforming of the source depth image samples is executed on the uncropped spatial sub-regions.

A 68th embodiment provides the method according to one of the 1st to 67th embodiments, wherein the method comprises assigning an importance to at least one of the spatial sub-regions.

A 69th embodiment provides the method according to one of the 1st to 68th embodiments, wherein the method comprises assigning an importance label to each of the spatial sub-regions; wherein the method comprises selecting a transform for the transforming based on the importance label.

A 70th embodiment provides the method according to the 69th embodiment, wherein based on different importance labels for different spatial sub-regions, different transforms are executed in different spatial sub-regions; and/or additional metadata is provided to signal the importance label of each spatial sub-region.

A 715t embodiment provides the method according to the 69th or 70th embodiment, wherein the importance label is related to a quality of corresponding target depth image sample values.

A 72nd embodiment provides the method according to one of the 69th to 71st embodiments, wherein the method comprises: providing metadata to signal the importance label of each spatial sub-region.

A 73rd embodiment provides the method according to one of the 1st to 72nd embodiments, wherein the method comprises:

determining a semantic for each spatial sub-region as a result of one of

a semantical analysis, or an object or face or human detection algorithm, and assigning a corresponding semantic label.

A 74th embodiment provides the method according to the 73th embodiment, wherein the method comprises: providing metadata to signal the semantic label of each spatial sub-region.

A 75th embodiment provides the method according to one of the 1st to 74th embodiments, wherein the at least two spatial sub-regions are determined individually per source depth image; or are static or dynamic over time across a depth video.

A 76th embodiment provides the method according to one of the 1st to 75th embodiments, wherein a source depth sub-range is determined per spatial sub-region from a minimum and a maximum source depth image sample value of the corresponding spatial sub-region.

A 77th embodiment provides the method according to one of the 1st to 76th embodiments, wherein for transforming the source depth image samples of the spatial sub-regions into target depth image samples of a target depth image the used transformation per spatial sub-region is signalled using pre-defined tables.

A 78th embodiment provides the method according to the 77th embodiment, wherein the method further includes additional transformation-specific parameters.

A 79th embodiment provides the method according to one of the 1st to 78th embodiments, wherein a first transformation determined in a first spatial sub-region of the at least two spatial sub-regions is different or same than the second transformation determined in a second spatial sub-region of the at least two spatial sub-regions.

An 80th embodiment provides the method according to one of the 1st to 79th embodiments, wherein the transforming of the source depth image samples of the spatial sub-regions into target depth image samples of a target depth image comprises at least one of:

- a linear transformation determined per spatial sub-region;
- a shifting, wherein the source depth image sample values are losslessly shifted from a source depth sub-range of a spatial sub-region to a target depth sub-range of the target depth range;
- a shifting, wherein binary representations of the source depth image sample values are shifted by a specified number of bits from a source depth sub-range of a spatial sub-region to a target depth sub-range of the target depth range;
- a scaling with or without rounding, wherein the source depth image sample values are mapped from a source depth sub-range of a spatial sub-region to a target depth sub-range of the target depth range;
- a quantization, wherein the source depth image sample values are quantized from a source depth sub-range of a spatial sub-region to a target depth sub-range of the target depth range, with the specified quantization step defining the extent of precision loss;
- a blurring, wherein the source depth image sample values are mapped from a source depth sub-range of a spatial sub-region to a target depth sub-range of the target depth range, after applying a specified averaging kernel to decrease the entropy and increase compression efficiency;
- a semantical mapping, wherein the source depth image sample values are mapped from a source depth sub-range of a spatial sub-region to a target depth sub-range of the target depth range, with target depth image sample values representing semantical information;
- a padding, wherein the source depth image sample values are mapped from a source depth sub-range of a spatial sub-region to a target depth sub-range of the target depth range, with target depth image sample values being set to a constant value, or to values of neighboring target depth image samples to enable better compression efficiency;
- a cropping, wherein the source depth image sample values are discarded in the target depth image.

An 81st embodiment provides the method according to one of the 1st to 80th embodiments, where a transform used for the transforming is selected, same or differently for different spatial sub-regions, based on an importance label assigned to a spatial sub-region.

An 82nd embodiment provides the method according to one of the 1st to 81st embodiments, wherein the target depth image comprises the same resolution and 1-1 spatial association with the source depth image, wherein a target depth image sample indicates the transformed value of the co-located source depth image sample; or
wherein a different spatial association is determined.

An 83rd embodiment provides the method according to the 82nd embodiment, wherein additional metadata is provided to signal the spatial association of the target depth image with the source depth image and/or with a spatial sub-regions integer mask.

An 84th embodiment provides the method according to one of the 1st to 83rd embodiments, wherein no processing is applied to the target depth image; or wherein further processing is applied to the target depth image.

An 85th embodiment provides the method according to the 84th embodiment, wherein the additional processing comprises one or more of image processing operations that are used to reduce a bitrate of the target depth image.

An 86th embodiment provides the method according to the 84th or 85th embodiment, wherein additional metadata is provided to signal how the additional processing is conducted.

An 87th embodiment provides the method according to one of the 1st to 86th embodiments, wherein the source depth image, the target depth image, and the spatial sub-regions integer mask have the same resolution, while there is 1-1 spatial association between source depth image and target depth image, as well as between source depth image and spatial sub-regions integer mask; or
wherein the source depth image and the target depth image are misaligned and/or the source depth image and a spatial sub-regions integer mask are misaligned, the method comprising: obtaining spatial alignment between these by use of (a) metadata that describe the spatial association of the target depth image with the source depth image, the spatial association of the spatial sub-regions integer mask with the source depth image, and potential processing steps for the target depth image and the spatial sub-regions integer mask allowing to recover corresponding versions of the target depth image and the spatial sub-regions integer mask that have spatial alignment with the source depth image, and in turn between them; and/or (b) dedicated metadata that describe the spatial association between the target depth image and the spatial sub-regions integer mask.

An 88th embodiment provides the method according to one of the 1st to 87th embodiments, wherein the source depth image is an image of a source depth video; and/or wherein the target depth image is an image of a target depth video.

An 89th embodiment provides the method according to one of the 1st to 88th embodiments, wherein the source depth image is obtained by one of a infra-red imaging, a colour imaging and a texture imaging.

A 90th embodiment provides a non-transitory computer-readable storage medium comprising instructions which, when executed by a computer, cause the computer to carry out the method of any one of the 1st to 89th embodiments.

A 91st embodiment provides a device comprising a processing unit, wherein the device is configured for executing the method of one of the 1st to 89th embodiments.

A 92nd embodiment provides a data container encapsulating depth data of a scene, the data container comprising metadata for signalling information about a spatial sub-region integer mask relating to spatial sub-regions of a source depth image; information specifying a source depth sub-range per spatial sub-region, and information specifying a transformation per spatial sub-region.

A 93rd embodiment provides the data container according to the 92nd embodiment, wherein the data container is a file according to the ISO Base Media File Format, ISOBMFF.

A 94th embodiment provides a data stream having encoded thereinto depth data of a scene, the data stream comprising:
metadata for signalling information about a spatial sub-region integer mask relating to spatial sub-regions of a source depth image; information specifying a source depth sub-range per spatial sub-region, and information specifying a transformation per spatial sub-region.

A 95th embodiment provides a method for decoding a depth image, the method comprising:

obtaining an encapsulated depth image comprising depth image samples having values within a target depth range, and obtaining metadata;

decoding the depth image;

parsing the metadata; and

reconstructing a source depth image from the decoded depth image and the parsed metadata, such that the reconstructed source depth image samples comprise values within a source depth range.

A 96th embodiment provides the method according to the 95th embodiment, wherein the metadata comprises one or more of:

(a) a source depth sub-range per spatial sub-region,
(b) the transformation per spatial sub-region, and
(c) the association information between source depth image samples and spatial sub-regions.

A 97$^{th}$ embodiment provides the method according to the 95$^{th}$ or 96$^{th}$ embodiment, wherein the metadata is included to a video stream, e.g., as a part of a Supplemental Enhancement Information, SEI, message, a part of an auxiliary picture, or a part of chromatic components; or wherein the metadata is included into a file format, e.g., as a part of a metadata track or a part of an auxiliary video track.

A 98$^{th}$ embodiment provides the method according to one of the 95$^{th}$ to 97$^{th}$ embodiments, wherein th method further comprises: receiving a Supplemental Enhancement Information, SEI, message that carries signalling of the metadata.

A 99$^{th}$ embodiment provides the method according to one of the 95$^{th}$ to 98$^{th}$ embodiments, wherein the metadata signals a backward lookup table to be used for decoding; wherein the method comprises to use the backward lookup table.

A 100$^{th}$ embodiment provides a non-transitory computer-readable storage medium comprising instructions which, when executed by a computer, cause the computer to carry out the method of one of the 95$^{th}$ to 99$^{th}$ embodiments.

A 101$^{th}$ embodiment provides a device comprising a processing unit, wherein the device is configured for executing the method of one of the 95$^{th}$ to 99$^{th}$ embodiments.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**List of abbreviations**

| | |
|---|---|
| AI | Artificial Intelligence |
| AV1 | AOMedia Video 1 |
| AV2 | AOMedia Video 2 |
| AVC | ISO/IEC 14496-10 Advanced Video Coding (AVC) / ITU-T Rec. H.264 |
| AU | Access Unit |
| CLVS | Coded Layered Video Sequence |
| CVS | Coded Video Sequence |
| EVC | ISO/IEC 23094-1 Essential video coding (EVC) |
| HEVC | ISO/IEC 23008-2 High Efficiency Video Coding (HEVC) / ITU-T Rec. H.265 |
| HMD | Head-Mounted Display |
| ISOBMFF | ISO/IEC 14496-12 ISO Base Media File Format |
| LiDAR | Light Detection And Ranging |
| NAL | Network Abstraction Layer |
| MPEG | Moving Picture Experts Group |
| MVC | Multiview Video Coding [refers to ISO/IEC 14496-10 when the techniques in Annex H (Multiview Video Coding) are in use] |
| MVC+D | Multiview Video Coding Plus Depth [refers to ISO/IEC 14496-10 when the techniques in Annex I (Multiview and Depth Video Coding) are in use] |
| MV-HEVC | Multiview High Efficiency Video Coding [refers to ISO/IEC 23008-2 when the techniques in Annex G (Multiview High Efficiency Video Coding) are in use] |
| RGB | Red Green Blue (colour space) |
| RGBD | Red Green Blue (RGB) plus depth |
| RGB+D | see RGBD |
| RTP | Real-time Transport Protocol |
| SDI | Scalability Dimension Information |

| | |
|---|---|
| SEI | Supplemental Enhancement Information |
| SPS | Sequence Parameter Set |
| VVC | ISO/IEC 23090-3 Versatile Video Coding (VVC) / ITU-T Rec. H.266 |
| VSEI | Versatile Supplemental Enhancement Information messages for coded video bitstreams / ITU-T Rec H.274 |
| XR | extended Reality |

**List of definitions**

**image representation**

a 2D array of samples, with each sample corresponding to a discrete point in the 3D space, and the sample value representing an intensity value

**depth value**

distance of a given point in 3D space relative to an origin, as measured along a certain direction

**depth data**

a collection of depth values

**depth image**

an image representation of depth data; each sample is associated with a depth value with each sample corresponding to a discrete point in the 3D space, and the sample value representing the depth value of that point.

**RGB image**

an image representation of RGB colour data; each sample is associated with a colour (RGB) value

**RGBD image**

an image representation of spatio-temporally aligned RGBD data; each sample is associated with a colour (RGB) and a depth (D) value


[1] Wikipedia, Perpendicular distance, https://en.wikipedia.org/wiki/Perpendicular_distance (accessed 13/10/2024).
[2] ARCore, https://developers.google.com/ar/develop/java/depth/developer-guide (accessed 13/10/2024).
[3] ARCore, ArFrame_acquireDepthImage16Bits, https://developers.google.com/ar/reference/c/group/ar-frame#arframe_acquiredepthimage16bits, (accessed 13/10/2024).
[4] Intel RealSense D400 Series Product Family Datasheet, https://dev.intelrealsense.com/docs/intel-realsense-d400-series-product-family-datasheet (accessed 13/10/2024).
[5] Use Azure Kinect Sensor SDK to record file format, https://learn.microsoft.com/en-us/azure/kinect-dk/record-file-format (accessed 13/10/2024).
[6] Azure Kinect DK coordinate systems, https://learn.microsoft.com/en-us/azure/kinect-dk/coordinate-systems (accessed 13/10/2024).
[7] Azure Kinect DK hardware specifications, https://learn.microsoft.com/en-us/azure/kinect-dk/hardware-specification (accessed 13/10/2024).
[8] Use Azure Kinect Sensor SDK image transformations, https://learn.microsoft.com/en-us/azure/kinect-dk/use-image-transformation (accessed 13/10/2024).
[9] C. Fehn, "A 3D-TV approach using depth-image-based rendering (DIBR)", In Proc. of VIIP, vol. 3, no. 3, 2003.
[10] Y. Chen and A. Vetro, "Next-Generation 3D Formats with Depth Map Support," in IEEE MultiMedia, vol. 21, no. 2, pp. 90-94, Apr.-June 2014.
[11] Depth image compression by colourization for Intel RealSense Depth Cameras, https://dev.intelrealsense.com/docs/depth-image-compression-by-colorization-for-intel-realsense-depth-cameras (accessed 13/10/2024).
[12] Pece, F., Kautz, J., Weyrich, T.: Adapting standard video codecs for depth streaming. In: Proceedings of EGVE-JVRC 2011, pp. 59-66, Aire-la-Ville, Switzerland. Eurographics Association (2011).
[13] J. Fu, D. Miao, W. Yu, S. Wang, Y. Lu and S. Li, "Kinect-Like Depth Data Compression," in IEEE Transactions on Multimedia, vol. 15, no. 6, pp. 1340-1352, Oct. 2013.
[14] Oh, K.J., Yea, S., Vetro, A. and Ho, Y.S., 2009. Depth reconstruction filter for depth coding. Electronics letters, 45(6), pp.305-306.
[15] R. Krishnamurthy, Bing-Bing Chai, Hai Tao and S. Sethuraman, "Compression and transmission of depth maps for image-based rendering," Proceedings 2001 International Conference on Image Processing (Cat. No.01CH37205), Thessaloniki, Greece, 2001, pp. 828-831 vol.3.
[16] Zanuttigh P, Cortelazzo GM. Compression of depth information for 3D rendering. In2009 3DTV Conference: The True Vision-Capture, Transmission and Display of 3D Video 2009 May 4 (pp. 1-4). IEEE.
[17] Morvan, Y. and Farin, D., 2005, June. Novel coding technique for depth images using quadtree decomposition and plane approximation. In Visual Communications and Image Processing 2005 (Vol. 5960, pp. 1187-1194). SPIE.
[18] Wilson, A.D., 2017, October. Fast lossless depth image compression. In Proceedings of the 2017 ACM International Conference on Interactive Surfaces and Spaces (pp. 100-105).
[19] Jun, H. and Bailenson, J., 2020, March. Temporal rvl: a depth stream compression method. In 2020 IEEE conference on virtual reality and 3D user interfaces abstracts and workshops (VRW) (pp. 664-665). IEEE.
[20] Belyaev, E., Mantel, C. and Forchhammer, S., 2017, August. High bit depth infrared image compression via low bit depth codecs. In Infrared Remote Sensing and Instrumentation XXV (Vol. 10403, pp. 61-68). SPIE.
[21] R. Du, E. Turner, M. Dzitsiuk, L. Prasso, I. Duarte, J. Dourgarian, J. Afonso, J. Pascoal, J. Gladstone, N. Cruces, S. Izadi, A. Kowdle, K. Tsotsos, and D. Kim. 2020. DepthLab: Real-Time 3D Interaction With Depth Maps for Mobile Augmented Reality. Proceedings of the 33rd Annual ACM Symposium on User Interface Software and Technology, pp. 15.
[22] Looking Glass Portrait - Looking Glass Factory, https://lookingglassfactory.com/portrait#usecases (accessed 13/10/2024).
[23] Hologram 101 - Looking Glass Documentation, https://docs.lookingglassfactory.com/keyconcepts/key-concepts (accessed 13/10/2024).
[24] W. Sun, L. Xu, O. C. Au, S. H. Chui, and C. W. Kwok. "An overview of free view-point depth-image-based rendering (DIBR)." In APSIPA Annual Summit and Conference, pp. 1023-1030, 2010.
[25] ISO/IEC 14496-12 "Information technology - Coding of audio-visual objects - Part 12: ISO base media file format", https://www.iso.org/standard/83102.html
[26] ISO/IEC 14496-10 "Information technology - Coding of audio-visual objects - Part 10: Advanced Video Coding (AVC)", https://www.iso.org/standard/83529.html
[27] ISO/IEC 23008-2:2023 "Information technology - High efficiency coding and media delivery in heterogeneous environments - Part 2: High efficiency video coding (HEVC)", https://www.iso.org/standard/85457.html
[28] ISO/IEC 23094-1:2020, "Information technology - General video coding - Part 1: Essential video coding (EVC)", https://www.iso.org/standard/57797.html
[29] ISO/IEC 23090-3:2022 "Information technology - Coded representation of immersive media - Part 3: Versatile video coding (VVC)", https://www.iso.org/standard/83531.html
[30] AV1 Bitstream & Decoding Process Specification, ηttp://aomedia.org/av1/specification/
[31] Wikipedia, Quantization (signal processing), https://en.wikipedia.org/wiki/Quantization_(signal_processing) (accessed 16/10/2024).
[32] ISO/IEC 23002-7:2022 "Information technology - MPEG video technologies - Part 7: Versatile supplemental enhancement information messages for coded video bitstreams", https://www.iso.org/standard/83530.html
[33] ISO/IEC 23091-2 "Information technology - Coding-independent code points - Part 2: Video" https://www.iso.org/standard/81546.html
[34] Wikipedia, Chroma subsampling, https://en.wikipedia.org/wiki/Chroma_subsampling (accessed 13/10/2024)
[35] ISO/IEC 14496-15 "Information technology - Coding of audio-visual objects - Part 15: Carriage of network abstraction layer (NAL) unit structured video in the ISO base media file format" https://www.iso.org/standard/83336.html

## Claims

**1.** A method for transforming a source depth image into a target depth image, the method comprising:

obtaining the source depth image comprising a multitude of source depth image samples each comprising a source depth image sample value being within a source depth image sample bit depth;
determining at least two spatial sub-regions according to the source depth image, wherein each spatial sub-region comprises a subset of the source depth image samples;
transforming the source depth image samples of the spatial sub-regions into target depth image samples of a target depth image, the target depth image samples comprising target depth image sample values, the target depth image samples comprising values within a target depth image sample bit depth.

**2.** The method according to claim 1, further comprising:
associating each of the source depth image samples with one of the spatial sub-regions.

**3.** The method according to claim 1 or 2, further comprising:
generating metadata comprising (a) a source depth sub-range per spatial sub-region, (b) the transformation used per spatial sub-region, and (c) the association information between source depth image samples and spatial sub-regions.

**4.** The method according to claim 3, wherein the metadata is generated to further indicate at least one of: a number of spatial sub-regions, an importance label per spatial sub-region, a semantic label per spatial sub-region, and a spatial sub-regions integer mask, the spatial sub-regions integer mask carrying at least a part of the association information between source depth image samples and spatial sub-regions.

**5.** The method of claim 3 or 4, wherein the metadata is included to a video stream, e.g., as a part of a Supplemental Enhancement Information, SEI, message, a part of an auxiliary picture, or a part of chromatic components; or wherein the metadata is included into a file format, e.g., as a part of a metadata track or a part of an auxiliary video track.

**6.** The method according to one of the previous claims, further comprising:

encoding the target depth image under the target depth image sample bit depth; and/or
encapsulating an encoded target depth image and generated metadata to obtain encapsulated data.

**7.** A non-transitory computer-readable storage medium comprising instructions which, when executed by a computer, cause the computer to carry out the method of any one of the preceding claims.

**8.** A device comprising a processing unit, wherein the device is configured for executing the method of one claims 1 to 6.

**9.** A data container encapsulating depth data of a scene, the data container comprising metadata for signalling information about a spatial sub-region integer mask relating to spatial sub-regions of a source depth image; information specifying a source depth sub-range per spatial sub-region, and information specifying a transformation per spatial sub-region.

**10.** A data stream having encoded thereinto depth data of a scene, the data stream comprising:
metadata for signalling information about a spatial sub-region integer mask relating to spatial sub-regions of a source depth image; information specifying a source depth sub-range per spatial sub-region, and information specifying a transformation per spatial sub-region.

**11.** A method for decoding a depth image, the method comprising:

obtaining an encapsulated depth image comprising depth image samples having values within a target depth range, and obtaining metadata;
decoding the depth image;
parsing the metadata; and
reconstructing a source depth image from the decoded depth image and the parsed metadata, such that the reconstructed source depth image samples comprise values within a source depth range.

**12.** The method according to claim 11, wherein the metadata comprises one or more of:

(a) a source depth sub-range per spatial sub-region,
(b) the transformation per spatial sub-region, and
(c) the association information between source depth image samples and spatial sub-regions.

**13.** The method of claim 11 or 12, wherein the metadata is included to a video stream, e.g., as a part of a Supplemental Enhancement Information, SEI, message, a part of an auxiliary picture, or a part of chromatic components; or wherein the metadata is included into a file format, e.g., as a part of a metadata track or a part of an auxiliary video track.

**14.** A non-transitory computer-readable storage medium comprising instructions which, when executed by a computer, cause the computer to carry out the method of one of claims 11 to 13.

**15.** A device comprising a processing unit, wherein the device is configured for executing the method of one of claims 11 to 13.

1002
1004
Y
A
1006
a
principal axis
C
Z
depth camera center
X
depth image

Fig. 1

1002
1008
Depth image
Color image

Fig. 2

1010
Depth camera
z+
y+
1020
RGB camera
x+
z+
y+

Fig. 3

RGB camera
Depth NFOV
Depth WFOV
Depth WFOV
RGB camera
Depth NFOV

Fig. 4

Color Image
Depth Image
Result k4a_transformation_depth_image_to_color_camera()
Result k4a_transformation_color_image_to_depth_camera()

Fig. 5

255
128
0
$Z_{near}$
$Z_{far}$
a)
b)
c)

Fig. 6

2012
2013
2014
2015
MVC plus depth
(MVC+D)
AVC-compatible extension
plus depth (3D-AVC)
Multiview extension
of HEVC (MV-HEVC)
Advanced multiview and 3D extension
of HEVC (3D-HEVC)

*Figure 1. Various extensions to the Advanced Video Coding (AVC) and High Efficiency Video Coding (HEVC) standard. These extension have been developed or are under development.*

Fig. 7a

Fig. 7b

100
1006
1012
1014
1016
1018
1022
Camera
Local device
Network
Server
Network
Remote device
Encoding
Storage / Transmission
Reception
Storage / Transmission
Reception
Storage / Decoding
1024
1026
1028

Fig. 8

200
1006
1012
1014
1016
1018
1022
Camera
Local device
Network
Server
Network
Remote device
Encoding
Storage / Transmission
Reception
Storage / Transmission
Reception
Storage / Decoding
1032
1024
1028
1034

Fig. 9

1042a
1042c
1042b
1042d
T3
T4
480: {480, 959}
420: {570, 989}
210: {241, 450}
1024: {0, 1023}
256: {0, 255}
256: {0, 255}
210: {0, 209}
256: {0, 255}
T2
T1

Fig. 10

0
250
500
750
1000
1250
1500
1750
2000
0
500
1000
1500
4000
3500
3000
2500
2000
1500
1000
500
0

Fig. 11a

0
250
500
750
1000
1250
1500
1750
2000
0
500
1000
1500
1.0
0.8
0.6
0.4
0.2
0.0

Fig. 11b

0
250
500
750
1000
1250
1500
1750
2000
0
500
1000
1500
1000
800
600
400
200
0

Fig. 11c

1044
0
250
500
750
1000
1250
1500
1750
2000
0
500
1000
1500
4000
3500
3000
2500
2000
1500
1000
500
0

Fig. 12a

1200
1000
800
600
400
200
0
Counts
1500
2000
2500
3000
3500
4000
Depth values

Fig. 12b

0
250
500
750
1000
1250
1500
1750
2000
0
500
1000
1500
4000
3500
3000
2500
2000
1500
1000
500
0

Fig. 13a

0
250
500
750
1000
1250
1500
1750
2000
0
500
1000
1500
4000
3500
3000
2500
2000
1500
1000
500
0

Fig. 13b

0
250
500
750
1000
1250
1500
1750
2000
0
500
1000
1500
2.00
1.75
1.50
1.25
1.00
0.75
0.50
0.25
0.00

Fig. 13c

1400
obtaining the source depth image comprising a multitude of source depth image samples each comprising a source depth image sample value being within a source depth image sample bit depth
1410
determining at least two spatial sub-regions of the source depth image such that each spatial sub-region comprises a subset of the source depth image samples
1420
transforming the source depth image samples of the spatial sub-regions into target image samples of a target depth image, the target image samples comprising values within a target depth image sample bit depth
1430

Fig. 14

1056a
1056b
1052
Source depth image
1058a
1058b
1054
Target depth image

Source depth range: [0, 1408] -> 11 bits

Source depth sub-range of green spatial sub-region: [0, 64] -> 6 bits

Source depth sub-range of red spatial sub-region: [0, 1408] -> 11 bits

Source depth image sample bit depth: 16 bits

Target depth range: [0, 11] -> 4 bits

Target depth sub-range of green spatial sub-region: [0, 3] -> 2 bits

Target depth sub-range of red spatial sub-region: [0, 11] -> 4 bits

Target depth image sample bit depth: 8 bits

**Fig. 15**

1056b

Fig. 16a

1062a
1056b
1062c
1062d
1062b

Fig. 16b

1056b
1064c
1064a
1064d
1064c

Fig. 16c

1062a
1062c
1072a
1062d
1062b

Fig. 17a

1062a
1062c
1062d
1072b
1062b

Fig. 17b

Y'
Cb+Cr
Y'CbCr
4:4:4
4:2:2
4:2:0
4:1:1

Fig. 18

| | | | |
|---|---|---|---|
| 50 | 51 | 52 | 53 |
| 54 | 55 | 56 | 57 |
| 58 | 59 | 60 | 61 |
| 62 | 63 | 64 | 65 |

Y(x,y)

| | | | |
|---|---|---|---|
| 0 | 0 | 1 | 3 |
| 0 | 1 | 2 | 3 |
| 1 | 2 | 2 | 3 |
| 3 | 3 | 3 | 3 |

M(x,y)

| | | | |
|---|---|---|---|
| 0 | 0 | 1 | 3 |
| 0 | 1 | 2 | 3 |
| 1 | 2 | 2 | 3 |
| 3 | 3 | 3 | 3 |

U(x,y)

| | | | |
|---|---|---|---|
| - | - | - | - |
| - | - | - | - |
| - | - | - | - |
| - | - | - | - |

V(x,y)

Fig. 19

50
51
52
53
54
55
56
57
58
59
60
61
62
63
64
65
Y(x,y)
0
0
1
3
0
1
2
3
1
2
2
3
3
3
3
3
M(x,y)
0
1
0
2
1
2
3
3
U(x,y)
0
3
1
3
2
3
3
3
V(x,y)

Fig. 20

50
51
52
53
54
55
56
57
58
59
60
61
62
63
64
65
0
0
1
3
0
1
2
3
1
2
2
3
3
3
3
3
A
G
H
L
B
P
L
P
Y(x,y)
M(x,y)
U(x,y)
V(x,y)

Fig. 21

50
51
52
53
54
55
56
57
58
59
60
61
62
63
64
65
Y(x,y)
0
0
1
3
0
1
2
3
1
2
2
3
3
3
3
3
M(x,y)
31
31
95
223
31
95
159
223
95
159
159
223
223
223
223
223
U(x,y)
V(x,y)

Fig. 22

Fig. 23

ISOBMFF File
trak
'hdlr'
handler_type=vide
'hevl'
'tkhd'
track_id=0
trak
'hdlr'
handler_type=meta
'ssse'
'tkhd'
track_id=1
'tref'
'cdsc'
track_IDs=0
mdat
Video sample
(Target depth image samples)
Video sample
(Target depth image samples)
...
Video sample
(Target depth image samples)
mdat
Metadata sample
(Spatial sub-regions information sample)
Metadata sample
(Spatial sub-regions information samples)
...
Metadata sample
(Spatial sub-regions information samples)

Fig. 24

ISOBMFF File
trak
'hdlr'
handler_type=vide
'hev1'
'tkhd'
track_id=0
trak
'hdlr'
handler_type=auxv
'hev1'
'tkhd'
track_id=1
'tref'
'ssrt'
track_IDs=0
mdat
Video sample
(Target depth image samples)
Video sample
(Target depth image samples)
...
Video sample
(Target depth image samples)
mdat
Video sample
(Spatial sub-regions information sample)
Video sample
(Spatial sub-regions information samples)
...
Video sample
(Spatial sub-regions information samples)

Fig. 25

ISOBMFF File
trak
'hdlr'
handler_type=vide
'hev1'
'tkhd'
track_id=0
trak
'hdlr'
handler_type=auxv
'hev1'
'ssbx'
'tkhd'
track_id=1
'tref'
'ssrt'
track_IDs=0
mdat
Video sample
(Target depth image samples)
Video sample
(Target depth image samples)
...
Video sample
(Target depth image samples)
mdat
Video sample
(Spatial sub-regions information sample)
Video sample
(Spatial sub-regions information samples)
...
Video sample
(Spatial sub-regions information samples)

ISOBMFF File
trak
'hdlr'
handler_type=vide
'hevl'
'tkhd'
track_id=0
trak
'hdlr'
handler_type=auxv
'hevl'
'ssbx'
'tkhd'
track_id=1
'tref'
'ssrt'
track_IDs=0
trak
'hdlr'
handler_type=meta
'ssse'
'tkhd'
track_id=2
'tref'
'cdsc'
track_IDs=1
mdat
Video sample (Target depth image samples)
Video sample (Target depth image samples)
...
Video sample (Target depth image samples)
mdat
Video sample (Spatial sub-regions information sample)
Video sample (Spatial sub-regions information sample)
...
Video sample (Spatial sub-regions information sample)
mdat
Metadata sample (Spatial sub-regions information sample)
Metadata sample Spatial sub-regions information samples)
...
Metadata sample (Spatial sub-regions information samples)

Fig. 26

900
901
computing unit
902
ROM
903
RAM
904
905
I/O interface
906
input unit
907
output unit
908
storage unit
909
communication unit

PF2411259EP – final

Fig. 27

# EUROPEAN SEARCH REPORT

Application Number
EP 24 31 5552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | WO 2025/016546 A1 (ERICSSON TELEFON AB L M [SE]) 23 January 2025 (2025-01-23)<br>* page 22, line 17 - page 23, line 28 *<br>----- | 1,2,6-8, 11-15 | INV.<br>H04N19/597<br>H04N19/70<br>H04N19/85<br>H04N19/98 |
| X | SUNG-GYUN LIM ET AL: "Patch-wise Depth Linear Scaling",<br>141. MPEG MEETING; 20230116 - 20230120; ONLINE; (MOTION PICTURE EXPERT GROUP OR ISO/IEC JTC1/SC29/WG11),<br>,<br>no. m61631<br>5 January 2023 (2023-01-05), XP030307404,<br>Retrieved from the Internet:<br>URL:https://dms.mpeg.expert/doc_end_user/documents/141_OnLine/wg11/m61631-v1-m61631.zip m61631.docx<br>[retrieved on 2023-01-05]<br>* sections 1, 2, 4; figure 1 *<br>----- | 1-15 | |
| X | JILL BOYCE (INTEL) ET AL: "Depth coding for immersive video",<br>127. MPEG MEETING; 20190708 - 20190712; GOTHENBURG; (MOTION PICTURE EXPERT GROUP OR ISO/IEC JTC1/SC29/WG11),<br>,<br>no. m49342<br>4 July 2019 (2019-07-04), XP030207603,<br>Retrieved from the Internet:<br>URL:http://phenix.int-evry.fr/mpeg/doc_end_user/documents/127_Gothenburg/wg11/m49342-v1-M39342depthcodingforMIV.zip M49342 depth coding for MIV.docx<br>[retrieved on 2019-07-04]<br>* sections 2-4 *<br>----- | 1-15 | TECHNICAL FIELDS SEARCHED (IPC)<br>H04N |
| A | US 2019/228253 A1 (RAMASWAMY KUMAR [US] ET AL) 25 July 2019 (2019-07-25)<br>* paragraphs [0072] - [0078]; figure 4 *<br>-----<br>-/-- | 1-15 | |

The present search report has been drawn up for all claims

2

| Place of search | Date of completion of the search | Examiner |
|---|---|---|
| Munich | 22 April 2025 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

# EUROPEAN SEARCH REPORT

Application Number
EP 24 31 5552

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2018/316903 A1 (KATSUMATA MITSURU [JP] ET AL) 1 November 2018 (2018-11-01)<br>* paragraphs [0137] - [0153], [0292] - [0298] *<br>----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 22 April 2025 | Montoneri, Fabio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT ON EUROPEAN PATENT APPLICATION NO.

EP 24 31 5552

This annex lists the patent family members relating to the patent documents cited in the above-mentioned European search report. The members are as contained in the European Patent Office EDP file on
The European Patent Office is in no way liable for these particulars which are merely given for the purpose of information.

22-04-2025

| Patent document cited in search report | Publication date | Patent family member(s) | Publication date |
|---|---|---|---|
| WO 2025016546 A1 | 23-01-2025 | NONE | |
| US 2019228253 A1 | 25-07-2019 | EP 3456058 A1 | 20-03-2019 |
| | | EP 4492799 A1 | 15-01-2025 |
| | | US 2019228253 A1 | 25-07-2019 |
| | | WO 2017196670 A1 | 16-11-2017 |
| US 2018316903 A1 | 01-11-2018 | CN 108476346 A | 31-08-2018 |
| | | CN 113014930 A | 22-06-2021 |
| | | EP 3404927 A1 | 21-11-2018 |
| | | EP 3742747 A1 | 25-11-2020 |
| | | JP 6992511 B2 | 13-01-2022 |
| | | JP 7238948 B2 | 14-03-2023 |
| | | JP 2022019932 A | 27-01-2022 |
| | | JP WO2017122543 A1 | 01-11-2018 |
| | | US 2018316903 A1 | 01-11-2018 |
| | | WO 2017122543 A1 | 20-07-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description


- **C. FEHN**. A 3D-TV approach using depth-image-based rendering (DIBR). *Proc. of VIIP*, 2003, vol. 3 (3)
- **Y. CHEN** ; **A. VETRO**. Next-Generation 3D Formats with Depth Map Support. *IEEE MultiMedia*, April 2014, vol. 21 (2), 90-94
- **PECE, F.** ; **KAUTZ, J.** ; **WEYRICH, T.** Adapting standard video codecs for depth streaming. *Proceedings of EGVE-JVRC*, 2011, 59-66
- **J. FU** ; **D. MIAO** ; **W. YU** ; **S. WANG** ; **Y. LU** ; **S. LI**. Kinect-Like Depth Data Compression. *IEEE Transactions on Multimedia*, October 2013, vol. 15 (6), 1340-1352
- **OH, K.J.** ; **YEA, S.** ; **VETRO, A.** ; **HO, Y.S.** Depth reconstruction filter for depth coding.. *Electronics letters*, 2009, vol. 45 (6), 305-306
- **R. KRISHNAMURTHY** ; **BING-BING CHAI** ; **HAI TAO** ; **S. SETHURAMAN**. Compression and transmission of depth maps for image-based rendering. *Proceedings 2001 International Conference on Image Processing (Cat. No.01CH37205)*, vol. 3, 828-831
- **ZANUTTIGH P** ; **CORTELAZZO GM**. Compression of depth information for 3D rendering.. *In2009 3DTV Conference: The True Vision-Capture, Transmission and Display of 3D Video*, 04 May 2009, 1-4
- **MORVAN, Y.** ; **FARIN, D.** Novel coding technique for depth images using quadtree decomposition and plane approximation.. *Visual Communications and Image Processing*, May 2005, vol. 5960, 1187-1194
- **WILSON, A.D.** Fast lossless depth image compression. *Proceedings of the 2017 ACM International Conference on Interactive Surfaces and Spaces*, October 2017, 100-105
- **JUN, H.** ; **BAILENSON, J.** Temporal rvl: a depth stream compression method.. *2020 IEEE conference on virtual reality and 3D user interfaces abstracts and workshops (VRW)*, March 2020, 664-665
- **BELYAEV, E.** ; **MANTEL, C.** ; **FORCHHAMMER, S.** High bit depth infrared image compression via low bit depth codecs. *Infrared Remote Sensing and Instrumentation XXV*, August 2017, vol. 10403, 61-68
- **R. DU** ; **E. TURNER** ; **M. DZITSIUK** ; **L. PRASSO** ; **I. DUARTE** ; **J. DOURGARIAN** ; **J. AFONSO** ; **J. PASCOAL** ; **J. GLADSTONE** ; **N. CRUCES**. DepthLab: Real-Time 3D Interaction With Depth Maps for Mobile Augmented Reality.. *Proceedings of the 33rd Annual ACM Symposium on User Interface Software and Technology*, 2020, 15
- *Looking Glass Portrait - Looking Glass Factory*, 13 October 2024, https://lookingglassfactory.com/portrait#usecases
- *Hologram 101 - Looking Glass Documentation*, 13 October 2024, https://docs.lookingglassfactory.com/keyconcepts/key-concepts
- **W. SUN** ; **L. XU** ; **O. C. AU** ; **S. H. CHUI** ; **C. W. KWOK**. An overview of free view-point depth-image-based rendering (DIBR). *APSIPA Annual Summit and Conference*, 2010, 1023-1030
- Quantization (signal processing). *Wikipedia*, 16 October 2024, https://en.wikipedia.org/wiki/Quantization_(signal_processing)
- Chroma subsampling. *Wikipedia*, 13 October 2024, https://en.wikipedia.org/wiki/Chroma_subsampling